# EUROPEAN PATENT APPLICATION

(11) **EP 4 838 972 A1**
(43) Date of publication of application: **11.11.2026**
(21) Application number: 24914661.4
(22) Date of filing: 05.01.2024
(51) Int. Cl.: H04W 68/00

(54) **PAGING METHODS, PAGING APPARATUSES, COMMUNICATION DEVICE, CHIP, STORAGE MEDIUM AND PRODUCT**

(71) Applicant: GUANGDONG OPPO MOBILE TELECOMMUNICATIONS CORP., LTD., Dongguan, Guangdong 523860 (CN)
(72) Inventor: LIU, Zhe, Dongguan, Guangdong 523860 (CN); SHI, Zhihua, Dongguan, Guangdong 523860 (CN)
(74) Representative: Penza, Giancarlo
(86) International application number: PCT/CN2024/070873
(87) International publication number: WO 2025/145432

(57) **Abstract**

Provided in the embodiments of the present application are paging methods, paging apparatuses, a communication device, a chip, a storage medium and a product. A method comprises: when a first device reflects or refracts a signal transmitted between a network device and a terminal device, the terminal device receives paging configuration information sent by the network device, the paging configuration information being used for indicating a first spatial information set or a second spatial information set; and, on the basis of the paging configuration information, the terminal device determines a paging resource of a paging occasion (PO), the paging resource being a paging resource corresponding to the first spatial information set, the second spatial information set, or a third spatial information set, the first spatial information set being all or part of the union of the second spatial information set and the third spatial information set, the third spatial information set being a spatial information set broadcasted by the network device, and the second spatial information set being a spatial information set of the first device.

## Description

### TECHNICAL FIELD

Embodiments of the present application relate to the technical field of mobile communication, in particular to a paging method, a paging device, a communication device, a chip, a storage medium and a product.

### BACKGROUND

Smart surface devices, such as Large Intelligent Surfaces (LIS) or Reconfigurable Intelligent Surfaces (RIS), are emerging artificial materials devices. In the related art, a coverage of a wireless signal can be enlarged by forwarding a wireless signal through the RIS, thereby improving the performance of wireless communication systems.

### SUMMARY

The present application provides a paging method, a paging device, a communication device, a chip, a storage medium and a product, which can improve the communication quality between a network device and a terminal device and reduce the probability of paging false alarm.

In a first aspect, there is provided a paging method including the following operations:
In a case where a first device reflects or refracts a signal transmitted between a network device and a terminal device, the terminal device receives paging configuration information transmitted by the network device, herein the paging configuration information indicates a first spatial information set or a second spatial information set.

The terminal device determines a paging resource based on the paging configuration information, herein the paging resource is a paging resource corresponding to the first spatial information set, the second spatial information set, or a third spatial information set.

Herein the first spatial information set is all or part of a union of the second spatial information set and the third spatial information set. The third spatial information set is a spatial information set broadcasted by the network device. The second spatial information set is a spatial information set of the first device.

In a second aspect, there is provided a paging method including the following operations:
In a case where a first device reflects or refracts a signal transmitted between a network device and a terminal device, the network device transmits paging configuration information to the terminal device so that the terminal device determines a paging resource based on the paging configuration information, herein the paging configuration information indicates a first spatial information set or a second spatial information set, and the paging resource is a paging resource corresponding to the first spatial information set, the second spatial information set, or a third spatial information set.

The first spatial information set is all or part of a union of the second spatial information set and the third spatial information set. The third spatial information set is a spatial information set broadcasted by the network device. The second spatial information set is a spatial information set of the first device.

In a third aspect, there is provided a paging method including the following operations:
In a case where a first device reflects or refracts a signal transmitted between a network device and a terminal device, the first device transmits a second spatial information set to the terminal device, herein the second spatial information set is used for the terminal device to determine a paging resource in conjunction with received paging configuration information transmitted by the network device.

Herein the paging configuration information indicates a first spatial information set or the second spatial information set, and the paging resource is a paging resource corresponding to the first spatial information set, the second spatial information set or the third spatial information set;
Herein the first spatial information set is all or part of a union of the second spatial information set and the third spatial information set. The third spatial information set is a spatial information set broadcasted by the network device. The second spatial information set is a spatial information set of the first device.

In a fourth aspect, there is provided a paging apparatus applied to a terminal device. The paging apparatus includes a first receiving unit and a first determination unit.

The first receiving unit is configured to: in a case where the first device reflects or refracts a signal transmitted between a network device and the terminal device, receive paging configuration information transmitted by a network device. Herein the paging configuration information indicates a first spatial information set or a second spatial information set.

The first determination unit is configured to determine a paging resource based on the paging configuration information, herein the paging resource is a paging resource corresponding to the first spatial information set, the second spatial information set, or a third spatial information set.

Herein the first spatial information set is all or part of a union of the second spatial information set and the third spatial information set. The third spatial information set is a spatial information set broadcasted by the network device. The second spatial information set is a spatial information set of the first device.

In a fifth aspect, there is provided a paging apparatus applied to a network device, the paging apparatus includes a first transmission unit.

The first transmission unit is configured to: a case where a first device reflects or refracts a signal transmitted between the network device and a terminal device, transmit paging configuration information, so that the terminal device determines a paging resource based on the paging configuration information. Herein the paging configuration information indicates a first spatial information set or a second spatial information set, and the paging resource is a paging resource corresponding to the first spatial information set, the second spatial information set or the third spatial information set.

Herein the first spatial information set is all or part of a union of the second spatial information set and the third spatial information set. The third spatial information set is a spatial information set broadcasted by the network device; The second spatial information set is a spatial information set of the first device.

In a sixth aspect, there is provided a paging apparatus applied to a first apparatus, the paging apparatus includes a second transmission unit.

The second transmission unit is configured to: in a case where the first device reflects or refracts a signal transmitted between a network device and a terminal device, transmit a second spatial information set, herein the second spatial information set is used for the terminal device to determine a paging resource in combination with received paging configuration information transmitted by the network device.

Herein the paging configuration information indicates a first spatial information set or the second spatial information set, and the paging resource is a paging resource corresponding to the first spatial information set, the second spatial information set or a third spatial information set.

Herein the first spatial information set is all or part of a union of the second spatial information set and the third spatial information set. The third spatial information set is a spatial information set broadcasted by the network device. The second spatial information set is a spatial information set of the first device.

In a seventh aspect, there is provided a communication device, the network device includes a processor and a memory. The memory is configured to store a computer program, and the processor is configured to call and execute the computer program stored in the memory to execute the paging method according to any one of the first to third aspects.

In an eighth aspect, there is provided a chip including an input interface, an output interface, a processor, and a memory. The processor is configured to execute code in the memory, and when the code is executed, the processor can implement the paging method according to any one of the first to third aspects.

In a ninth aspect, there is provided a computer-readable storage medium for storing program code executed by a device, the program code including instructions for executing the paging method according to any one of the first to third aspects.

In a tenth aspect, there is provided a computer program product including computer program instructions, which when executed by a processor, implement the paging method according to any one of the first to third aspects.

In the paging method provided by the present application, in a case where the first device reflects or refracts a signal transmitted between a network device and a terminal device, the terminal device may receive paging configuration information transmitted by the network device. The paging configuration information indicates a first spatial information set or a second spatial information set. The terminal device determines a paging resource based on the paging configuration information. The paging resource is a paging resource corresponding to the first spatial information set, the second spatial information set, or a third spatial information set. The first spatial information set is all or part of a union of the second spatial information set and the third spatial information set. The third spatial information set is a spatial information set broadcasted by the network device. The second spatial information set is a spatial information set of the first device. That is, when communication is performed between a network device and a terminal device through a first device, the terminal device may determine a paging resource corresponding to spatial information set indicated by the paging configuration information transmitted by the network device to the terminal device based on the indicated spatial information set, to perform paging monitoring. Thus, after the intelligent surface device is introduced, the terminal device may determine that the network device and the terminal device establish a communication link through the intelligent surface device based on the paging configuration information indicating the first spatial information set or the second spatial information set transmitted by the network device, and further, the terminal device can monitor the paging on an appropriate occasion by using the communication link, thereby ensuring the accuracy of the paging, reducing the probability of paging false alarm, and reducing the energy consumption of the terminal device while improving the communication transmission quality.

### BRIEF DESCRIPTION OF THE DRAWINGS

The accompanying drawings described herein are used to provide a further understanding of the present application and constitute a part of the present application. Schematic embodiments of the present application and the description thereof are used to explain the present application and do not constitute an improper limitation of the present application, in which:
FIG. 1 is a schematic diagram of a communication architecture according to an embodiment of the present application;
FIG. 2 is a schematic diagram of an SSB timing structure provided by an embodiment of the present application;
FIG. 3 is a schematic diagram of a paging resource provided in the related art;
FIG. 4 is a schematic diagram of an application scenario provided by an embodiment of the present application;
FIG. 5 is a first schematic flowchart of a paging method provided by an embodiment of the present application.
FIG. 6 is a first schematic diagram of a paging resource provided by an embodiment of the present application.
FIG. 7 is a second schematic diagram of a paging resource provided by an embodiment of the present application;
FIG. 8 is a third schematic diagram of a paging resource provided by an embodiment of the present application;
FIG. 9 is a fourth schematic diagram of a paging resource provided by an embodiment of the present application;
FIG. 10 is a second schematic flowchart of a paging method provided by an embodiment of the present application;
FIG. 11 is a third schematic flowchart of a paging method provided by an embodiment of the present application;
FIG. 12 is a fourth flowchart of a paging method provided by an embodiment of the present application;
FIG. 13 is a fifth schematic flowchart of a paging method provided by an embodiment of the present application;
FIG. 14 is a schematic structural diagram of a signal transmission device 1500 provided by an embodiment of the present application;
FIG. 15 is a schematic structural diagram of a signal transmission device 1500 provided by an embodiment of the present application;
FIG. 16 is a schematic structural diagram of a signal transmission device 1600 provided by an embodiment of the present application;
FIG. 17 is a schematic structural diagram of a communication device provided by an embodiment of the present application;
FIG. 18 is a schematic structural diagram of a chip according to an embodiment of the present application;
FIG. 19 is a schematic block diagram of a communication system provided by an embodiment of the present application.

### DETAILED DESCRIPTION

Technical solutions in embodiments of the present application will be described below with reference to the accompanying drawings in the embodiments of the present application. Obviously, the described embodiments are some embodiments of the present application, but not all embodiments. Based on the embodiments in the present application, all other embodiments obtained by those of ordinary skill in the art without making creative efforts fall within the protection scope of the present application.

The technical solutions of the embodiments of the present application can be applied to various communication systems, such as a Long Term Evolution (LTE) System, an LTE Time Division Duplex (TDD) System, a Universal Mobile Telecommunication System (UMTS) System, an Internet of Things (IoT) System, and a Narrow Band Internet of Things (NB-IoT) System, an enhanced Machine-Type Communications (eMTC) system, a 5G communication system (also known as a New Radio (NR) communication system), or a future communication system, etc.

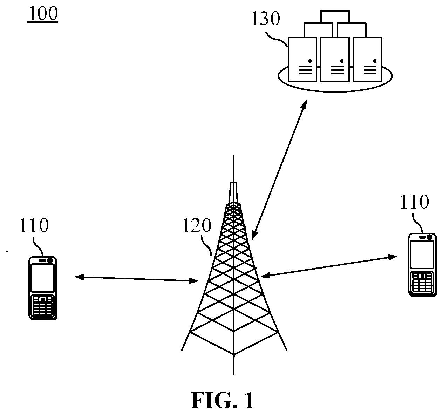

FIG. 1 is a schematic diagram of a communication architecture according to an embodiment of the present application. As shown in FIG. 1, a communication system 100 may include terminal devices 110 and a network device 120. The network device 120 may communicate with the terminal devices 110 through an air interface. Multi-service transmission is supported between the terminal devices 110 and the network device 120.

It should be understood that the embodiments of the present application are only described illustratively by using the communication system 100, but the embodiments of the present application are not limited thereto.

In the communication system 100 illustrated in FIG. 1, the network device 120 may be an access network device that communicates with the terminal devices 110. The access network device may provide communication coverage for a particular geographic area and may communicate with a terminal device 110 (e.g., a UE) located within the coverage area.

The Network device 120 may be an Evolutional Node B (eNB or eNodeB) in a Long Term Evolution (LTE) system, or a Next Generation Radio Access Network (NG RAN) device, or a base station (gNB) in an NR system, or a wireless controller in a Cloud Radio Access Network (CRAN), or the Network device 120 may be a relay station, an access point, an in-vehicle device, a wearable device, a hub, a switch, a bridge, a router, or a Network device in a future-evolution Public Land Mobile Network (PLMN).

The terminal device 110 may be any terminal device including, but not limited to, a terminal device that is connected with the network device 120 or other terminal devices by a wired or wireless manner.

For example, the terminal device 110 may refer to an access terminal, a User Equipment (UE), a User unit, a User station, a mobile site, a mobile station, a remote station, a remote terminal, a mobile device, a User terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with Wireless communication capabilities, a computing device or other processing device connected to a Wireless modem, an in-vehicle device, a wearable device, a terminal device in a 5G network, or a terminal device in a future evolution network, or the like.

The wireless communication system 100 may further include a core network device 130 that communicates with the network device 120. The Core network device 130 may be a 5G Core (5G Core, 5G GC) device, for example, an Access and Mobility Management Function (AMF), for another example, an Authentication Server Function (AUSF), for another example, a User Plane Function (UPF), for another example, a Session Management Function (SMF). Alternatively, the Core network device 130 may also be an Evolved Packet Core (EPC) device of the LTE network, for example, a Session Management Function + Core Packet Gateway (SMF + PGW-C) device. It should be understood that SMF + PGW-C can implement the functions that both the SMF and the PGW-C can implement. In the process of network evolution, the above-mentioned core device may also be called by other names, or a new network entity may be formed by dividing the functions of the core network, which is not limited by the embodiments of the present application.

The various functional units in the communication system 100 may also establish connections through a next generation (NG) interface to enable communication.

FIG. 1 exemplarily illustrates one network device, one core network device, and two terminal devices. Optionally, the wireless communication system 100 may include a plurality of network devices, and the coverage range of each network device may include another number of terminal devices, which is not limited in the embodiments of the present application.

It should be noted that FIG. 1 merely exemplarily illustrates a system to which the present application is applicable, the methods illustrated in the embodiments of the present application may be applicable to other systems. Furthermore, the terms "system" and "network" are often used interchangeably herein. The term "and/or" herein is merely an association relationship that describes associated objects, and indicates that there may be three relationships. For example, A and/or B, which may indicate that A exists alone, both A and B exists, or B exists alone. In addition, the character "/" herein generally indicates that the associated objects before and after are in an "or" relationship. It should also be understood that the "indication" referred to in the embodiments of the present application may be a direct indication, an indirect indication, or an indication that there is an association relationship. For example, A indicates B, which may mean that A directly indicates B, e.g., B may be acquired by A; or that A indirectly indicates B, for example, A indicates C, and B can be acquired by C; or that there is an association relationship between A and B. It should also be understood that the "correspondence" mentioned in the embodiment of the present application may mean that there is a direct correspondence or an indirect correspondence between the two items, or may mean that there is a correlation between the two items, or may be a relationship between indicating and being indicated, configurating and being configured, or the like. It should also be understood that the "predefined" or "predefined rules" mentioned in the embodiments of the present application can be realized by storing corresponding codes, tables, or other means that can be used to indicate relevant information in advance in devices (for example, including terminal devices and network devices), and the specific implementation method thereof is not limited in the present application. For example, predefined may refer to defined in a protocol. It should also be understood that in the embodiments of the present application, the "protocol" may refer to a standard protocol in the communication field, and may include, for example, an LTE protocol, an NR protocol, and related protocols applied to future communication systems, and the present application is not limited thereto.

In order to facilitate understanding of the technical solutions of the embodiments of the present application, the related technologies for the embodiments of the present application will be described below, and the following related technologies can be arbitrarily combined with the technical soslutions of the embodiments of the present application as optional schemes, and all of them belong to the protection scope of the embodiments of the present application.

### 1. SSB

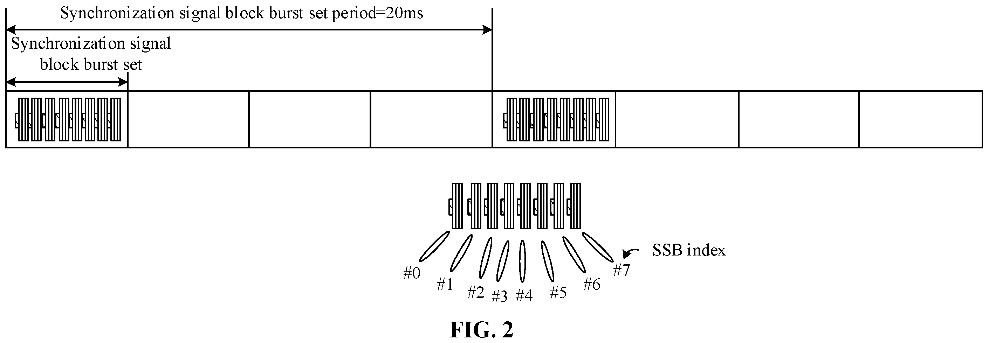

A Synchronization Signal and Physical broadcast channel (Synchronization Signal Block, SSB) may include a Primary Synchronization Signal (PSS), a Secondary Synchronization Signal (SSS), and a Physical broadcast channel (PBCH) distributed over four consecutive orthogonal frequency division multiplex (OFDM) symbols. Referring to FIG. 2, which shows the schematic structural diagram of a SSB timing, one SSB burst set period includes a plurality of SSBs (for example, 8 SSBs), and different SSBs may correspond to different beam directions. SSB burst set periods supported by the NR are 5 milliseconds (ms), 10ms, 20ms, etc.

### 2. NE paging

A main function of paging is to enable a network device to page a terminal device UE through a paging message when the terminal device is in a Radio Resource Control (RRC) IDLE state or an RRC INACTIVE state, or to notify a UE of system message changes, earthquakes and tsunamis, public warnings, and the like through a short message. It should be noted that the above-described messages are also applicable to a RRC connection state of the UE.

Paging includes a Physical Downlink Control Channel (PDCCH) scrambled by a Paging Radio Network Temporary Identifier (P-RNTI), and a Physical Downlink Share Channel (PDSCH) scheduled by the PDCCH. For example, the paging message may be transmitted in the PDSCH, and the short message may be 8 bits (bits) in a PDCCH.

For a UE in the RRC_IDLE state or the RRC_INACTIVE state, since there is no other data communication between the UE and a network device, in order to reduce the power consumption such as power loss of the UE, the UE may listen for the Paging channel discontinuously, that is, adopt a paging Discontinuous Reception (DRX) mechanism. Under the paging DRX mechanism, the UE only needs to monitor paging during one paging occasion (PO) within each DRX Cycle. The PO is a series of PDCCH monitoring occasions (PMOs), which may consist of multiple slots. In addition, a Paging Frame (PF) is one radio Frame (10 ms), and the radio Frame may include a plurality of POs or starting positions of a plurality of POs.

The cycle of the paging DRX may be determined by a common period in the system broadcast and a dedicated cycle configured in higher layer signaling such as Non-Access Stratum (NAS) signaling. The UE may take the smallest cycle of the common cycle and the dedicated cycle as a paging cycle. From a network perspective, a paging DRX cycle may include multiple POs. The location at which the UE monitoring the PO is related to the identifier (ID) of the UE. For example, the PF and PO of a certain UE in a paging DRX are determined as follows:

A System Frame Number (SFN) of a radio Frame PF can be determined by the following formula (1):
$\left(SFN+PF_offset\right) mod T = \left(T div N\right) * \left(UE_ID mod N\right)$ (1)

The number or index Index(i_s) of a paging occasion (PO) within one PF is determined by the following formula (2):
$i_s = floor \left(UE_ID/N\right) mod Ns$ (1)

Here, T is a time length of a DRX cycle in which the UE receives the paging. Here, the network device broadcasts one default DRX cycle. If a RRC/higher layer signaling configures a UE-specific DRX cycle for the UE, the smallest one between the DRX cycle broadcasted by the network device and the UE-specific DRX cycle configured by the RRC/higher layer signaling is set as the DRX cycle for the UE. If the RRC/higher layer signaling does not configure a UE-specific DRX cycle for the UE, the DRX cycle broadcasted by the network device is taken as the DRX cycle for the UE.

Where N is the number of radio frames (PFs) available for receiving paging messages in one discontinuous cycle (DRX cycle) for the UE. Ns is the number of POs included in one PF. PF_offset is a time domain offset for determining the PF. The UE_ID is the identifier of the UE. The identifier of the UE may be determined by the 5G-S-TMSI mod 1024.

In the above formulas (1) and (2), div is the division operation (taking the quotient), mod is the modulus operation (taking the remainder), and the floor() function is "rounding down".

For a certain UE, according to the above formulas (1) and (2), a position of a PF and an index of a PO for the UE in a paging DRX cycle can be obtained. The PO may consist of a plurality of PDCCH monitoring occasions. For example, one PO includes a plurality of PDCCH monitoring occasions, and the number of the plurality of PDCCH monitoring occasions is equal to the number of SSBs broadcasted by the network device.

After the UE obtains the position of the PF, the index of the PO, and the number of PDCCH monitoring occasions in the PO, the UE may obtain the starting position of the first PDCCH monitoring occasions in the PO through the relevant configuration parameters. The starting position may be configured by higher level signaling or based on the PO index. The UE may blindly detect a paging message according to the determined PO.

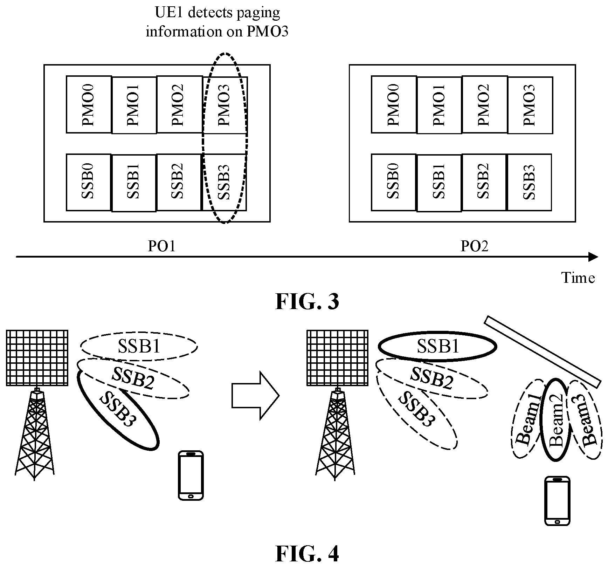

From the above, the UE determines the monitoring occasions PO, and it can be seen that the determination of the monitoring occasions (POs) is related to the identifier of the terminal device (UE ID), the number of radio frames (PFs) in one DRX cycle, and the number of monitoring occasions (POs) in one PF. If there are a large number of UEs in the communication system and the network device cannot allocate all UE to different POs, there may be a case where a plurality of UEs correspond to one PO. If the network device needs to page a certain UE on this PO, the network device will repeatedly transmit the PDCCHs scrambled by the P-RNTI at S consecutive PDCCH monitoring occasions corresponding to this PO, where S is the number of SSBs transmitted by the network device. That is, the network device repeatedly transmits the PDCCHs scrambled by the P-RNTI through each SSB corresponding to this PO. In this way, all UEs mapped to this PO receive the PDCCH scrambled by the P-RNTI and the PDSCH indicated by the PDCCH. For example, as shown in FIG. 3, UE1 monitors all PDCCH monitoring occasions (PMOs) corresponding to PO1, and receives the paging indication information PDCCH corresponding to SSB3.

### 3. Intelligent surface

For example, Large Intelligent Surfaces (LIS) or Reconfigurable Intelligent Surfaces (RIS) are emerging artificial material devices.

Smart Surface is an emerging artificial material technology. There are many related terms as follows, which all refer to similar technologies or entities. These terms include: Large Intelligent Surface (LIS), Smart Reflect Array (SRA), Reconfigurable Reflect Array (RRA), Intelligent Reflecting Surface (IRS), and Reconfigurable Intelligent Surfaces (RIS). For simplicity, the RIS will be used to explain it later.

The RIS device can change its own electromagnetic characteristics dynamically/semi-statically, affecting the reflection/refraction behavior of electromagnetic waves incident on the RIS device. The RIS device can realize the functions of beam scanning/beam forming by controlling the reflected/refracted waves of electromagnetic waves. It can be understood that the RIS device forwards the downlink signal transmitted by the network device to the terminal device using the analog beam forwarding method, and correspondingly forwards the uplink signal of the terminal device to the network device.

Compared with traditional wireless communication transceiver devices, RIS devices have the advantages of lower cost, implementation complexity, lower power consumption, thinner thickness, lower weight, no additional thermal noise at the receiving end, and flexible deployment, thanks to the absence of radio frequency and baseband processing circuits.

In future wireless networks, a large number of RIS devices instead of densely deployed base stations may be deployed. For example, a RIS device may be utilized to forward signals of a network device (e.g., SSB or CSI-RS, etc.) for coverage enhancement. However, after the introduction of the RIS device, the beam formed by the signal forwarded by the RIS device may be different from the beam of the signal originally configured by the network device when the RIS device is not introduced. In this way, in an implementation scenario in which there are multiple beam sets, the terminal device receives different beam sets, which will cause confusion in determining paging resources by the terminal device, thereby affecting the accuracy of paging.

In some scenarios, an obstacle exists between the terminal device (UE) and the network device, resulting in poor channel transmission quality between the terminal device (UE) and the network device. At this time, the UE can communicate with the network device through the intelligent surface device such as the RIS device, thereby improving the transmission quality. The SSB set corresponding to one paging occasion (PO) is different for the UE communicating directly with the network device and the UE communicating with the network device through the RIS device. Referring to FIG. 4, the SSB set corresponding to one paging occasion (PO) is {SSB1, SSB2, SSB3} for the UE communicating directly with the network device, and the SSB set corresponding to one paging occasion (PO) is {Beam1, Beam2, Beam3} for the UE communicating with the network device through the RIS device. Thus, in an implementation scenario in which there are two or more beam sets, the terminal device receives different beam sets, which causes confusion in determining paging resources by the terminal device, thereby affecting the accuracy of paging.

Based on this, the embodiments of the present application provide a paging method. In a case where a first device reflects or refracts a signal transmitted between a network device and a terminal device, the terminal device can receive paging configuration information transmitted by the network device. The paging configuration information indicates a first spatial information set or a second spatial information set. The terminal device determines a paging resource based on the paging configuration information. The paging resource is a paging resource corresponding to the first spatial information set, the second spatial information set, or a third spatial information set. The first spatial information set is all or part of a union of the second spatial information set and the third spatial information set. The third spatial information set is a spatial information set broadcasted by the network device. The second spatial information set is a spatial information set for the first device. That is, when communication is performed between the network device and the terminal device through the first device, the terminal device may, based on the spatial information set indicated by the paging configuration information transmitted by the network device to the terminal device, determine a paging resource corresponding to the indicated spatial information set for paging monitoring. Thus, after the intelligent surface device is introduced, the terminal device may determine that the network device and the terminal device establish a communication link through the intelligent surface device based on the paging configuration information for indicating the first spatial information set or the second spatial information set transmitted by the network device, and further, the terminal device can monitor the paging at an appropriate occasion by using the communication link, thereby ensuring the accuracy of the paging, reducing the probability of paging false alarm, and reducing the energy consumption of the terminal device while improving the communication transmission quality.

In order to facilitate understanding of the technical solutions of the embodiments of the present application, the technical solutions of the present application are described in detail below through specific embodiments. The above related technologies can be arbitrarily combined with the technical solutions of the embodiments of the present application as optional solutions, and all of them belong to the protection scope of the embodiments of the present application. The embodiments of the present application include at least some of the following.

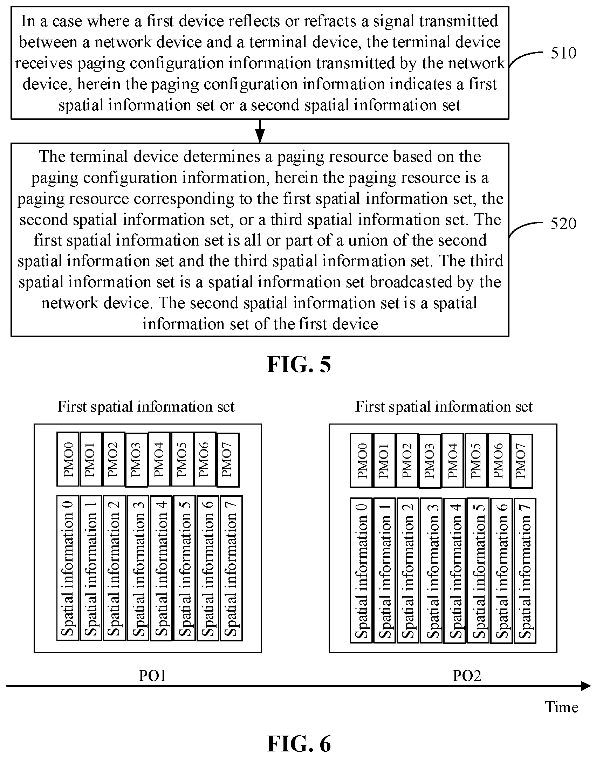

FIG. 5 shows a paging method provided by an embodiment of the present application, which is applied to a terminal device, and the method may include the following operations.

In Operation 510, in a case where a first device reflects or refracts a signal transmitted between a network device and a terminal device, the terminal device receives paging configuration information transmitted by the network device, herein the paging configuration information indicates a first spatial information set or a second spatial information set.

In Operation 520, the terminal device determines a paging resource based on the paging configuration information, herein the paging resource is a paging resource corresponding to the first spatial information set, the second spatial information set, or a third spatial information set. The first spatial information set is all or part of a union of the second spatial information set and the third spatial information set. The third spatial information set is a spatial information set broadcasted by the network device. The second spatial information set is a spatial information set for the first device.

In the embodiments of the present application, a piece of spatial information in the spatial information set may be beam information corresponding to the paging resource. The spatial Information set may be any one of an SSB set, a Channel State Information-Reference Signal (CSI-RS) resource set, a Channel Sounding Reference Signal (SRS) resource set, a transmission configuration indication (TCI) state set, a unified TCI state set, a downlink spatial relation filter set, an uplink spatial relation filter set, and a Quasi Co-Location (QCL) relation.

Here, paging includes a PDCCH scrambled by a P-RNTI, and a PDSCH scheduled by the PDCCH. When the terminal device is in a RRC idle state or an inactive state, the network device may page the terminal device through a paging message, or notify the terminal device of information such as message change, earthquake and tsunami, public warning, etc. through a short message. In one implementation, a paging message may be transmitted in a PDSCH, and a short message may be 8 bits in a PDCCH.

In the embodiments of the present application, the paging configuration information indicates information of the first spatial information set or the second spatial information set, or, the paging configuration information may also indicate the third spatial information set.

In the embodiments of the present application, the third spatial information set may be a spatial information set broadcasted by the network device. Here, the spatial information set broadcasted by the network device may be a spatial information set configured through the higher level parameter ssb-PositionsInBurst in the system information block (SIB1).

In the embodiments of the present application, the first device may be an intelligent surface device, such as an RIS device. The first device may realize signal forwarding between the terminal device and the network device.

Here, the spatial information set of the first device may be understood as a spatial information set supported by the first device or a spatial information set associated with the first device. The first device is configured to forward a signal transmitted by the network device to the terminal device, or to forward a signal transmitted by the terminal device to the network device, the forwarding includes performing reflection or refraction, to change the direction of transmission of the signal.

It will be appreciated that the signal may be information carried by an uplink channel transmitted by the network device (forwarded by the first device) to the terminal device, i.e. the signal may be an uplink reference signal. The signal may also be information carried by a downlink channel transmitted by the terminal device (forwarded by the first device) to the network device, that is, the signal may be a downlink reference signal. The spatial information set belongs to the downlink reference signal.

It will be appreciated that the network device may transmit the third spatial information set directly to the terminal device. Or, the network device may also transmit the second spatial information set to the terminal device through the first device forwarding.

It should be noted that, for a terminal device that directly communicates with a network device, the spatial information set corresponding to one paging occasion (PO) may be a third spatial information set broadcasted by the network device. For a terminal device communicating with a network device through a first device, the spatial information set corresponding to one paging occasion (PO) may be the second spatial information set, or the first spatial information set, that is, all or part of the union of the second spatial information set and the third spatial information set.

In the embodiments of the present application, the first spatial information set is all of the union of the second spatial information set and the third spatial information set, which may mean that the first spatial information set includes spatial information in the second spatial information set and spatial information in the third spatial information set.

In the embodiments of the present application, the first spatial information set is a part of the union of the second spatial information set and the third spatial information set, which may mean that the first spatial information set includes a part of spatial information in the second spatial information set, or that the first spatial information set includes a part of spatial information in the third spatial information set, or that the first spatial information set includes a part of spatial information in the second spatial information set and a part of spatial information in the third spatial information set, and this is not specifically limited by the present application.

It should be noted that the first spatial information set, the second spatial information set, and the third spatial information set are not completely the same. For example, the spatial information included in the first spatial information set, the second spatial information set, and the third spatial information set is not completely the same. For example, the number of pieces of spatial information included in the first spatial information set, the second spatial information set, and the third spatial information set is not completely the same, and/or the signals corresponding to the spatial information contained in the first spatial information set, the second spatial information set, and the third spatial information set are not completely the same.

In the embodiments of the present application, the spatial information set corresponding to one paging occasion (PO) may be the first spatial information set, the second spatial information set, or the third spatial information set.

In the embodiments of the present application, the paging resource may be paging resources corresponding to a spatial information set corresponding to one paging occasion (PO). That is, the paging resource may be paging resources corresponding to one of the first spatial information set, the second spatial information set, and the third spatial information set. It should be noted that the paging resource may be configured by the network device, and the paging resource may be placed in the paging configuration information. Or, the paging resource may be configured through other signaling. The present application is not particularly limited to this.

It can be understood that in the embodiments of the present application, the network device can directly communicate with the terminal device, the network device can also communicate with the terminal device through the first device. When the network device communicates with the terminal device through the first device, the terminal device receives paging configuration information for indicating the first spatial information set or the second spatial information set from the network device, and determines a paging resource based on the spatial information set indicated by the paging configuration information. In this way, after determining the paging resource, the terminal device uses the paging resource to monitor the PDCCH scrambled by the P-RNTI at PDCCH monitoring occasions corresponding to the spatial information in the indicated spatial information set. Herein the number of PDCCH monitoring occasions included in the PO is associated with the number of pieces of spatial information in the indicated spatial information set. In this way, after introducing the intelligent surface device, the terminal device can determine that the network device and the terminal device establish a communication link through the intelligent surface device based on the paging configuration information for indicating the first spatial information set or the second spatial information set transmitted by the network device. Further, the terminal device uses the communication link to enable itself to monitor paging on an appropriate occasion, thereby ensuring the accuracy of paging, reducing the probability of paging false alarm and reducing the energy consumption of the terminal device while improving the communication transmission quality.

In some embodiments, the first spatial information set is all of the union of the second spatial information set and the third spatial information set, which may include that: the number of pieces of spatial information in the first spatial information set is greater than the number of pieces of spatial information in the second spatial information set, and/or the number of pieces of spatial information in the first spatial information set is greater than the number of pieces of spatial information in the third spatial information set.

In the embodiments of the present application, since the first spatial information set is all of the union of the second spatial information set and the third spatial information set, the first spatial information set may include the second spatial information set and the third spatial information set. In general, the second spatial information set and the third spatial information set are not empty. Then, in a case where the first spatial information set includes the second spatial information set, the number of pieces of spatial information in the first spatial information set is greater than the number of pieces of spatial information in the second spatial information set. In a case where the first spatial information set includes the third spatial information set, the number of pieces of spatial information in the first spatial information set is larger than the number of pieces of spatial information in the third spatial information set.

In some embodiments, the first spatial information set is all or part of the union of the second spatial information set and the third spatial information set, which may include that the number of pieces of spatial information in the first spatial information set is equal to or less than the sum of the number of pieces of spatial information in the second spatial information set and the number of pieces of spatial information in the third spatial information set.

It should be noted that the second spatial information set and the third spatial information set are not completely the same. That is, the spatial information in the second spatial information set and the spatial information in the third spatial information set are completely different, and a part of the spatial information in the second spatial information set and a part of the spatial information in the third spatial information set are the same. When the first spatial information set is all or part of the union of the second spatial information set, the size relationship between the number of pieces of spatial information in the first spatial information set and the sum of the number of pieces of spatial information in the second spatial information set and the number of pieces of spatial information in the third spatial information set include the following:

In a case where the first spatial information set is all of the union set of the second spatial information set, if the spatial information in the second spatial information set and the spatial information in the third spatial information set are completely different, the number of pieces of spatial information in the first spatial information set is equal to the sum of the number of pieces of spatial information in the second spatial information set and the number of pieces of spatial information in the third spatial information set.

In a case where the first spatial information set is all of the union set of the second spatial information set, if the spatial information in the second spatial information set and the spatial information in the third spatial information set are not completely the same, the number of pieces of spatial information in the first spatial information set is smaller than the sum of the number of pieces of spatial information in the second spatial information set and the number of pieces of spatial information in the third spatial information set.

In a case where the first spatial information set is a part of the union of the second spatial information set, the number of pieces of spatial information in the first spatial information set is smaller than the sum of the number of pieces of spatial information in the second spatial information set and the number of pieces of spatial information in the third spatial information set regardless of whether the spatial information in the second spatial information set and the spatial information in the third spatial information set are completely different or not completely the same.

In some embodiments, different spatial information sets correspond to different paging resources, and the different spatial information sets include one or more of the following: the first spatial information set, the second spatial information set, and the third spatial information set. Different spatial information sets correspond to different paging resources, which includes that: the first spatial information set corresponds to first paging resources, the second spatial information set corresponds to second paging resources, and the third spatial information set corresponds to third paging resources.

In the embodiments of the present application, the first paging resources may be used by the terminal device to monitor the PDCCH scrambled by the P-RNTI at the PDCCH monitoring occasions corresponding to the spatial information in the first spatial information set under the paging occasion (PO). Herein the number of PDCCH monitoring occasions included in the PO is associated with the number of pieces of spatial information in the first spatial information set. For example, if the number of pieces of spatial information included in the first spatial information set is Y, the PDCCH scrambled by the P-RNTI is monitored on Y' PDCCH monitoring occasions corresponding to Y spatial information. Here, Y and Y' may be the same, or Y and Y' may be different. It should be noted that, in a case where X PDCCH monitoring occasions are configured for each spatial information in the paging occasion PO, if X =1, Y and Y' are the same; if X> 1, then Y and Y 'are different, and the relationship between Y and Y' is Y'=Y×X.

In the embodiments of the present application, the second paging resources may be used by the terminal device to monitor the PDCCH scrambled by the P-RNTI on the PDCCH monitoring occasions corresponding to the spatial information included in the second spatial information set under the paging occasion (PO). Herein the number of PDCCH monitoring occasions included in the PO is associated with the number of pieces of spatial information in the second spatial information set. For example, if the number of pieces of spatial information included in the second spatial information set is P, the PDCCH scrambled by the P-RNTI is monitored on the P' PDCCH monitoring occasions corresponding to the P spatial information. Here, P and P' may be the same, or P and P' may be different. It should be noted that, in a case where X PDCCH monitoring occasions are configured for each spatial information in the paging occasion (PO), if X =1, P and P' are the same; if X> 1, then P and P 'are different, and the relationship between P and P' is P' = P×X.

In the embodiments of the present application, the third paging resources may be used by the terminal device to monitor the PDCCH scrambled by the P-RNTI on PDCCH monitoring occasions corresponding to the spatial information included in the third spatial information set under the paging occasion (PO). Herein the number of PDCCH monitoring occasions included in the PO is associated with the number of pieces of spatial information in the third spatial information set. For example, if the number of pieces of spatial information included in the third spatial information set is S, the PDCCH scrambled by the P-RNTI is monitored at S' PDCCH monitoring occasions corresponding to S spatial information. Here, S and S' may be the same, and P and P' may be different. It should be noted that, in a case where X PDCCH monitoring occasions are configured for each spatial information in the paging occasion (PO), if X =1, S and S' are the same; if X> 1, then S and S 'are not the same, and the relationship between S and S' is S' = S×X.

In some embodiments, the first paging resource, the second paging resource, and the third paging resource satisfy at least one of the following:
The first paging resource includes the second paging resource and the third paging resource;
PDCCH monitoring occasions corresponding to the second paging resource do not overlap in the time domain with PDCCH monitoring occasions corresponding to the third paging resource ;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain;
The first paging resource, the second paging resource, and the third paging resource are indicated by being scrambled using different paging radio network temporary identifiers (P-RNTIs).

In the embodiments of the present application, since the first spatial information set may include the second spatial information set and the third spatial information set, the first paging resource corresponding to the first spatial information set may include the second paging resource corresponding to the second spatial information set and the third paging resource corresponding to the third spatial information set.

In the embodiments of the present application, by being distinguished with the time domain resource, the PDCCH monitoring occasions corresponding to the second paging resource and the PDCCH monitoring occasions corresponding to the third paging resource do not overlap in the time domain.

In the embodiments of the present application, by being distinguished with the time domain resource, the PDCCH monitoring occasions corresponding to the first paging resource, the PDCCH monitoring occasions corresponding to the second paging resource, and the PDCCH monitoring occasions corresponding to the third paging resource are not overlapped in the time domain.

In the embodiments of the present application, by being distinguished with the frequency domain resource, the PDCCH monitoring occasions corresponding to the first paging resource, the PDCCH monitoring occasions corresponding to the second paging resource, and the PDCCH monitoring occasions corresponding to the third paging resource are not overlapped in the frequency domain.

In the embodiments of the present application, the first paging resource, the second paging resource, and the third paging resource can be distinguished by using different P-RNTIs. That is, the first paging resource, the second paging resource, and the third paging resource are respectively indicated by being scrambled using different P-RNTIs, so that the terminal device monitors the PDCCH scrambled by the P-RNTI corresponding to the paging resource in the PO.

In some embodiments, the configuration of the first spatial information set and the second spatial information set may be implemented as follows,

The configuration of the first spatial information set is a first number of physical downlink control channel (PDCCH) monitoring occasions configured by the network device for one PO corresponding to the terminal device based on the paging configuration information, the first number is associated with the number of pieces of actually transmitted spatial information included in the first spatial information set;

The configuration of the second spatial information set is a second number of PDCCH monitoring occasions configured by the network device for one PO corresponding to the terminal device based on the paging configuration information. The second number is associated with the number of pieces of actually transmitted spatial information included in the second spatial information set. Or, the configuration of the second spatial information set is a third number of PDCCH monitoring occasions configured by the network device for one PO corresponding to the terminal device based on the paging configuration information. The third number is associated with the number of pieces of actually transmitted spatial information included in the second spatial information set and the number of pieces of actually transmitted spatial information included in the third spatial information set, respectively.

In the embodiments of the present application, for the configuration of the first spatial information set, the first number of PDCCH monitoring occasions corresponding to one paging occasion (PO) may be determined based on the number of pieces of actually transmitted spatial information included in the first spatial information set, and/or the number of PDCCH monitoring occasions for each piece of spatial information configured in the paging occasion.

In one implementation, for the configuration of the first spatial information set, when the terminal device communicating with the network device through the first device monitors a paging message, the first number Y' of PDCCH monitoring occasions corresponding to one paging occasion (PO) is associated with the number Y of pieces of actually transmitted spatial information included in the first spatial information set and the number X of PDCCH monitoring occasions for each piece of spatial information among the paging occasion (PO). Exemplarily, the first number Y' may be Y×X, where Y is the number of pieces of actually transmitted spatial information included in the first spatial information set, and X is the number of PDCCH monitoring occasions for each piece of spatial information in the paging occasion (PO).

In the embodiments of the present application, the configuration of the second spatial information set may be based on the number of pieces of actually transmitted spatial information included in the second spatial information set, or may be based on the number of pieces of actually transmitted spatial information included in the second spatial information set and the number of pieces of actually transmitted spatial information included in the third spatial information set.

Here, if the configuration of the second spatial information set is based on the number of pieces of actually transmitted spatial information included in the second spatial information set, for the configuration of the second spatial information set, the second number of PDCCH monitoring occasions corresponding to one paging occasion (PO) may be determined based on the number of pieces of actually transmitted spatial information included in the second spatial information set, and/or determined based on the number of PDCCH monitoring occasions for each piece of spatial information configured in the paging occasion.

In one implementation, for the configuration of the second spatial information set, when the terminal device communicating with the network device through the first device monitors a paging message, the second number P' of PDCCH monitoring occasions corresponding to one paging occasion (PO) is associated with the number P of pieces of actually transmitted spatial information included in the second spatial information set and the number X of PDCCH monitoring occasions for each piece of spatial information among the paging occasion (PO). Exemplarily, the second number P' may be P×X, where P is the number of pieces of actually transmitted spatial information contained in the second spatial information set, and X is the number of PDCCH monitoring occasions for each piece of spatial information in the paging occasion (PO).

Here, if the configuration of the second spatial information set is based on the number of pieces of actually transmitted spatial information included in the second spatial information set and the number of pieces of actually transmitted spatial information included in the third spatial information set, for the configuration of the second spatial information set, the second number of PDCCH monitoring occasions corresponding to one paging occasion (PO) may be determined based on the number of pieces of actually transmitted spatial information included in the second spatial information set and the number of pieces of actually transmitted spatial information included in the third spatial information set, and/or determined based on the number of PDCCH monitoring occasions for each piece of spatial information configured in the paging occasions.

In one implementation, for the configuration of the second spatial information set, the third number M of PDCCH monitoring occasions corresponding to one paging occasion (PO) is associated with the number P of pieces of actually transmitted spatial information included in the second spatial information set, the number S of pieces of actually transmitted spatial information included in the second spatial information set, and the number X of PDCCH monitoring occasions for each piece of spatial information in the paging occasion (PO). Exemplarily, the third number M may be (S + P) ×X, where P is the number of pieces of actually transmitted spatial information included in the second spatial information set, S is the number of pieces of actually transmitted spatial information included in the third spatial information set, and X is the number of PDCCH monitoring occasions for each piece of spatial information in the paging occasion (PO).

In some embodiments, the Operation 520 that the terminal device determines the paging resource based on the paging configuration information may also be realized by the following operations: when a link quality between the terminal device and the network device meets a preset quality condition, the terminal device determines the paging resource based on the paging configuration information.

In the embodiments of the present application, the link quality may indicate a link quality of a link between the terminal device and the network device, and the link quality may be at least one of a Reference Signal Receiving Power (RSRP), a Reference Signal Receiving Quality (RSRQ), a Signal Noise Ratio (SNR), Signal to Interference plus Noise Ratio (SINR) and channel state information (CSI).

In the embodiments of the present application, the preset quality condition may be that the link quality between the terminal device and the network device is less than or equal to a quality threshold; or the preset quality condition may be that the link quality of the link used for communication through the first device is greater than or equal to a quality threshold. The quality threshold may be configured by the network device, or agreed in a protocol, or predefined. Here, the link quality may also be referred to as channel quality or channel transmission quality.

In other embodiments of the present application, when the link quality between the terminal device and the network device is less than or equal to the quality threshold, it indicates that the channel transmission quality between the terminal device and the network device is poor. Alternatively, when the link quality for communication between the terminal device and the network device through the first device is greater than or equal to the quality threshold, it indicates that the channel transmission quality for communication between the terminal device and the network device through the first device is good. At this time, it can be considered that the terminal device needs to communicate with the network device through the forwarding of the first device. Further, based on the paging configuration information, the terminal device determines the paging resource as the paging resource corresponding to the spatial information set indicated by the paging configuration information. At this time, the terminal device uses the paging resource corresponding to the indicated spatial information to monitor the PDCCH scrambled by the P-RNTI on the PDCCH monitoring occasions corresponding to the indicated spatial information set. In such a way, according to the link quality between the terminal device and the network device, if the link quality when the terminal device directly communicates with the network device is poor, or if the link quality when the network device and the terminal device communicate through the first device is good, the signal transmitted between the network device and the terminal device is reflected or refracted by the first device, so that the communication transmission quality and the accuracy of paging can be guaranteed.

In the embodiments of the present application, when the terminal device determines that the link quality between the terminal device and the network device is greater than the quality threshold, it indicates that the channel transmission quality between the terminal device and the network device is good, at this time, it can be considered that the terminal device directly communicates with the network device without being forwarded by the first device. Further, even if the paging configuration information indicates the first spatial information set or the second spatial information set, the terminal device can still determine the paging resource as the third paging resource corresponding to the third spatial information set broadcasted by the network device. At this time, the terminal device monitors the PDCCH scrambled by the P-RNTI by using the PDCCH monitoring occasions corresponding to the third paging resource. In such a way, according to the link quality between the terminal device and the network device, if the link quality when the terminal device directly communicates with the network device is good, the terminal device directly communicates with the network device, thereby ensuring the communication transmission quality and the accuracy of paging.

In some embodiments, the link quality between the terminal device and the network device determined by the terminal device may be a link quality measured by the terminal device from a downlink reference signal, or a link quality measured by the network device from an uplink reference signal.

In some embodiments, the paging configuration information includes first indication information, the first indication information indicates the first spatial information set or the second spatial information set, and the paging resource is the first paging resource or the second paging resource. the Operation 520 that the terminal device determines the paging resource based on the paging configuration information includes an operation that: the terminal device determines the paging resource based on the first indication information used to indicate the first spatial information set or the second spatial information set.

Here, the paging resource may be determined by the terminal device based only on the first indication information.

In the embodiments of the present application, the first indication information indicates the first spatial information set or the second spatial information set, which represents that the terminal device communicates with the network device through the first device, that is, the spatial information set for communication between the terminal device and the first device is included in the first spatial information set or the second spatial information set. The terminal device monitors the PDCCHs scrambled by the P-RNTI according to PDCCH monitoring occasions corresponding to the first spatial information set or the second spatial information set indicated by the first indication information. Herein the number of PDCCH monitoring occasions corresponds to the number of pieces of spatial information in the spatial information set indicated by the first indication information. In such a way, after the intelligent surface device is introduced, the terminal device can determine, only based on the first indication information in the paging configuration information, that the network device and the terminal device establish a communication link through the intelligent surface device. Further, the terminal device uses the communication link so that it can monitor the paging on an appropriate occasion, thereby ensuring the accuracy of the paging, reducing the probability of paging false alarm, and reducing the energy consumption of the terminal device while improving the communication transmission quality.

In some embodiments, in a case that the first indication information indicates the first spatial information set, the paging resource is a first paging resource corresponding to the first spatial information set.

In the embodiments of the present application, when the terminal device communicates with the network device through the first device, if the first indication information in the paging configuration information transmitted by the network device indicates the first spatial information set, the terminal device may determine that the spatial information set forwarded by the first device is included in the first spatial information set, and determine that the paging resource is the first paging resource corresponding to the first spatial information set. At this time, the terminal device monitors the PDCCH scrambled by the P-RNTI according to the PDCCH monitoring occasions corresponding to the first spatial information set indicated by the first indication information. In such a way, after the smart surface device is introduced, when the first indication information indicates the first spatial information set, since the first spatial information set is part or all of the union of the second spatial information set forwarded by the smart surface device to the terminal device and the third spatial information set broadcasted by the network device, and the number of PDCCH monitoring occasions corresponds to the number of pieces of spatial information in the first spatial information set indicated by the first indication information, the terminal device can monitor the paging message on an appropriate occasions by increasing the number of times of blind detection, thereby ensuring the accuracy of paging, reducing the probability of paging false alarm, and reducing the energy consumption of the terminal device while improving the communication transmission quality.

It should be noted that, since the terminal device communicates with the network device through the first device, the terminal device needs to monitor the PDCCHs scrambled by the P-RNTI repeatedly transmitted based on the spatial information in the second spatial information set included in the first spatial information set. However, since the first spatial information set also includes the third spatial information set, the terminal device also needs to monitor the PDCCHs scrambled by the P-RNTI repeatedly transmitted based on the spatial information in the third spatial information set. Therefore, in the monitoring process of the terminal device, the number of blind detections is increased.

For example, as shown in FIG. 6, FIG. 6 is a schematic diagram of a first spatial information set corresponding to one paging occasion (PO). For example, the first spatial information set is a union of the second spatial information set and the third spatial information set, the second spatial information set includes spatial information 0, spatial information 1, spatial information 2, and spatial information 3, and the third spatial information set includes spatial information 4, spatial information 5, spatial information 6, and spatial information 7. The spatial information 0, spatial information 1, spatial information 2, and spatial information 3 are different from the spatial information 4, spatial information 5, spatial information 6, and spatial information 7. Then, the first spatial information set includes spatial information 0, spatial information 1, spatial information 2, spatial information 3, spatial information 4, spatial information 5, spatial information 6, and spatial information 7. Each piece of spatial information corresponds to a PDCCH monitoring occasion (PMO). That is, spatial information 0 corresponds to PMO0, spatial information 1 corresponds to PMO1, spatial information 2 corresponds to PMO2, spatial information 3 corresponds to PMO3, spatial information 4 corresponds to PMO4, spatial information 5 corresponds to PMO5, spatial information 6 corresponds to PMO6, and spatial information 7 corresponds to PMO7. Referring to FIG. 6, the paging resource corresponding to the PO monitored by the terminal device may be the first paging resources corresponding to the first spatial information set. That is, the terminal device blindly detects the PDCCHs scrambled by the P-RNTI which correspond to a paging occasion (PO) and are repeatedly transmitted based on each piece of spatial information in the first spatial information set to monitor the paging.

In some embodiments, in a case where the first indication information indicates the second spatial information set, the paging resource is the second paging resource corresponding to the second spatial information set.

In the embodiments of the present application, when the terminal device communicates with the network device through the first device, if the first indication information in the paging configuration information transmitted by the network device indicates the second spatial information set, the terminal device may determine that the spatial information set forwarded by the first device is the second spatial information set, and determine that the paging resource is a second paging resource corresponding to the second spatial information set. At this time, the terminal device monitors the PDCCH scrambled by the P-RNTI according to the PDCCH monitoring occasions corresponding to the second spatial information set indicated by the first indication information. Herein the number of PDCCH monitoring occasions corresponds to the number of pieces of spatial information in the second spatial information set indicated by the first indication information. In such a way, after the smart surface device is introduced, when the first indication information indicates the second spatial information set, since the second spatial information set is the second spatial information set forwarded by the smart surface device to the terminal device, and the number of PDCCH monitoring occasions corresponds to the number of pieces of spatial information in the second spatial information set indicated by the first indication information, the terminal device can reduce unnecessary blind detection compared with the first indication information indicating the first spatial information set. Also, the terminal device can also enable itself to monitor the paging message on an appropriate occasion, which ensures the accuracy of paging, reduces the probability of paging false alarm, and reduces the energy consumption of the terminal device while improving the communication transmission quality and not increasing the number of blind detection times.

It should be noted that, since the terminal device communicates with the network device through the first device, the terminal device only needs to detect the PDCCHs scrambled by the P-RNTI repeatedly transmitted based on the spatial information in the second spatial information set corresponding to the first device to determine the paging message, and does not need to additionally detect the PDCCH monitoring occasions corresponding to other spatial information. Therefore, the terminal device does not need to increase the number of blind detections of the terminal device during the monitoring process, thereby reducing the number of unnecessary pages received by the terminal device.

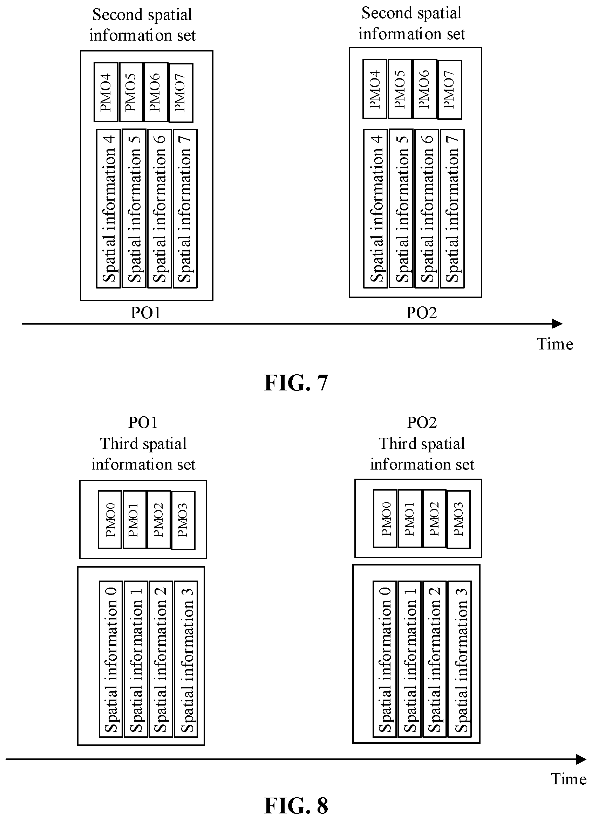

By way of example, referring to FIG. 7, FIG. 7 is a schematic diagram showing a second spatial information set corresponding to one paging occasion (PO). Herein, by way of example, the second spatial information set includes spatial information 4, spatial information 5, spatial information 6, and spatial information 7, each of which corresponds to one PDCCH monitoring occasion (PMO). That is, spatial information 4 corresponds to PMO4, spatial information 5 corresponds to PMO5, spatial information 6 corresponds to PMO6, and spatial information 7 corresponds to PMO7. Referring to FIG. 7, the paging resource corresponding to the PO detected by the terminal device may be the second paging resources corresponding to the second spatial information set, that is, the terminal device blindly detects the PDCCHs scrambled by the P-RNTI which correspond to one paging occasion (PO) and transmitted repeatedly based on each piece of spatial information in the second spatial information set.

In some embodiments, the paging configuration information includes first indication information, the first indication information further indicates the third spatial information set. In a case where the first indication information indicates the third spatial information set, the paging resource is the third paging resource. Or, in a case where the paging configuration information does not include the first indication information, the paging resource is the third paging resource. The Operation 520 that the paging resource is determined by the terminal device based on the paging configuration information includes operations that: the terminal device determines the paging resource based on the first indication information indicating the third spatial information set, or the terminal device determines the paging resource based on the paging configuration information that does not include the first indication information.

Here, the paging resource may be determined by the terminal device based only on the first indication information, and the first indication information is an optional configuration.

In the embodiments of the present application, the first indication information indicates the third spatial information set, which represents that the terminal device can directly communicate with the network device without forwarding by the first device, the terminal device can determine that the spatial information set for communication with the network device is included in the third spatial information set, and determine that the paging resource is the third paging resource corresponding to the third spatial information set. At this time, the terminal device blindly detects PDCCHs scrambled by the P-RNTI which correspond to a paging occasion PO and repeatedly transmitted based on the spatial information in the third spatial information set. Therefore, after introducing the intelligent surface device, when the first indication information indicates the third spatial information set, the terminal device can determine that the network device and the terminal device establish a direct communication link. Further, the terminal device uses the communication link to enable itself to monitor paging on an appropriate occasion, thereby ensuring the accuracy of paging, reducing the probability of paging false alarm and the energy consumption of the terminal device while improving the communication transmission quality.

It should be noted that, when the first indication information is not configured in the paging configuration information or the first indication information is absent in the paging configuration information, the terminal device may determine that the spatial information set for communication with the network device is the third spatial information set. The third spatial information set may be spatial information included in the parameter ssb-PositionsInBurst in SIB1.

For example, as shown in FIG. 8, FIG. 8 is a schematic diagram showing the third spatial information set corresponding to one paging occasion (PO). For example, the third spatial information set includes spatial information 0, spatial information 1, spatial information 2, and spatial information 3, and each piece of spatial information corresponds to a PDCCH monitoring occasion (PMO). That is, spatial information 0 corresponds to PMO 0, spatial information 1 corresponds to PMO 1, spatial information 2 corresponds to PMO 2, and spatial information 3 corresponds to PMO 3. Referring to FIG. 8, the paging resource corresponding to the PO detected by the terminal device may be the third paging resource corresponding to the third spatial information set. That is, the terminal device blindly detects PDCCHs scrambled by the P-RNTI which correspond to one paging occasion (PO) and repeatedly transmitted based on each piece of spatial information in the third spatial information set.

In some embodiments, if the paging configuration information includes only the first indication information, the paging configuration information is carried in the RRC release message or the specific signaling for the terminal device.

In the embodiments of the present application, the RRC release message or the specific signaling for the terminal device is a specific message configured by the network device for the terminal device. The RRC release message is used to instruct the terminal device to transition from the RRC connection state to the RRC idle state or the RRC inactive state. The specific signaling for the terminal device may be a higher level signaling specified for the terminal device. The RRC release message or specific signaling for the terminal device may be transmitted by the network device to the terminal device when the terminal device enters the connected state, thereby reducing the power consumption of the terminal device. In the embodiments of the present application, the terminal device monitors the paging PDCCH based on the paging configuration information carried by the RRC release message or the specific signaling for the terminal device.

Exemplarily, the paging configuration information is included in terminal device (UE)-specific (UE-specific) higher layer signaling, e.g., an RRC release message, PDCCH-configcommon. Spatial information sets corresponding to different terminal devices may be different. Optionally, the paging configuration information may be carried in the specific signaling for the terminal device.

In some embodiments, the paging configuration information further includes second indication information, the second indication information indicates whether the spatial information set indicated by the first indication information is applied. The operation 520 that the terminal device determines the paging resource based on the paging configuration information includes an operation that the terminal device determines the paging resource based on the first indication information and the second indication information.

In the embodiments of the present application, the second indication information indicates whether the spatial information set indicated by the first indication information is applied. The data type of the second indication information may be an enumeration type or a Boolean type, which is not limited in the embodiments of the present application.

In the embodiments of the present application, the first indication information indicates the first spatial information set and the second spatial information set, the second indication information indicates whether the spatial information set indicated by the first indication information is applied, and the terminal device determines the paging resource based on the first indication information and the second indication information, which may include the following:
The terminal device determines the paging resource based on the first indication information used to indicate the first spatial information set and used to indicate that the spatial information set indicated by the first indication information is applied; or,
The terminal device determines the paging resource based on the first indication information used to indicate the first spatial information set and used to indicate that the spatial information set indicated by the first indication information is not applied; or,
The terminal device determines the paging resource based on the first indication information used to indicate the second spatial information set and used to indicate that the spatial information set indicated by the first indication information is applied; or,
The terminal device determines the paging resource based on the first indication information used to indicate the second spatial information set and used to indicate that the spatial information set indicated by the first indication information is not applied.

In such a way, due to the mobility of the terminal device, the communication performance of the terminal device communicating with the network device through the first device in an area covered by the first device is better, while the communication performance of the terminal device directly communicating with the network device is better in other areas. Therefore, in the embodiments of the present application, the paging resource is determined through the second indication information, so that the terminal device can select the paging resource corresponding to the appropriate spatial information set to monitor the paging message according to the distance between the terminal device and the network device, so that the paging message can be monitored at an appropriate time.

In some embodiments, the paging configuration information further includes second indication information, and in a case where the number of bits corresponding to the second indication information is a first number, if the second indication information is a first value, the paging resource is the first paging resource or the second paging resource; if the second indication information is a second value, the paging resource is the third paging resource; or,
In a case where the number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource;
Herein the first number is different from the second number.

In the embodiments of the present application, the number of bits corresponding to the second indication information may be the first number such as 1, and the number of bits corresponding to the second indication information may be the second number such as 2. Or, the number of bits corresponding to the second indication information may be other numbers other than the first number and the second number such as 3, 4, 5, and the like, which is not limited in the embodiments of the present application.

In the embodiments of the present application, the second indication information may indicate whether the spatial information set indicated by the first indication information is applied, and the second indication information may further indicate the first spatial information set, the second spatial information set, or the third spatial information set. The second indication information may be represented using different values. Here, the second indication information may be the first value, the second value, the third value, the fourth value, or the fifth value.

In the embodiments of the present application, the first value may indicate the first spatial information set or the second spatial information set, and the first value may also indicate that the spatial information set indicated by the first indication information is applied. The second value may indicate the third spatial information set, and the second value may also indicate that the spatial information set indicated by the first indication information is not applied.

In the embodiments of the present application, the third value may indicate the first spatial information set, the fourth value may indicate the second spatial information set, and the fifth value may indicate the third spatial information set. Or, the third value and the fourth value may also indicate that the spatial information set indicated by the first indication information is applied, and the fifth value may also indicate that the spatial information set indicated by the first indication information is not applied.

For example, when the number of bits corresponding to the second indication information is the first number, the first value may be 0, and the second value may be 1; or, the first value may be 1 and the second value may be 0.

For example, when the number of bits corresponding to the second indication information is the second number, the third value may be 00, the fourth value may be 01, and the fifth value may be 10. Alternatively, the third value may be 00, the fourth value may be 10, the fifth value may be 11. Alternatively, the third value may be 00, the fourth value may be 01, the fifth value may be 10, or the like. It should be noted that when the number of bits corresponding to the second indication information is the second number, there may be a plurality of combinations for the third value, the fourth value, and the fifth value, which is not exhaustive in this application.

For example, when the number of bits corresponding to the second indication information is another number such as 3, the third value may be 000, the fourth value may be 001, and the fifth value may be 100. Alternatively, the third value may be 000, the fourth value may be 010, the fifth value may be 101. Alternatively, the third value may be 010, the fourth value may be 010, the fifth value may be 100. It should be noted that when the number of bits corresponding to the second indication information is the third number, there may be a plurality of combinations for the third value, the fourth value, and the fifth value, which is not exhaustive in this application.

In the embodiments of the present application, in a case where the number of bits corresponding to the second indication information is the first number, if the second indication information is a first value, the first value indicates the first spatial information set or the second spatial information set, or the first value indicates that the spatial information set indicated by the first indication information is applied, and the paging resource is the first paging resource corresponding to the first spatial information set or the second paging resource corresponding to the second spatial information set; if the second indication information is the second value, the second value indicates the third spatial information set, and the paging resource is the third paging resource corresponding to the third spatial information set. In such a manner, due to the mobility of the terminal device, the communication performance of the terminal device communicating with the network device through the first device in the area covered by the first device is better, while the communication performance of the terminal device directly communicating with the network device is better in other areas. Therefore, in the embodiments of the present application, the paging resource is determined by combining the first indication information and the second indication information, so that the terminal device can select the paging resource corresponding to the appropriate spatial information set to monitor the paging message according to the distance between the terminal device and the network device, so that the paging message can be monitored at an appropriate time.

In the embodiments of the present application, in a case where the number of bits corresponding to the second indication information is the second number, if the second indication information is the third value, the third value indicates the first spatial information set, and the paging resource is the first paging resource corresponding to the first spatial information set; if the second indication information is the fourth value, the fourth value indicates the second spatial information set, and the paging resource is the second paging resource corresponding to the second spatial information set; if the second indication information is the fifth value, the fifth value indicates the third spatial information set, and the paging resource is the third paging resource corresponding to the second spatial information set. In such a way, due to the mobility of the terminal device, the communication performance of the terminal device communicating with the network device through the first device in the area covered by the first device is better, while the communication performance of the terminal device directly communicating with the network device is better in other areas. Therefore, in the embodiments of the present application, the paging resource is determined by combining the first indication information and the second indication information, so that the terminal device can select the paging resource corresponding to the appropriate spatial information set to monitor the paging message according to the distance between the terminal device and the network device, so that the paging message can be monitored at an appropriate occasion, thereby ensuring the accuracy of paging, reducing the probability of paging false alarm and reducing the energy consumption of the terminal device while improving the communication transmission quality.

In some embodiments, in a case where the second indication information indicates that the spatial information set indicated by the first indication information is applied, the second indication information is a first value or a third value;
in a case where the second indication information indicates that the spatial information set indicated by the first indication information is not applied, the second indication information is a second value, a fourth value, or a fifth value.

In the embodiments of the present application, the second indication information indicates whether the spatial information set indicated by the first indication information is applied. Here, when the second indication information indicates that the spatial information set indicated by the first indication information is applied, the second indication information is the first value or the third value. That is, the first value and the third value are used to indicate that the spatial information set indicated by the first indication information is applied. When the second indication information indicates that the spatial information set indicated by the first indication information is not applied, the second indication information is the second value, the fourth value, or the fifth value. That is, the second value, the fourth value, and the fifth value are used to indicate that the spatial information set indicated by the first indication information is not applied.

In the embodiments of the present application, in a case where the first indication information indicates the first spatial information set or the second spatial information set, if the second indication information indicates whether the spatial information set indicated by the first indication information is applied, and the second indication information is the first value or the third value (the first value and the third value indicate the spatial information set indicated by the first indication information is applied), the terminal device determines that the first paging resource corresponding to the first spatial information set is the paging resource, or determines that the paging resource corresponding to the second spatial information is the paging resource, based on the first indication information and the second indication information.

In the embodiments of the present application, in a case where the first indication information indicates the first spatial information set or the second spatial information set, if the second indication information indicates whether the spatial information set indicated by the first indication information is applied, and the second indication information is the second value, the fourth value, or the fifth value (the second value, the fourth value, and the fifth value indicate that the spatial information set indicated by the first indication information is not applied), the terminal device determines that the third paging resource corresponding to the third spatial information set is the paging resource based on the first indication information and the second indication information, and monitors a paging message based on the third paging resource.

In some embodiments, in a case that the first indication information indicates the first spatial information set, if the second indication information is the first value or the third value, the paging resource is the first paging resource; or,
In a case that the first indication information indicates the second spatial information set, if the second indication information is the first value or the fourth value, the paging resource is the second paging resource; if the second indication information is the third value, the paging resource is the first paging resource;
In a case that the first indication information indicates the first spatial information set or the second spatial information set, if the second indication information is the second value or the fifth value, the paging resource is the third paging resource.

In the embodiments of the present application, the first value, the second value, the third value, the fourth value, and the fifth value each indicates a spatial information set, and when the first value, the second value, the third value, the fourth value, and the fifth value each indicate a spatial information set, if the spatial information set indicated by the first indication information is completely different with the spatial information set indicated by the second indication information, the priority of the second indication information is higher than the priority of the first indication information, and the terminal device determines the paging resource based on the second indication information. If the spatial information set indicated by the first indication information and the spatial information set indicated by the second indication information are not completely consistent, the terminal device determines, based on the first indication information and the second indication information, that the paging resource corresponding to the spatial information sets indicated by both the first indication information and the second indication information is the paging resource.

In the first implementation, if the first indication information indicates the first spatial information set, the second indication information is the first value indicating the first spatial information set or the second spatial information set, or the second indication information is the third value indicating the first spatial information set, since the spatial information set indicated by the first indication information is not completely consistent with the spatial information set indicated by the second indication information, and both the first indication information and the second indication information indicate the first spatial information set, at this time, based on the first indication information and the second indication information, the terminal device determines that the first paging resource corresponding to the first spatial information set indicated by both the first indication information and the second indication information is a paging resource.

In the second implementation, if the first indication information indicates the second spatial information set, the second indication information is the first value indicating the first spatial information set or the second spatial information set, or the second indication information is the fourth value indicating the second spatial information set, since the spatial information set indicated by the first indication information is not completely consistent with the spatial information set indicated by the second indication information, and both the first indication information and the second indication information indicate the second spatial information set, at this time, the terminal device determines that the second paging resource corresponding to the second spatial information set indicated by both the first indication information and the second indication information is the paging resource, based on the first indication information and the second indication information.

In the third implementation, if the first indication information indicates the first spatial information set, or the first indication information indicates the second spatial information set, the second indication information is the second value indicating the third spatial information set, or the second indication information is the fifth value indicating the third spatial information set, since the spatial information set indicated by the first indication information is completely different from the spatial information set indicated by the second indication information, and the priority of the second indication information is higher than the priority of the first indication information, at this time, the terminal device determines that the third paging resource corresponding to the third spatial information set indicated by the second indication information is the paging resource based on the second indication information.

In some embodiments, in a case where the first value, the second value, the third value, the fourth value, and the fifth value each indicates a spatial information set, the determination of the paging resource is further associated with a configuration of the first spatial information set, a configuration of the second spatial information set.

In one implementation, if the configuration of the first spatial information set is associated with the number of pieces of actually transmitted spatial information included in the first spatial information set, then in a case that the first indication information indicates the first spatial information set, if the second indication information is the first value having a first number of bits (herein the first value indicates the first spatial information set or the second spatial information set), or if the second indication information is the third value having a second number of bits (herein the third value indicates the first spatial information set), then the terminal device determines that the first paging resource corresponding to the first spatial information set indicated by both the first indication information and the second indication information is the paging resource.

In another implementation, if the configuration of the second spatial information set is associated with the number of pieces of actually transmitted spatial information included in the second spatial information set, then in a case that the first indication information indicates the second spatial information set, if the second indication information is the first value having a first number of bits (herein the first value indicates the first spatial information set or the second spatial information set), or if the second indication information is the fourth value having a second number of bits (herein the fourth value indicates the second spatial information set), the terminal device determines that the second paging resource corresponding to the second spatial information set indicated by both the first indication information and the second indication information is the paging resource.

In yet another implementation, if the configuration of the second spatial information set is associated with the number of pieces of actually transmitted spatial information included in the second spatial information set, and the number of pieces of actually transmitted spatial information included in the third spatial information set, then, in a case where the first indication information indicates the second spatial information set, there are two cases for determining the paging resource as follows:
Case 1, if the second indication information is the first value having a first number of bits (herein the first value indicates the first spatial information set or the second spatial information set), or the second indication information is the fourth value having a second number of bits (herein the fourth value indicates the second spatial information set), the terminal device determines that the second paging resource corresponding to the second spatial information set indicated by both the first indication information and the second indication information is the paging resource.
Case 2: If the second indication information is the third value having a second number of bits (herein the third value indicates the first spatial information set), since the second spatial information set includes the second spatial information set and the third spatial information set in the configuration process, and the priority of the second indication information is higher than the priority of the first indication information, the terminal device determines that the first paging resource corresponding to the first spatial information set indicated by the second indication information is the paging resource.

The following description is given by taking the number of bits corresponding to the second indication information being 1, the first value being 0, and the second value being 1, and the number of bits corresponding to the second indication information being 2, the third value being 00, the fourth value being 01, and the fifth value being 10 as an example.

In a case that the second indication information is the first value, the second value, the third value, the fourth value and the fifth value which each indicates a spatial information set, if the first indication information indicates the first spatial information set and the second indication information is the first value (0) or the third value (00), since the first value (0) indicates the first spatial information set or the second spatial information set and the third value (00) indicates the first spatial information set, the terminal device determines that the paging resource is the first paging resource corresponding to the first spatial information set, based on the second indication information. If the second indication information is the second value (1) or the fifth value (10), since both the second value (1) and the fifth value (10) indicate the third spatial information set, the terminal device determines that the paging resource is the third paging resource corresponding to the third spatial information set, based on the second indication information.

In a case that the first value, the second value, the third value, the fourth value, and the fifth value each indicates a spatial information set, if the first indication information indicates the second spatial information set, the second indication information is the first value (0) or the fourth value (01), since the first value (0) indicates the first spatial information set or the second spatial information set, and the fourth value (01) indicates the second spatial information set, the terminal device determines that the paging resource is the second paging resource corresponding to the second spatial information set based on the second indication information. If the second indication information is the third value (00), since the third value (00) indicates the first spatial information set, the terminal device determines that the paging resource is the first paging resource corresponding to the first spatial information set, based on the second indication information. If the second indication information is the second value (1) or the fifth value (10), since both the second value (1) and the fifth value (10) indicate the third spatial information set, the terminal device determines that the paging resource is the third paging resource corresponding to the third spatial information set, based on the second indication information.

In a case where the second indication information is the first value, the second value, the third value, the fourth value, and the fifth value which each indicates whether the spatial information set indicated by the first indication information is applied, if the first indication information indicates the first spatial information set and the second indication information is the first value (0) or the third value (00), since the first value (0) and the third value (00) both indicate that the spatial information set indicated by the first indication information is applied, the terminal device determines that the paging resource is the first paging resource corresponding to the first spatial information set based on the second indication information; If the second indication information is the second value (1), the fourth value (01), or the fifth value (10), since the second value (1), the fourth value (01), and the fifth value (10) all indicate that the spatial information set indicated by the first indication information is not applied, the terminal device determines that the paging resource is the third paging resource corresponding to the third spatial information set based on the second indication information.

In a case where the second indication information is the first value, the second value, the third value, the fourth value, and the fifth value which each indicates whether the spatial information set indicated by the first indication information is applied, if the first indication information indicates the second spatial information set and the second indication information is the first value (0) or the third value (00), since the first value (0) and the third value (00) both indicate that the spatial information set indicated by the first indication information is applied, the terminal device determines that the paging resource is the second paging resource corresponding to the second spatial information set based on the second indication information. If the second indication information is the second value (1), the fourth value (01), or the fifth value (10), since the second value (1), the fourth value (01), and the fifth value (10) all indicate that the spatial information set indicated by the first indication information is not applied, the terminal device determines that the paging resource is the third paging resource corresponding to the third spatial information set based on the second indication information.

In some embodiments, in a case where the paging configuration information includes second indication information, the first indication information is carried in a specific signaling for a serving cell in which the terminal device is located, and the second indication information is carried in a radio resource control (RRC) release message or the specific signaling for the terminal device; or, the first indication information and the second indication information are carried in the RRC release message or the specific signaling for the terminal device;
In a case where the paging configuration information does not include the second indication information, the first indication information is carried in the RRC release message or the specific signaling for the terminal device.

In the embodiments of the present application, the paging configuration information includes first indication information and second indication information, and the first indication information and the second indication information may be carried in the same signaling or different signalings.

Here, the first indication information and the second indication information are carried in different signaling, which may be understood as that the first indication information may be carried in a specific signaling for the serving cell in which the terminal device is located, and the second indication information may be carried in an RRC release message or a specific signaling for the terminal device. It should be noted that, since the priority of the second indication information is higher than the priority of the first indication information, the second indication information may be carried in the RRC release message or the specific signaling for the terminal device, and the first indication information may be carried in the specific signaling for the serving cell in which the terminal device is located.

For example, the first indication information is carried in a system message such as a SIB1 message or a PDCCH-configcommon, and the second indication information may be carried in an RRC release message or a specific signaling for the terminal device, so that the accuracy of reception of the paging configuration information by the terminal device can be guaranteed.

Here, the first indication information and the second indication information are carried in the same signaling, which can be understood as that that both the first indication information and the second indication information are carried in the RRC release message or the specific signaling for the terminal device. For example, the first indication information and the second indication information may be carried in the RRC release message or the specific signaling for the terminal device, so that the accuracy of reception of the paging configuration information by the terminal device can be guaranteed.

In some embodiments, the paging configuration information further includes third indication information, the third indication information is used to configure a first timer. The operation 520 that the terminal device determines the paging resource based on the paging configuration information includes an operation that: the terminal device determines the paging resource based on the first indication information and the first timer.

In the embodiments of the present application, the first timer is used to determine different time ranges, herein the different time ranges include a range during which the first timer is running or a start time range, a time range during which the first timer is not running or an expired time range.

In the embodiments of the present application, the terminal device determines that the paging resource is the first paging resource, the second paging resource, or the third paging resource based on the first indication information for indicating the first spatial information set or the second spatial information set and the time range corresponding to whether the first timer is running. In such a way, when the first indication information indicates the spatial information set, the paging resource is determined by the spatial information set corresponding to different time ranges, so that the paging message is monitored on the paging resource.

In some embodiments, the operation that the paging resource is determined based on the first indication information and the first timer may be implemented by the following manners:
In a case that the first indication information indicates the first spatial information set or the second spatial information set, the paging resource is the first paging resource corresponding to the first spatial information set or the second paging resource corresponding to the second spatial information set during the running of the first timer; or, the paging resource is the third paging resource when the first timer is not running or expires.

In the embodiments of the present application, if the first indication information indicates the first spatial information set or the second spatial information set, and the first timer is in the running period or the time range in which the first timer is started, the terminal device determines that the paging resource is the first paging resource corresponding to the first spatial information set or the second paging resource corresponding to the second spatial information set, and monitors the paging message in the first paging resource or the second paging resource. In such a way, in a case where the first indication information indicates a spatial information set, the paging resource is determined through spatial information sets corresponding to different time ranges (i.e., a time range in which the timer is started or a time range in which the timer is not started or expires), so that a paging message is monitored on the paging resource.

In some embodiments, the operation that the paging resource is determined based on the first indication information and the first timer may be implemented in the following manner:
In a case where the first indication information indicates the first spatial information set, the paging resource is the first paging resource during running of the first timer; or, the paging resource is the third paging resource when the first timer is not running or expires;
In a case where the first indication information indicates the second spatial information set, the paging resource is the second paging resource during the running of the first timer; or, the paging resource is the third paging resource when the first timer is not running or expires.

In the embodiments of the present application, if the first indication information indicates the first spatial information set, and the first timer is in the running period or the time range in which the first timer is started, the terminal device determines that the paging resource is the first paging resource corresponding to the first spatial information set, and monitors the paging message on the first paging resource. If the first indication information indicates the first spatial information set, and the first timer is not running or expires, the terminal device determines that the paging resource is the third paging resource corresponding to the third spatial information set, and monitors the paging message on the third paging resource. Thus, in a case where the first indication information indicates the first spatial information set, the paging resource is determined based on spatial information sets corresponding to different time ranges (i.e., a time range in which the timer is started or a time range in which the timer is not started or expires), so that the paging message is monitored on the paging resource.

In the embodiments of the present application, if the first indication information indicates the second spatial information set, and the first timer is in the running period or the time range in which the first timer is started, the terminal device determines that the paging resource is the second paging resource corresponding to the second spatial information set, and monitors the paging message on the second paging resource. If the first indication information indicates the second spatial information set, and the first timer is not running or expires, the terminal device determines that the paging resource is the third paging resource corresponding to the third spatial information set, and monitors the paging message on the third paging resource. Thus, in a case where the first indication information indicates the second spatial information set, the paging resource is determined based on spatial information sets corresponding to different time ranges (i.e., a time range in which the timer is started or a time range in which a timer is not started or expires), so that the paging message is monitored on the paging resource.

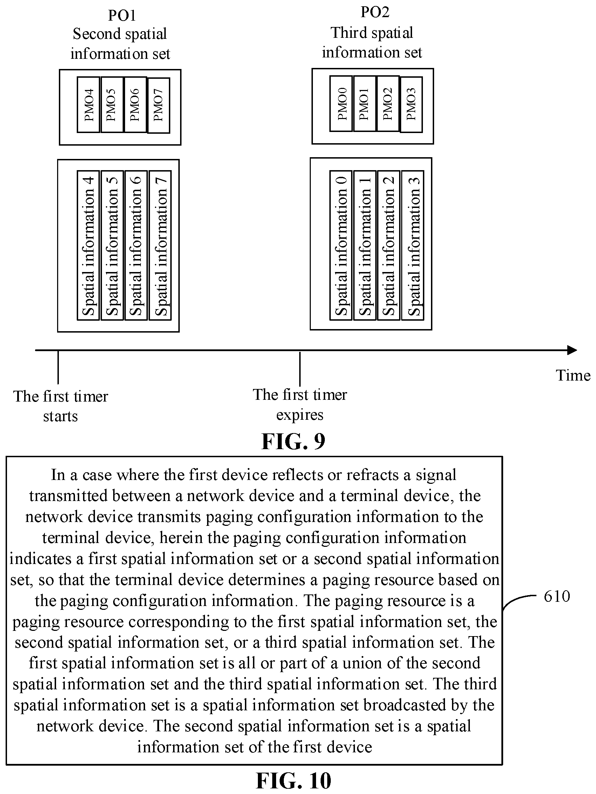

For example, as shown in FIG. 9, FIG. 9 is a schematic diagram of determining a spatial information set corresponding to one paging occasion (PO) based on a timer. Taking the first indication information indicating the second spatial information set as an example, during the running of the first timer, the spatial information set corresponding to the paging occasion PO1 is the second spatial information set. At this time, the terminal device monitors the paging message on the second paging resource corresponding to the second spatial information set. When the first timer does not run or expires, the spatial information set corresponding to the paging occasion PO2 is the third spatial information set. At this time, the terminal device monitors the paging message on the third paging resource corresponding to the third spatial information set, so that the terminal device can receive the paging message at an appropriate occasion based on the timer.

In some embodiments, the configuration of the first timer is associated with information related to mobility of the terminal device. The information related to the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the location of the terminal device represents that whether the terminal device is located in an area where the RIS provides services is considered in paging. If the terminal device is located in the area where the RIS provides services, the terminal device communicates with the network device through the first device. If the terminal device is not in the area where the RIS provides services, the terminal device communicates directly with the network device. That is, the location of the terminal device determines whether the terminal device communicates with the network device through the first device or the terminal device communicates directly with the network device. Therefore, a communication mode is selected according to the location of the terminal device, and different spatial information sets are dynamically allocated to different time ranges of the first timer according to the selected communication mode, so that the terminal device can monitor the paging message on an appropriate occasion. For example, when the terminal device is in position 1, it can communicate directly with the network device, that is, it is not necessary for the first device to forward a signal, and the paging resource may be a paging resource corresponding to the third spatial information set. When the terminal device moves to the position 2, because there is an obstacle between the terminal device and the network device, the terminal device communicates with the network device through the first device, the paging resource may be the paging resource corresponding to the first spatial information set or the second spatial information set.

In the embodiments of the present application, the speed of the terminal device determines that a movement time of the terminal device in an area of a service provided by the first device and/or the network device is considered in paging. The running time of the first timer may depend on the movement time used by the terminal device, thus different spatial information sets are dynamically allocated to different time ranges of the first timer, so that the terminal device can monitor the paging message on an appropriate occasion.

In the embodiments of the present application, the movement rule of the terminal device indicates that the movement trajectory rule of the terminal device in an area of a service provided by the first device or the network device is considered in paging. On the basis of the movement trajectory rule, a time range in which the terminal device can directly communicate with the network device can be determined, and a time range in which the terminal device communicates with the network device through the first device can be determined, thus different spatial information sets are dynamically allocated to different time ranges of the first timer, so that the terminal device can monitor the paging message on an appropriate occasion.

In the embodiments of the present application, the movement direction of the terminal device indicates that the movement direction of the terminal device in an area of a service provided by the first device or the network device is considered in paging. On the basis of the movement direction, a time range in which the terminal device can directly communicate with the network device can be determined, and a time range in which the terminal device communicates with the network device through the first device can be determined, thus different spatial information sets are dynamically allocated to different time ranges of the first timer, so that the terminal device can monitor the paging message on an appropriate occasion.

It should be noted that due to the setting of the first timer and the relatively large mobility of the terminal device, it is necessary to know the movement trajectory of the terminal device. On the basis of the movement trajectory, a time range in which the terminal device can directly communicate with the network device and a time range in which the terminal device can communicate with the network device through the first device are determined, so that different spatial information sets are dynamically allocated to different time ranges of the first timer.

It can be understood that due to mobility, the terminal device receives a paging message on a paging resource corresponding to the third spatial information set in a certain area, and receives a paging message on a paging resource corresponding to the first spatial information set or the second spatial information set in another area. For example, when the location of the terminal device is in the first area, the terminal device receives a paging message on a paging resource corresponding to the third SSB set. When the location of the terminal device is in the second area, the terminal device receives a paging message on a paging resource corresponding to the first SSB set or the second SSB set. The time it takes for the terminal device to move from the first area to the second area may be a time range of the first timer. The location of the terminal device is calculated by the terminal device through a downlink positioning method and reported to the network device, or is calculated by the network device through an uplink positioning method.

It can be understood that when the spatial information set is configured according to the first timer, since the terminal device corresponds to different spatial information sets in different time ranges, it is necessary to consider the influence of the mobility of the terminal device on the terminal device monitoring the paging message, so that the terminal device can receive the paging message on an appropriate occasion.

In some embodiments, if the paging configuration information includes the first indication information and the third indication information, the paging configuration information is carried in the RRC release message or the specific signaling for the terminal device.

In the embodiments of the present application, the RRC release message or the specific signaling for the terminal device is a specific message configured by the network device for the terminal device. The terminal device monitors the paging PDCCH based on the first indication information and the third indication information among the paging configuration information carried by the RRC Release message or the specific signaling of the terminal device.

In some embodiments, the paging configuration information further includes fourth indication information, the fourth indication information is used to configure a spatial information set pattern.

Here, the spatial information set pattern is associated with one or more of the following:
a radio frame (PF) of the terminal device;
a PO within the PF of the terminal device; and
time domain subframe configuration of the terminal device.

Here, different PFs in one discontinuous reception DRX cycle in the spatial information set pattern correspond to different spatial information sets. Different POs in one PF in one DRX cycle within the spatial information set pattern correspond to different spatial information sets. Different subframes in a system frame included in the spatial information set pattern correspond to different spatial information sets.

In the embodiments of the present application, the terminal device is provided with a plurality of radio frames (PFs) for receiving paging messages in one discontinuous period DRX cycle, and each radio frame (PF) corresponds to a plurality of paging occasions (PO).

In the embodiments of the present application, different PFs in one discontinuous reception DRX cycle in the spatial information set pattern may correspond to the same or different spatial information sets. That is to say, the spatial information sets corresponding to different PFs may be the same, or the spatial information sets corresponding to different PFs may also be different, but the spatial information sets corresponding to different POs in the same PF are the same.

For example, the number of PFs monitored by the terminal device in one DRX cycle is two. The spatial information set corresponding to the first PF is the second spatial information set, and the spatial information set corresponding to the second PF is the third spatial information set. That is, the spatial information sets corresponding to different PFs are different. The spatial information sets corresponding to different POs in the same PF are the same.

In another example, the number of PFs monitored by the terminal device in one DRX cycle is four. The spatial information set corresponding to the first PF is the first spatial information set, the spatial information set corresponding to the second PF is the second spatial information set, the spatial information set corresponding to the third PF is the third spatial information set, and the spatial information set corresponding to the fourth PF is the second spatial information set. That is, the spatial information sets corresponding to different PFs may be the same or different, and the spatial information sets corresponding to different POs in the same PF are the same.

In the embodiments of the present application, different POs in one PF in one DRX cycle with the spatial information set pattern may correspond to the same or different spatial information sets. That is, the spatial information sets corresponding to different POs may be the same, or the spatial information sets corresponding to different POs may also be different.

For example, the number of POs for the terminal device in one PF is two. That is, the terminal device monitors paging messages on two POs in one PF. The spatial information set corresponding to the first PO is the second spatial information set, and the spatial information set corresponding to the second PO is the third spatial information set, that is, the spatial information sets corresponding to different POs are different.

In another example, the number of POs for the terminal device in one PF is four. The spatial information set corresponding to the first PO is the first spatial information set, the spatial information set corresponding to the second PO is the second spatial information set, the spatial information set corresponding to the third PO is the third spatial information set, and the spatial information set corresponding to the fourth PO is the second spatial information set. That is, the spatial information sets corresponding to different POs may be the same or different.

In the embodiments of the present application, different subframes in the system frame included in the spatial information set pattern may correspond to the same or different spatial information sets. It should be noted that, one system frame includes a plurality of subframes, for example, 10 subframes. The spatial information set corresponding to the first part of the subframes in the system frame is the second spatial information set, and the spatial information set corresponding to the second part of the subframes is the third spatial information set. The first part of the subframes includes one subframe or a plurality of subframes in the system frame, and the second part of the subframes includes other subframes in the system frame except the first part of the subframes. Alternatively, the spatial information set corresponding to the first part of the subframes in the system frame is the first spatial information set, the spatial information set corresponding to the second part of the subframes is the second spatial information set, and the spatial information set corresponding to the third part of the subframes is the third spatial information set. Herein the first part of the subframes, the second part of the subframes, and the third part of the subframes are different, and the system frame includes the first part of the subframes, the second part of the subframes, and the third part of the subframes. Here, since the set of beams supported by the first device may be associated with a time domain subframe configuration, the set of beams supported by different one or more subframes may be different. By adjusting the spatial information set in a semi-static manner, signaling overhead may be reduced.

In some embodiments, the configuration of the spatial information set pattern is associated with information related to mobility of the terminal device. The information related to the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the location of the terminal device represents that whether the terminal device is located in an area where the RIS provides services is considered in paging. If the terminal device is located in the area where the RIS provides services, the terminal device communicates with the network device through the first device. If the terminal device is not in the area where the RIS provides services, the terminal device communicates directly with the network device. That is, the location of the terminal device determines whether the terminal device communicates with the network device through the first device or the terminal device communicates directly with the network device. Further, a communication mode is selected according to the location of the terminal device, and different spatial information sets are dynamically allocated to different time ranges of the first timer according to the selected communication mode based on the spatial information set pattern, so that the terminal device can monitor the paging message on an appropriate occasion. For example, when the terminal device is in position 1, it can communicate directly with the network device, that is, it is not necessary for the first device to forward a signal, and the paging resource may be a paging resource corresponding to the third spatial information set. When the terminal device moves to the position 2, because there is an obstacle between the terminal device and the network device, the terminal device communicates with the network device through the first device, the paging resource may be a paging resource corresponding to the first spatial information set or the second spatial information set.

In the embodiments of the present application, the speed of the terminal device determines that a movement time of the terminal device in an area of a service provided by the first device and/or the network device is considered in paging. The movement time of the terminal device can determine the configuration of the spatial information set pattern, thus different spatial information sets are dynamically allocated based on the spatial information set pattern, so that the terminal device can monitor the paging message on an appropriate occasion.

In the embodiments of the present application, the movement rule of the terminal device indicates that the movement trajectory rule of the terminal device in an area of a service provided by the first device or the network device is considered in paging. On the basis of the movement trajectory rule, a time range in which the terminal device can directly communicate with the network device can be determined, and a time range in which the terminal device communicates with the network device through the first device can be determined, thus different spatial information sets are dynamically allocated based on the spatial information pattern, so that the terminal device can monitor the paging message on an appropriate occasion.

In the embodiments of the present application, the movement direction of the terminal device indicates that the movement direction of the terminal device in an area of a service provided by the first device or the network device is considered in paging. On the basis of the movement direction, a time range in which the terminal device can directly communicate with the network device can be determined, and a time range in which the terminal device communicates with the network device through the first device can be determined, thus different spatial information sets are dynamically allocated based on the spatial information pattern, so that the terminal device can monitor the paging message on an appropriate occasion.

It should be noted that, because the mobility of the terminal device is relatively large, it is necessary to know the movement trajectory of the terminal device. On the basis of the movement trajectory, a time range in which the terminal device can directly communicate with the network device and a time range in which the terminal device communicates with the network device through the first device are determined. Therefore, different spatial information sets are dynamically allocated based on the spatial information set pattern, so that the terminal device can monitor the paging message on an appropriate occasion.

It can be understood that when the spatial information set is configured according to the spatial information set pattern, the terminal device corresponds to different spatial information sets at different times due to mobility. Exemplarily, when the location of the UE is in the first area, the SSB set pattern is the third SSB set, when the location of the UE is in the second area, the SSB set pattern is the first SSB set or the second SSB set. The location of the UE is calculated by the UE through the downlink positioning method and reported to the network device, or is calculated by the network device through the uplink positioning method. Therefore, it is necessary to consider the influence of the mobility of the terminal device on the terminal device monitoring the paging message, so that the terminal device can receive the paging message on an appropriate occasion.

In some embodiments, if the paging configuration information includes the first indication information and the fourth indication information, the paging configuration information is carried in the RRC release message or the specific signaling for the terminal device.

In the embodiments of the present application, the RRC release message or the specific signaling for the terminal device is a specific message configured by the network device for the terminal device. The terminal device monitors the pageing PDCCH based on the first indication information and the fourth indication information among the paging configuration information carried by the RRC release message or the specific signaling of the terminal device.

In some embodiments, before the terminal device receives the paging configuration information transmitted by the network device in the operation 510, the terminal device reports the first information to the network device. The paging configuration information is determined based on the first information.

The first information includes one or more of the following:
information related to mobility of the terminal device; and
a measurement result of a serving cell in which the terminal device is located are obtained based on the measurement configuration information transmitted by the network device.

In the embodiments of the present application, the information related to the the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the measurement result is a result obtained by the terminal device measuring the service cell in which the terminal device is located based on the measurement configuration information transmitted by the network device. The measurement result may include one or more of the following measurement parameters: a channel measurement result, a reference signal reception power, an reference signal reception quality, a signal-to-noise ratio, a signal to interference plus noise ratio and other parameters, which are not limited in the embodiments of the present application.

In the embodiments of the present application, the information related to the mobility such as the location of the terminal device, the speed of the terminal device, the movement rule of the terminal device, the movement direction of the terminal device, and the timestamp corresponding to the location of the terminal device can provide parameters for the network device to configure the paging configuration information. For example, the network device determines whether the terminal device is located in an area where the RIS provides services according to the location of the terminal device. If the terminal device is located in the area where the RIS provides services, the paging configuration information configured by the network device for the terminal device indicates the second spatial information set, so that the terminal device monitors the paging message on an appropriate occasion according to the paging configuration information.

FIG. 10 shows a paging method provided by an embodiment of the present application, which is applied to a network device, and the method may include:
In Operation 610, in a case where the first device reflects or refracts a signal transmitted between a network device and a terminal device, the network device transmits paging configuration information to the terminal device, herein the paging configuration information indicates a first spatial information set or a second spatial information set, so that the terminal device determines a paging resource based on the paging configuration information. The paging resource is a paging resource corresponding to the first spatial information set, the second spatial information set, or a third spatial information set. The first spatial information set is all or part of a union of the second spatial information set and the third spatial information set. The third spatial information set is a spatial information set broadcasted by the network device. The second spatial information set is a spatial information set for the first device.

In the embodiments of the present application, a piece of spatial information in the spatial information set may be beam information corresponding to the paging resource. The spatial Information set may be any one of an SSB set, a Channel State Information-Reference Signal (CSI-RS) resource set, a Channel Sounding Reference Signal (SRS) resource set, a transmission configuration indication (TCI) state set, a unified TCI state set, a downlink spatial relation filter set, an uplink spatial relation filter set, and a Quasi Co-Location (QCL) relation.

Here, paging includes a PDCCH scrambled by a P-RNTI, and a PDSCH scheduled by the PDCCH. When the terminal device is in a RRC idle state or an inactive state, the network device may page the terminal device through a paging message, or notify the terminal device of information such as message change, earthquake and tsunami, public warning, etc. through a short message. In one implementation, a paging message may be transmitted in a PDSCH, and a short message may be 8 bits in a PDCCH.

In the embodiments of the present application, the paging configuration information indicates information of the first spatial information set or the second spatial information set, or, the paging configuration information may also indicate the third spatial information set.

In the embodiments of the present application, the third spatial information set may be a spatial information set broadcasted by the network device. Here, the spatial information set broadcasted by the network device may be a spatial information set configured through the higher level parameter ssb-PositionsInBurst in the system information block (SIB1).

In the embodiments of the present application, the first device may be an intelligent surface device, such as an RIS device. The first device may realize signal forwarding between the terminal device and the network device.

Here, the spatial information set of the first device may be understood as a spatial information set supported by the first device or a spatial information set associated with the first device. The first device is configured to forward a signal transmitted by the network device to the terminal device, or to forward a signal transmitted by the terminal device to the network device, the forwarding includes performing reflection or refraction, to change the direction of transmission of the signal.

It will be appreciated that the signal may be information carried by an uplink channel transmitted by the network device (forwarded by the first device) to the terminal device, i.e. the signal may be an uplink reference signal. The signal may also be information carried by a downlink channel transmitted by the terminal device (forwarded by the first device) to the network device, that is, the signal may be a downlink reference signal. The spatial information set belongs to the downlink reference signal.

It will be appreciated that the network device may transmit the third spatial information set directly to the terminal device. Or, the network device may also transmit the second spatial information set to the terminal device through the first device forwarding.

It should be noted that, for a terminal device that directly communicates with a network device, the spatial information set corresponding to one paging occasion (PO) may be a third spatial information set broadcasted by the network device. For a terminal device communicating with a network device through a first device, the spatial information set corresponding to one paging occasion (PO) may be the second spatial information set, or the first spatial information set, that is, all or part of the union of the second spatial information set and the third spatial information set.

In the embodiments of the present application, the first spatial information set is all of the union of the second spatial information set and the third spatial information set, which may mean that the first spatial information set includes spatial information in the second spatial information set and spatial information in the third spatial information set.

In the embodiments of the present application, the first spatial information set is a part of the union of the second spatial information set and the third spatial information set, which may mean that the first spatial information set includes a part of spatial information in the second spatial information set, or that the first spatial information set includes a part of spatial information in the third spatial information set, or that the first spatial information set includes a part of spatial information in the second spatial information set and a part of spatial information in the third spatial information set, and this is not specifically limited by the present application.

It should be noted that the first spatial information set, the second spatial information set, and the third spatial information set are not completely the same. For example, the spatial information included in the first spatial information set, the second spatial information set, and the third spatial information set is not completely the same. For example, the number of pieces of spatial information included in the first spatial information set, the second spatial information set, and the third spatial information set is not completely the same, and/or the signals corresponding to the spatial information contained in the first spatial information set, the second spatial information set, and the third spatial information set are not completely the same.

In the embodiments of the present application, the spatial information set corresponding to one paging occasion (PO) may be the first spatial information set, the second spatial information set, or the third spatial information set.

In the embodiments of the present application, the paging resource may be paging resources corresponding to a spatial information set corresponding to one paging occasion (PO). That is, the paging resource may be paging resources corresponding to one of the first spatial information set, the second spatial information set, and the third spatial information set. It should be noted that the paging resource may be configured by the network device, and the paging resource may be placed in the paging configuration information. Or, the paging resource may be configured through other signaling. The present application is not particularly limited to this.

It can be understood that in the embodiments of the present application, the network device can directly communicate with the terminal device, the network device can also communicate with the terminal device through the first device. When the network device communicates with the terminal device through the first device, the network device transmits paging configuration information for indicating the first spatial information set or the second spatial information set to the terminal device, and determines a paging resource based on the paging configuration information. In this way, after determining the paging resource, the terminal device uses the paging resource to monitor the PDCCH scrambled by the P-RNTI at PDCCH monitoring occasions corresponding to the spatial information in the indicated spatial information set. Herein the number of PDCCH monitoring occasions included in the PO is associated with the number of pieces of spatial information in the indicated spatial information set. In this way, after introducing the intelligent surface device, the terminal device can determine that the network device and the terminal device establish a communication link through the intelligent surface device based on the paging configuration information for indicating the first spatial information set or the second spatial information set transmitted by the network device. Further, the terminal device uses the communication link to enable itself to monitor paging on an appropriate occasion, thereby ensuring the accuracy of paging, reducing the probability of paging false alarm and reducing the energy consumption of the terminal device while improving the communication transmission quality.

In some embodiments, the first spatial information set is all of the union of the second spatial information set and the third spatial information set, which may include that: the number of pieces of spatial information in the first spatial information set is greater than the number of pieces of spatial information in the second spatial information set, and/or the number of pieces of spatial information in the first spatial information set is greater than the number of pieces of spatial information in the third spatial information set.

In the embodiments of the present application, since the first spatial information set is all of the union of the second spatial information set and the third spatial information set, the first spatial information set may include the second spatial information set and the third spatial information set. In general, the second spatial information set and the third spatial information set are not empty. Then, in a case where the first spatial information set includes the second spatial information set, the number of pieces of spatial information in the first spatial information set is greater than the number of pieces of spatial information in the second spatial information set. In a case where the first spatial information set includes the third spatial information set, the number of pieces of spatial information in the first spatial information set is larger than the number of pieces of spatial information in the third spatial information set.

In some embodiments, the first spatial information set is all or part of the union of the second spatial information set and the third spatial information set, which may include that the number of pieces of spatial information in the first spatial information set is equal to or less than the sum of the number of pieces of spatial information in the second spatial information set and the number of pieces of spatial information in the third spatial information set.

It should be noted that the second spatial information set and the third spatial information set are not completely the same. That is, the spatial information in the second spatial information set and the spatial information in the third spatial information set are completely different, and a part of the spatial information in the second spatial information set and a part of the spatial information in the third spatial information set are the same. When the first spatial information set is all or part of the union of the second spatial information set, the size relationship between the number of pieces of spatial information in the first spatial information set and the sum of the number of pieces of spatial information in the second spatial information set and the number of pieces of spatial information in the third spatial information set include the following:
In a case where the first spatial information set is all of the union set of the second spatial information set, if the spatial information in the second spatial information set and the spatial information in the third spatial information set are completely different, the number of pieces of spatial information in the first spatial information set is equal to the sum of the number of pieces of spatial information in the second spatial information set and the number of pieces of spatial information in the third spatial information set.

In a case where the first spatial information set is all of the union set of the second spatial information set, if the spatial information in the second spatial information set and the spatial information in the third spatial information set are not completely the same, the number of pieces of spatial information in the first spatial information set is smaller than the sum of the number of pieces of spatial information in the second spatial information set and the number of pieces of spatial information in the third spatial information set.

In a case where the first spatial information set is a part of the union of the second spatial information set, the number of pieces of spatial information in the first spatial information set is smaller than the sum of the number of pieces of spatial information in the second spatial information set and the number of pieces of spatial information in the third spatial information set regardless of whether the spatial information in the second spatial information set and the spatial information in the third spatial information set are completely different or not completely the same.

In some embodiments, different spatial information sets correspond to different paging resources, and the different spatial information sets include one or more of the following: the first spatial information set, the second spatial information set, and the third spatial information set. Different spatial information sets correspond to different paging resources, which includes that: the first spatial information set corresponds to first paging resources, the second spatial information set corresponds to second paging resources, and the third spatial information set corresponds to third paging resources.

In the embodiments of the present application, the first paging resources may be used by the terminal device to monitor the PDCCH scrambled by the P-RNTI on the PDCCH monitoring occasions corresponding to the spatial information in the first spatial information set under the paging occasion (PO). Herein the number of PDCCH monitoring occasions included in the PO is associated with the number of pieces of spatial information in the first spatial information set. For example, if the number of pieces of spatial information included in the first spatial information set is Y, the PDCCH scrambled by the P-RNTI is monitored on Y' PDCCH monitoring occasions corresponding to Y spatial information. Here, Y and Y' may be the same, or Y and Y' may be different. It should be noted that, in a case where X PDCCH monitoring occasions are configured for each oieces of spatial information in the paging occasion (PO), if X =1, Y and Y' are the same; if X> 1, then Y and Y 'are different, and the relationship between Y and Y' is Y'=Y×X.

In the embodiments of the present application, the second paging resources may be used by the terminal device to monitor the PDCCH scrambled by the P-RNTI on the PDCCH monitoring occasions corresponding to the spatial information included in the second spatial information set under the paging occasion (PO). Herein the number of PDCCH monitoring occasions included in the PO is associated with the number of pieces of spatial information in the second spatial information set. For example, if the number of pieces of spatial information included in the second spatial information set is P, the PDCCH scrambled by the P-RNTI is monitored on the P' PDCCH monitoring occasions corresponding to the P spatial information. Here, P and P' may be the same, or P and P' may be different. It should be noted that, in a case where X PDCCH monitoring occasions are configured for each spatial information in the paging occasion (PO), if X =1, P and P' are different; if X> 1, then P and P 'are not the same, and the relationship between P and P' is P' = P×X.

In the embodiments of the present application, the third paging resources may be used by the terminal device to monitor the PDCCH scrambled by the P-RNTI on PDCCH monitoring occasions corresponding to the spatial information included in the third spatial information set under the paging occasion (PO). Herein the number of PDCCH monitoring occasions included in the PO is associated with the number of pieces of spatial information in the third spatial information set. For example, if the number of pieces of spatial information included in the third spatial information set is S, the PDCCH scrambled by the P-RNTI is monitored on S' PDCCH monitoring occasions corresponding to S spatial information. Here, S and S' may be the same, and P and P' may be different. It should be noted that, in a case where X PDCCH monitoring occasions are configured for each spatial information in the paging occasion (PO), if X =1, S and S' are the same; if X> 1, then S and S 'are not different, and the relationship between S and S' is S' = S×X.

In some embodiments, the first paging resource, the second paging resource, and the third paging resource satisfy at least one of the following:
The first paging resource includes the second paging resource and the third paging resource;
PDCCH monitoring occasions corresponding to the second paging resource do not overlap in the time domain with PDCCH monitoring occasions corresponding to the third paging resource ;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain;
The first paging resource, the second paging resource, and the third paging resource are indicated by being scrambled using different paging radio network temporary identifiers (P-RNTIs).

In the embodiments of the present application, since the first spatial information set may include the second spatial information set and the third spatial information set, the first paging resource corresponding to the first spatial information set may include the second paging resource corresponding to the second spatial information set and the third paging resource corresponding to the third spatial information set.

In the embodiments of the present application, by being distinguished with the time domain resource, the PDCCH monitoring occasions corresponding to the second paging resource and the PDCCH monitoring occasions corresponding to the third paging resource do not overlap in the time domain.

In the embodiments of the present application, by being distinguished with the time domain resource, the PDCCH monitoring occasions corresponding to the first paging resource, the PDCCH monitoring occasions corresponding to the second paging resource, and the PDCCH monitoring occasions corresponding to the third paging resource are not overlapped in the time domain.

In the embodiments of the present application, by being distinguished with the frequency domain resource, the PDCCH monitoring occasions corresponding to the first paging resource, the PDCCH monitoring occasions corresponding to the second paging resource, and the PDCCH monitoring occasions corresponding to the third paging resource are not overlapped in the frequency domain.

In the embodiments of the present application, the first paging resource, the second paging resource, and the third paging resource can be distinguished by using different P-RNTIs. That is, the first paging resource, the second paging resource, and the third paging resource are respectively indicated by being scrambled using different P-RNTIs, so that the terminal device monitors the PDCCH scrambled by the P-RNTI corresponding to the paging resource in the PO.

In some embodiments, the configuration of the first spatial information set and the second spatial information set may be implemented as follows,
The configuration of the first spatial information set is a first number of physical downlink control channel (PDCCH) monitoring occasions configured by the network device configures for one PO corresponding to the terminal device based on the paging configuration information, the first number is associated with the number of pieces of actually transmitted spatial information included in the first spatial information set;
The configuration of the second spatial information set is a second number of PDCCH monitoring occasions configured by the network device for one PO corresponding to the terminal device based on the paging configuration information. The second number is associated with the number of pieces of actually transmitted spatial information included in the second spatial information set. Or, the configuration of the second spatial information set is that a third number of PDCCH monitoring occasions configured by the network device for one PO corresponding to the terminal device based on the paging configuration information. The third number is associated with the number of pieces of actually transmitted spatial information included in the second spatial information set and the number of pieces of actually transmitted spatial information included in the third spatial information set, respectively.

In the embodiments of the present application, for the configuration of the first spatial information set, the first number of PDCCH monitoring occasions corresponding to one paging occasion (PO) may be determined based on the number of pieces of actually transmitted spatial information included in the first spatial information set, and/or the number of PDCCH monitoring occasions for each piece of spatial information configured in the paging occasion.

In one implementation, for the configuration of the first spatial information set, when the terminal device communicates with the network device through the first device , the network device, for one paging occasion (PO) corresponding to the terminal device, the first number Y' of PDCCH monitoring occasions corresponding to the paging occasion (PO) is associated with the number Y of pieces of actually transmitted spatial information included in the first spatial information set and the number X of PDCCH monitoring occasions for each piece of spatial information among the paging occasion (PO). Exemplarily, the first number Y' may be Y×X, where Y is the number of pieces of actually transmitted spatial information included in the first spatial information set, and X is the number of PDCCH monitoring occasions for each piece of spatial information in the paging occasion (PO).

In the embodiments of the present application, the configuration of the second spatial information set may be based on the number of pieces of actually transmitted spatial information included in the second spatial information set, or may be based on the number of pieces of actually transmitted spatial information included in the second spatial information set and the number of pieces of actually transmitted spatial information included in the third spatial information set.

Here, if the configuration of the second spatial information set is based on the number of pieces of actually transmitted spatial information included in the second spatial information set, for the configuration of the second spatial information set, the network device, for one paging occasion (PO) corresponding to the terminal device, the second number of PDCCH monitoring occasions corresponding to one paging occasion (PO) may be determined based on the number of pieces of actually transmitted spatial information included in the second spatial information set, and/or determined based on the number of PDCCH monitoring occasions for each piece of spatial information configured in the paging occasion.

In one implementation, for the configuration of the second spatial information set, when the terminal device communicates with the network device through the first device, the network device, for one paging occasion (PO) corresponding to the terminal device, the second number P' of PDCCH monitoring occasions corresponding to the paging occasion (PO) is associated with the number P of pieces of actually transmitted spatial information included in the second spatial information set and the number X of PDCCH monitoring occasions for each piece of spatial information among the paging occasion (PO). Exemplarily, the second number P' may be P×X, where P is the number of pieces of actually transmitted spatial information contained in the second spatial information set, and X is the number of PDCCH monitoring occasions for each piece of spatial information in the paging occasion (PO).

Here, if the configuration of the second spatial information set is based on the number of pieces of actually transmitted spatial information included in the second spatial information set and the number of pieces of actually transmitted spatial information included in the third spatial information set, for the configuration of the second spatial information set, the network device, for one paging occasion (PO) corresponding to the terminal device, the second number of PDCCH monitoring occasions corresponding to the paging occasion (PO) may be determined based on the number of pieces of actually transmitted spatial information included in the second spatial information set and the number of pieces of actually transmitted spatial information included in the third spatial information set, and/or determined based on the number of PDCCH monitoring occasions for each piece of spatial information configured in the paging occasions.

In one implementation, for the configuration of the second spatial information set, the network device, for one paging occasion (PO) corresponding to the terminal device, the third number M of PDCCH monitoring occasions corresponding to the paging occasion (PO) is associated with the number P of pieces of actually transmitted spatial information included in the second spatial information set, the number S of pieces of actually transmitted spatial information included in the second spatial information set, and the number X of PDCCH monitoring occasions for each piece of spatial information in the paging occasion (PO). Exemplarily, the third number M may be (S + P) ×X, where P is the number of pieces of actually transmitted spatial information included in the second spatial information set, S is the number of pieces of actually transmitted spatial information included in the third spatial information set, and X is the number of PDCCH monitoring occasions for each piece of spatial information in the paging occasion (PO).

In some embodiments, the operation that the terminal device determines the paging resource based on the paging configuration information may also be realized by the following operations: when a link quality between the terminal device and the network device meets a preset quality condition, the terminal device determines the paging resource based on the paging configuration information.

In the embodiments of the present application, the link quality may indicate a link quality of a link between the terminal device and the network device, and the link quality may be at least one of a Reference Signal Receiving Power (RSRP), a Reference Signal Receiving Quality (RSRQ), a Signal Noise Ratio (SNR), Signal to Interference plus Noise Ratio (SINR) and channel state information (CSI).

In the embodiments of the present application, the preset quality condition may be that the link quality of between the terminal device and the network device is less than or equal to a quality threshold; or the preset quality condition may be that the link quality of the link used for communication through the first device is greater than or equal to a quality threshold. The quality threshold may be configured by the network device, or agreed in a protocol, or predefined. Here, the link quality may also be referred to as channel quality or channel transmission quality.

In other embodiments of the present application, when the link quality between the terminal device and the network device is less than or equal to the quality threshold, it indicates that the channel transmission quality between the terminal device and the network device is poor. Alternatively, when the link quality for communication between the terminal device and the network device through the first device is greater than or equal to the quality threshold, it indicates that the channel transmission quality for communication between the terminal device and the network device through the first device is good. At this time, it can be considered that the terminal device needs to communicate with the network device through the forwarding of the first device. Further, based on the paging configuration information, the terminal device determines the paging resource as the paging resource corresponding to the spatial information set indicated by the paging configuration information. At this time, the terminal device uses the paging resource corresponding to the indicated spatial information to monitor the PDCCH scrambled by the P-RNTI on the PDCCH monitoring occasions corresponding to the indicated spatial information set. In such a way, according to the link quality between the terminal device and the network device, if the link quality when the terminal device directly communicates with the network device is poor, or if the link quality when the network device and the terminal device communicate through the first device is good, the signal transmitted between the network device and the terminal device is reflected or refracted by the first device, so that the communication transmission quality and the accuracy of paging can be guaranteed.

In the embodiments of the present application, when the terminal device determines that the link quality between the terminal device and the network device is greater than the quality threshold, it indicates that the channel transmission quality between the terminal device and the network device is good, at this time, it can be considered that the terminal device directly communicates with the network device without being forwarded by the first device. Further, further, even if the paging configuration information indicates the first spatial information set or the second spatial information set, the terminal device can still determine the paging resource as the third paging resource corresponding to the third spatial information set broadcasted by the network device. At this time, the terminal device monitors the PDCCH scrambled by the P-RNTI by using the PDCCH monitoring occasions corresponding to the third paging resource. In such a way, according to the link quality between the terminal device and the network device, if the link quality when the terminal device directly communicates with the network device is good, the terminal device directly communicates with the network device, thereby ensuring the communication transmission quality and the accuracy of paging.

In some embodiments, the link quality between the terminal device and the network device determined by the terminal device may be a link quality measured by the terminal device from a downlink reference signal, or a link quality measured by the network device from an uplink reference signal.

In the embodiments of the present application, the link quality transmitted by the network device may be a measurement result of the service cell in which the terminal device is located obtained by the terminal device based on the measurement configuration information transmitted by the network device.

In the embodiments of the present application, the terminal device determines the link quality based on the paging configuration message, which can be understood as that the terminal device determines the link quality by determining at least one of a reference signal reception power, a reference signal reception quality, a signal-to-noise ratio, and a signal to interference plus noise ratio of the received paging configuration message.

In some embodiments, the paging configuration information includes first indication information, the first indication information indicates the first spatial information set or the second spatial information set, and the paging resource is the first paging resource or the second paging resource.

In the embodiments of the present application, the network device configures the first indication information in the paging configuration information to indicate the first spatial information set or the second spatial information set, and the terminal device determines the paging resource based on the first indication information used to indicate the first spatial information set or the second spatial information set

Here, the paging resource may be determined by the terminal device based only on the first indication information.

In the embodiments of the present application, the first indication information indicates the first spatial information set or the second spatial information set, which represents that the terminal device communicates with the network device through the first device, that is, the spatial information set for communication between the terminal device and the first device is included in the first spatial information set or the second spatial information set. The terminal device monitors the PDCCHs scrambled by the P-RNTI according to PDCCH monitoring occasions corresponding to the first spatial information set or the second spatial information set indicated by the first indication information. Herein the number of PDCCH monitoring occasions corresponds to the number of pieces of spatial information in the spatial information set indicated by the first indication information. In such a way, after the intelligent surface device is introduced, the terminal device can determine, only based on the first indication information in the paging configuration information, that the network device and the terminal device establish a communication link through the intelligent surface device. Further, the terminal device uses the communication link so that it can monitor the paging on an appropriate occasion, thereby ensuring the accuracy of the paging, reducing the probability of paging false alarm, and reducing the energy consumption of the terminal device while improving the communication transmission quality.

In some embodiments, in a case that the first indication information indicates the first spatial information set, the paging resource is a first paging resource corresponding to the first spatial information set.

In the embodiments of the present application, when the terminal device communicates with the network device through the first device, if the first indication information in the paging configuration information transmitted by the network device indicates the first spatial information set, the terminal device may determine that the spatial information set forwarded by the first device is included in the first spatial information set, and determine that the paging resource is the first paging resource corresponding to the first spatial information set. At this time, the terminal device monitors the PDCCH scrambled by the P-RNTI according to the PDCCH monitoring occasions corresponding to the first spatial information set indicated by the first indication information. In such a way, after the smart surface device is introduced, when the first indication information indicates the first spatial information set, since the first spatial information set is part or all of the union of the second spatial information set forwarded by the smart surface device to the terminal device and the third spatial information set broadcasted by the network device, and the number of PDCCH monitoring occasions corresponds to the number of pieces of spatial information in the first spatial information set indicated by the first indication information, the terminal device can monitor the paging message on an appropriate occasions by increasing the number of times of blind detection, thereby ensuring the accuracy of paging, reducing the probability of paging false alarm, and reducing the energy consumption of the terminal device while improving the communication transmission quality.

It should be noted that, since the terminal device communicates with the network device through the first device, the terminal device needs to monitor the PDCCHs scrambled by the P-RNTI repeatedly transmitted based on the spatial information in the second spatial information set included in the first spatial information set. However, since the first spatial information set also includes the third spatial information set, the terminal device also needs to monitor the PDCCHs scrambled by the P-RNTI repeatedly transmitted based on the spatial information in the third spatial information set. Therefore, in the monitoring process of the terminal device, the number of blind detections is increased.

For example, as shown in FIG. 6, FIG. 6 is a schematic diagram of a first spatial information set corresponding to one paging occasion (PO). For example, the first spatial information set is a union of the second spatial information set and the third spatial information set, the second spatial information set includes spatial information 0, spatial information 1, spatial information 2, and spatial information 3, and the third spatial information set includes spatial information 4, spatial information 5, spatial information 6, and spatial information 7. The spatial information 0, spatial information 1, spatial information 2, and spatial information 3 are different from the spatial information 4, spatial information 5, spatial information 6, and spatial information 7. Then, the first spatial information set includes spatial information 0, spatial information 1, spatial information 2, spatial information 3, spatial information 4, spatial information 5, spatial information 6, and spatial information 7. Each piece of spatial information corresponds to a PDCCH monitoring occasion (PMO). That is, spatial information 0 corresponds to PMO0, spatial information 1 corresponds to PMO1, spatial information 2 corresponds to PMO2, spatial information 3 corresponds to PMO3, spatial information 4 corresponds to PMO4, spatial information 5 corresponds to PMO5, spatial information 6 corresponds to PMO6, and spatial information 7 corresponds to PMO7. Referring to FIG. 6, the paging resource corresponding to the PO monitored by the terminal device may be the first paging resources corresponding to the first spatial information set. That is, the terminal device blindly detects the PDCCHs scrambled by the P-RNTI which correspond to a paging occasion (PO) and are repeatedly transmitted based on each piece of spatial information in the first spatial information set to monitor the paging.

In some embodiments, in a case where the first indication information indicates the second spatial information set, the paging resource is the second paging resource corresponding to the second spatial information set.

In the embodiments of the present application, if the first indication information in the paging configuration information transmitted by the network device indicates the second spatial information set, it indicates that the network communicates with the terminal device through the first device. When receiving the paging configuration information, the terminal device may determine that the spatial information set forwarded by the first device is the second spatial information set, and determine that the paging resource is a second paging resource corresponding to the second spatial information set. At this time, the terminal device monitors the PDCCH scrambled by the P-RNTI according to the PDCCH monitoring occasions corresponding to the second spatial information set indicated by the first indication information. Herein the number of PDCCH monitoring occasions corresponds to the number of pieces of spatial information in the second spatial information set indicated by the first indication information. In such a way, after the smart surface device is introduced, when the first indication information indicates the second spatial information set, since the second spatial information set is the second spatial information set forwarded by the smart surface device to the terminal device, and the number of PDCCH monitoring occasions corresponds to the number of pieces of spatial information in the second spatial information set indicated by the first indication information, the terminal device can reduce unnecessary blind detection compared with the first indication information indicating the first spatial information set. Also, the terminal device can also enable itself to monitor the paging message on an appropriate occasion, which ensures the accuracy of paging, reduces the probability of paging false alarm, and reduces the energy consumption of the terminal device while improving the communication transmission quality and not increasing the number of blind detection times.

It should be noted that, since the terminal device communicates with the network device through the first device, the terminal device only needs to detect the PDCCHs scrambled by the P-RNTI repeatedly transmitted based on the spatial information in the second spatial information set corresponding to the first device to determine the paging message, and does not need to additionally detect the PDCCH monitoring occasions corresponding to other spatial information; Therefore, the terminal device does not need to increase the number of blind detections of the terminal device during the monitoring process, thereby reducing the number of unnecessary pages received by the terminal device.

By way of example, referring to FIG. 7, FIG. 7 is a schematic diagram showing a second spatial information set corresponding to one paging occasion (PO). Herein, by way of example, the second spatial information set includes spatial information 4, spatial information 5, spatial information 6, and spatial information 7, each of which corresponds to one PDCCH monitoring occasion (PMO). That is, spatial information 4 corresponds to PMO4, spatial information 5 corresponds to PMO5, spatial information 6 corresponds to PMO6, and spatial information 7 corresponds to PMO7. Referring to FIG. 7, the paging resource corresponding to the PO detected by the terminal device may be the second paging resources corresponding to the second spatial information set, that is, the terminal device blindly detects the PDCCHs scrambled by the P-RNTI which correspond to one paging occasion (PO) and transmitted repeatedly based on each piece of spatial information in the second spatial information set.

In some embodiments, the paging configuration information includes first indication information, the first indication information further indicates the third spatial information set. In a case where the first indication information indicates the third spatial information set, the paging resource is the third paging resource. Or, in a case where the paging configuration information does not include the first indication information, the paging resource is the third paging resource.

Here, the paging resource may be determined by the terminal device based only on the first indication information, and the first indication information is an optional configuration.

In the embodiments of the present application, the network device configures the first indication information in the paging configuration information to indicate the third spatial information set, or the network device does not configure the first indication information in the paging configuration information, or when the network device configures the paging configuration information which does not include the first indication information. At this time, the terminal device determines the paging resource based on the first indication information for indicating the third spatial information set, or the terminal device determines the paging resource based on the paging configuration information that does not include the first indication information, or the terminal device determines the paging resource based on the first indication information being not configured.

In the embodiments of the present application, the first indication information indicates the third spatial information set, which represents that the network device can directly communicate with the terminal device without forwarding by the first device. after the network device transmits the paging configuration information to the terminal device, the terminal device can determine that the spatial information set for communication with the network device is included in the third spatial information set, and determine that the paging resource is the third paging resource corresponding to the third spatial information set. At this time, the terminal device blindly detects PDCCHs scrambled by the P-RNTI which correspond to one paging occasion PO and repeatedly transmitted based on the spatial information in the third spatial information set. Therefore, after introducing the intelligent surface device, when the first indication information indicates the third spatial information set, the terminal device can determine that the network device and the terminal device establish a direct communication link. Further, the terminal device uses the communication link to enable itself to monitor paging on an appropriate occasion, thereby ensuring the accuracy of paging, reducing the probability of paging false alarm and the energy consumption of the terminal device while improving the communication transmission quality.

It should be noted that, when the first indication information is not configured in the paging configuration information or the first indication information is absent in the paging configuration information, the terminal device may determine that the spatial information set for communication with the network device is the third spatial information set. The third spatial information set may be spatial information included in the parameter ssb-PositionsInBurst in SIB1.

For example, as shown in FIG. 8, FIG. 8 is a schematic diagram showing the third spatial information set corresponding to one paging occasion (PO). For example, the third spatial information set includes spatial information 0, spatial information 1, spatial information 2, and spatial information 3, and each piece of spatial information corresponds to a PDCCH monitoring occasion (PMO). That is, spatial information 0 corresponds to PMO 0, spatial information 1 corresponds to PMO 1, spatial information 2 corresponds to PMO 2, and spatial information 3 corresponds to PMO 3. Referring to FIG. 8, the paging resource corresponding to the PO detected by the terminal device may be the third paging resource corresponding to the third spatial information set. That is, the terminal device blindly detects PDCCHs scrambled by the P-RNTI which correspond to one paging occasion (PO) and repeatedly transmitted based on each piece of spatial information in the third spatial information set.

In some embodiments, if the paging configuration information includes only the first indication information, the paging configuration information is carried in the RRC release message or the specific signaling for the terminal device.

In the embodiments of the present application, the RRC release message or the specific signaling for the terminal device is a specific message configured by the network device for the terminal device. The RRC release message is used to instruct the terminal device to transition from the RRC connection state to the RRC idle state or the RRC inactive state. The specific signaling for the terminal device may be a higher level signaling specified for the terminal device. The RRC release message or specific signaling for the terminal device may be transmitted by the network device to the terminal device when the terminal device enters the connected state, thereby reducing the power consumption of the terminal device. In the embodiments of the present application, the network device carries the paging configuration information in the RRC release message or the specific signaling for the terminal device, and transmits the RRC release message or the specific signaling for the terminal device to the terminal device, so that the terminal device monitors the pageing PDCCH based on the paging configuration information.

Exemplarily, the paging configuration information is included in terminal device (UE)-specific (UE-specific) higher layer signaling, e.g., an RRC release message, PDCCH-configcommon. Spatial information sets corresponding to different terminal devices may be different. Optionally, the paging configuration information may be carried in the specific signaling for the terminal device.

In some embodiments, the paging configuration information further includes second indication information, the second indication information indicates whether the spatial information set indicated by the first indication information is applied.

In the embodiment of the present application, the network device configures the first indication information to indicate the first spatial information set or the second spatial information set, and configures the second indication information to indicate whether the spatial information set indicated by the first indication information is applied, so as to obtain paging configuration information, and transmits the paging configuration information to the terminal device, and the terminal device determines a paging resource based on the first indication information and the second indication information.

In the embodiments of the present application, the second indication information indicates whether the spatial information set indicated by the first indication information is applied. The data type of the second indication information may be an enumeration type or a Boolean type, which is not limited in the embodiments of the present application.

In the embodiments of the present application, the first indication information indicates the first spatial information set and the second spatial information set, the second indication information indicates whether the spatial information set indicated by the first indication information is applied. After the network device transmits the paging configuration information including the first indication information and the second indication information to the terminal device, the terminal device determines the paging resource based on the first indication information used to indicate the first spatial information and used to indicate that the spatial information set indicated by the first indication information is applied, or,
The terminal device determines the paging resource based on the first indication information used to indicate the first spatial information set and used to indicate that the spatial information set indicated by the first indication information is not applied; or,
The terminal device determines the paging resource based on the first indication information used to indicate the second spatial information set and used to indicate that the spatial information set indicated by the first indication information is applied; or,
The terminal device determines the paging resource based on the first indication information used to indicate the second spatial information set and used to indicate that the spatial information set indicated by the first indication information is not applied.

It should be noted that, due to the mobility of the terminal device, when configuring the paging configuration information, the network device needs to configure it based on whether the terminal device is located in an area of a service provided by the first device. If the communication performance of the terminal device communicating with the network device through the first device is better, and the communication performance of the terminal device directly communicating with the network device is better in other areas, then the network device can indicate the spatial information set again through the second indication information, so that the terminal device can jointly determine the paging resource by combining the first indication information and the second indication information. In such a way, the terminal device can select a paging resource corresponding to an appropriate spatial information set according to the distance between the terminal device and the network device, to monitor the paging message, so that the paging message can be monitored on an appropriate time.

In some embodiments, the paging configuration information further includes second indication information, and in a case where the number of bits corresponding to the second indication information is a first number, if the second indication information is a first value, the paging resource is the first paging resource or the second paging resource; if the second indication information is a second value, the paging resource is the third paging resource; or,
In a case where the number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource;
Herein the first number is different from the second number.

In the embodiments of the present application, the number of bits corresponding to the second indication information may be the first number such as 1, and the number of bits corresponding to the second indication information may be the second number such as 2. Or, the number of bits corresponding to the second indication information may be other numbers other than the first number and the second number such as 3, 4, 5, and the like, which is not limited in the embodiments of the present application.

In the embodiments of the present application, the second indication information may indicate whether the spatial information set indicated by the first indication information is applied, and the second indication information may further indicate the first spatial information set, the second spatial information set, or the third spatial information set. The second indication information may be represented using different values. Here, the second indication information may be the first value, the second value, the third value, the fourth value, or the fifth value.

In the embodiments of the present application, the first value may indicate the first spatial information set or the second spatial information set, and the first value may also indicate that the spatial information set indicated by the first indication information is applied. The second value may indicate the third spatial information set, and the second value may also indicate that the spatial information set indicated by the first indication information is not applied.

In the embodiments of the present application, the third value may indicate the first spatial information set, the fourth value may indicate the second spatial information set, and the fifth value may indicate the third spatial information set. Or, the third value and the fourth value may also indicate that the spatial information set indicated by the first indication information is applied, and the fifth value may also indicate that the spatial information set indicated by the first indication information is not applied.

For example, when the number of bits corresponding to the second indication information is the first number, the first value may be 0, and the second value may be 1; or, the first value may be 1 and the second value may be 0.

For example, when the number of bits corresponding to the second indication information is the second number, the third value may be 00, the fourth value may be 01, and the fifth value may be 10. Alternatively, the third value may be 00, the fourth value may be 10, the fifth value may be 11. Alternatively, the third value may be 00, the fourth value may be 01, the fifth value may be 10, or the like. It should be noted that when the number of bits corresponding to the second indication information is the second number, there may be a plurality of combinations for the third value, the fourth value, and the fifth value, which is not exhaustive in this application.

For example, when the number of bits corresponding to the second indication information is another number such as 3, the third value may be 000, the fourth value may be 001, and the fifth value may be 100. Alternatively, the third value may be 000, the fourth value may be 010, the fifth value may be 101. Alternatively, the third value may be 010, the fourth value may be 010, the fifth value may be 100. It should be noted that when the number of bits corresponding to the second indication information is the third number, there may be a plurality of combinations for the third value, the fourth value, and the fifth value, which is not exhaustive in this application.

In the embodiments of the present application, in a case where the number of bits corresponding to the second indication information is the first number, if the second indication information is a first value, the first value indicates the first spatial information set or the second spatial information set, or the first value indicates that the spatial information set indicated by the first indication information is applied, and the paging resource is the first paging resource corresponding to the first spatial information set or the second paging resource corresponding to the second spatial information set; if the second indication information is the second value, the second value indicates the third spatial information set, and the paging resource is the third paging resource corresponding to the third spatial information set.

It should be noted that, due to the mobility of the terminal device, when configuring the paging configuration information, the network device needs to configure it according to whether the terminal device is located in an area of a service provided by the first device. If the communication performance of the terminal device communicating with the network device through the first device is better, and the communication performance of the terminal device directly communicating with the network device is better in other areas, then the network device can indicate the spatial information set again through the second indication information, so that the terminal device can jointly determine the paging resource by combining the first indication information and the second indication information. In such a way, the terminal device can select a paging resource corresponding to an appropriate spatial information set according to the distance between the terminal device and the network device, to monitor the paging message, so that the paging message can be monitored at an appropriate occasion.

In the embodiments of the present application, in a case where the number of bits corresponding to the second indication information is the second number, if the second indication information is the third value, the third value indicates the first spatial information set, and the paging resource is the first paging resource corresponding to the first spatial information set; if the second indication information is the fourth value, the fourth value indicates the second spatial information set, and the paging resource is the second paging resource corresponding to the second spatial information set; if the second indication information is the fifth value, the fifth value indicates the third spatial information set, and the paging resource is the third paging resource corresponding to the second spatial information set.

It should be noted that, due to the mobility of the terminal device, when configuring the paging configuration information, the network device needs to configure it according to whether the terminal device is located in an area of a service provided by the first device. If the communication performance of the terminal device communicating with the network device through the first device is better, and the communication performance of the terminal device directly communicating with the network device is better in other areas, then the network device can indicate the spatial information set again through the second indication information, so that the terminal device can jointly determine the paging resource by combining the first indication information and the second indication information. In such a way, the terminal device can select a paging resource corresponding to an appropriate spatial information set according to the distance between the terminal device and the network device, to monitor the paging message, so that the paging message can be monitored at an appropriate time.

In some embodiments, in a case where the second indication information indicates that the spatial information set indicated by the first indication information is applied, the second indication information is a first value or a third value;
in a case where the second indication information indicates that the spatial information set indicated by the first indication information is not applied, the second indication information is a second value, a fourth value, or a fifth value.

In the embodiments of the present application, the second indication information indicates whether the spatial information set indicated by the first indication information is applied. Here, when the second indication information indicates that the spatial information set indicated by the first indication information is applied, the second indication information is the first value or the third value. That is, the first value and the third value are used to indicate that the spatial information set indicated by the first indication information is applied. When the second indication information indicates that the spatial information set indicated by the first indication information is not applied, the second indication information is the second value, the fourth value, or the fifth value. That is, the second value, the fourth value, and the fifth value are used to indicate that the spatial information set indicated by the first indication information is not applied.

In the embodiment of the present application, after the network device transmits the paging configuration information including the first indication information and the second indication information to the terminal device, when the first indication information indicates the first spatial information set or the second spatial information set, if the second indication information is used to indicate whether the spatial information set indicated by the first indication information is applied, and the second indication information is the first value or the third value (the first value and the third value indicate that the spatial information set indicated by the first indication information is applied), then the terminal device determines that the first paging resource corresponding to the first spatial information set is the paging resource, or determines that the paging resource corresponding to the second spatial information is the paging resource, based on the first indication information and the second indication information.

In the embodiments of the present application, after the network device transmits the paging configuration information including the first indication information and the second indication information to the terminal device, when the first indication information indicates the first spatial information set or the second spatial information set, if the second indication information is used to indicate whether the spatial information set indicated by the first indication information is applied, and the second indication information is a second value, a fourth value, or a fifth value (the second value, the fourth value, and the fifth value indicate that the spatial information set indicated by the first indication information is not applied), then the terminal device determines that the third paging resource corresponding to the third spatial information set is a paging resource, based on the first indication information and the second indication information, so as to monitor the paging message based on the third paging resource.

In some embodiments, in a case that the first indication information indicates the first spatial information set, if the second indication information is the first value or the third value, the paging resource is the first paging resource; or,
In a case that the first indication information indicates the second spatial information set, if the second indication information is the first value or the fourth value, the paging resource is the second paging resource; if the second indication information is the third value, the paging resource is the first paging resource;
In a case that the first indication information indicates the first spatial information set or the second spatial information set, if the second indication information is the second value or the fifth value, the paging resource is the third paging resource.

In the embodiments of the present application, the first value, the second value, the third value, the fourth value, and the fifth value each indicates a spatial information set, and when the first value, the second value, the third value, the fourth value, and the fifth value each indicate a spatial information set, the network device also indicate that the priority of the second indication information is higher than the priority of the first indication information in the paging configuration information. After the network device transmits the paging configuration information to the terminal device, if the spatial information set indicated by the first indication information and the spatial information set indicated by the second indication information are completely different, the priority of the second indication information is higher than the priority of the first indication information, the terminal device determines the paging resource based on the second indication information. If the spatial information set indicated by the first indication information and the spatial information set indicated by the second indication information are not completely consistent, the terminal device determines that the paging resource corresponding to the spatial information sets indicated by both the first indication information and the second indication information is the paging resource.

In the first implementation, after the network device transmits the paging configuration information including the first indication information and the second indication information to the terminal device, if the first indication information indicates the first spatial information set, the second indication information is the first value indicating the first spatial information set or the second spatial information set, or the second indication information is the third value indicating the first spatial information set, since the spatial information set indicated by the first indication information is not completely consistent with the spatial information set indicated by the second indication information, and both the first indication information and the second indication information indicate the first spatial information set, at this time, based on the first indication information and the second indication information, the terminal device determines that the first paging resource corresponding to the first spatial information set indicated by both the first indication information and the second indication information is a paging resource.

In the second implementation, after the network device transmits the paging configuration information including the first indication information and the second indication information to the terminal device, if the first indication information indicates the second spatial information set, the second indication information is the first value indicating the first spatial information set or the second spatial information set, or the second indication information is the fourth value indicating the second spatial information set, since the spatial information set indicated by the first indication information is not completely consistent with the spatial information set indicated by the second indication information, and both the first indication information and the second indication information indicate the second spatial information set, after the network device transmits the paging configuration information, the terminal device determines that the second paging resource corresponding to the second spatial information set indicated by both the first indication information and the second indication information is the paging resource, based on the first indication information and the second indication information.

In the third implementation, after the network device transmits the paging configuration information including the first indication information and the second indication information to the terminal device, if the first indication information indicates the first spatial information set, or the first indication information indicates the second spatial information set, the second indication information is the second value indicating the third spatial information set, or the second indication information is the fifth value indicating the third spatial information set, since the spatial information set indicated by the first indication information is completely different from the spatial information set indicated by the second indication information, and the priority of the second indication information is higher than the priority of the first indication information, at this time, the terminal device determines that the third paging resource corresponding to the third spatial information set indicated by the second indication information is the paging resource, based on the second indication information.

In some embodiments, in a case where the first value, the second value, the third value, the fourth value, and the fifth value each indicates a spatial information set, the determination of the paging resource is further associated with a configuration of the first spatial information set, a configuration of the second spatial information set.

In one implementation, after the network device transmits the paging configuration information including the first indication information and the second indication information to the terminal device, if the configuration of the first spatial information set is associated with the number of pieces of actually transmitted spatial information included in the first spatial information set, then in a case that the first indication information indicates the first spatial information set, if the second indication information is the first value having a first number of bits (herein the first value indicates the first spatial information set or the second spatial information set), or if the second indication information is the third value having a second number of bits (herein the third value indicates the first spatial information set), then the terminal device determines that the first paging resource corresponding to the first spatial information set indicated by both the first indication information and the second indication information is the paging resource.

In another implementation, after the network device transmits the paging configuration information including the first indication information and the second indication information to the terminal device, if the configuration of the second spatial information set is associated with the number of pieces of actually transmitted spatial information included in the second spatial information set, then in a case that the first indication information indicates the second spatial information set, if the second indication information is the first value having a first number of bits (herein the first value indicates the first spatial information set or the second spatial information set), or if the second indication information is the fourth value having a second number of bits (herein the fourth value indicates the second spatial information set), the terminal device determines that the second paging resource corresponding to the second spatial information set indicated by both the first indication information and the second indication information is the paging resource.

In yet another implementation, after the network device transmits the paging configuration information including the first indication information and the second indication information to the terminal device, if the configuration of the second spatial information set is associated with the number of pieces of actually transmitted spatial information included in the second spatial information set, and the number of pieces of actually transmitted spatial information included in the third spatial information set, then, in a case where the first indication information indicates the second spatial information set, there are two cases for the terminal device to determine the paging resource as follows:
Case 1, if the second indication information is the first value having a first number of bits (herein the first value indicates the first spatial information set or the second spatial information set), or the second indication information is the fourth value having a second number of bits (herein the fourth value indicates the second spatial information set), after the network device transmits the paging configuration information to the terminal device, the terminal device determines that the second paging resource corresponding to the second spatial information set indicated by both the first indication information and the second indication information is the paging resource.
Case 2: If the second indication information is the third value having a second number of bits (herein the third value indicates the first spatial information set), since the second spatial information set includes the second spatial information set and the third spatial information set in the configuration process, and the priority of the second indication information is higher than the priority of the first indication information, after the network device transmits the paging configuration information to the terminal device, the terminal device determines that the first paging resource corresponding to the first spatial information set indicated by the second indication information is the paging resource.

The following description is given by taking the number of bits corresponding to the second indication information being 1, the first value being 0, and the second value being 1, and the number of bits corresponding to the second indication information being 2, the third value being 00, the fourth value being 01, and the fifth value being 10 as an example.

After the network device transmits the paging configuration information including the first indication information and the second indication information to the terminal device, in a case that the second indication information is the first value, the second value, the third value, the fourth value and the fifth value which each indicates a spatial information set, if the first indication information indicates the first spatial information set and the second indication information is the first value (0) or the third value (00), since the first value (0) indicates the first spatial information set or the second spatial information set and the third value (00) indicates the first spatial information set, the terminal device determines that the paging resource is the first paging resource corresponding to the first spatial information set, based on the second indication information. If the second indication information is the second value (1) or the fifth value (10), since both the second value (1) and the fifth value (10) indicate the third spatial information set, the terminal device determines that the paging resource is the third paging resource corresponding to the third spatial information set, based on the second indication information.

After the network device transmits the paging configuration information including the first indication information and the second indication information to the terminal device, in a case that the first value, the second value, the third value, the fourth value, and the fifth value each indicates a spatial information set, if the first indication information indicates the second spatial information set, the second indication information is the first value (0) or the fourth value (01), since the first value (0) indicates the first spatial information set or the second spatial information set, and the fourth value (01) indicates the second spatial information set, the terminal device determines that the paging resource is the second paging resource corresponding to the second spatial information set, based on the second indication information. If the second indication information is the third value (00), since the third value (00) indicates the first spatial information set, the terminal device determines that the paging resource is the first paging resource corresponding to the first spatial information set, based on the second indication information. If the second indication information is the second value (1) or the fifth value (10), since both the second value (1) and the fifth value (10) indicate the third spatial information set, the terminal device determines that the paging resource is the third paging resource corresponding to the third spatial information set based on the second indication information.

After the network device transmits the paging configuration information including the first indication information and the second indication information to the terminal device, in a case where the second indication information is the first value, the second value, the third value, the fourth value, and the fifth value which each indicates whether the spatial information set indicated by the first indication information is applied, if the first indication information indicates the first spatial information set and the second indication information is the first value (0) or the third value (00), since the first value (0) and the third value (00) both indicate that the spatial information set indicated by the first indication information is applied, the terminal device determines that the paging resource is the first paging resource corresponding to the first spatial information set based on the second indication information; If the second indication information is the second value (1), the fourth value (01), or the fifth value (10), since the second value (1), the fourth value (01), and the fifth value (10) all indicate that the spatial information set indicated by the first indication information is not applied, the terminal device determines that the paging resource is the third paging resource corresponding to the third spatial information set based on the second indication information.

After the network device transmits the paging configuration information including the first indication information and the second indication information to the terminal device, in a case where the second indication information is the first value, the second value, the third value, the fourth value, and the fifth value which each indicates whether the spatial information set indicated by the first indication information is applied, if the first indication information indicates the second spatial information set and the second indication information is the first value (0) or the third value (00), since the first value (0) and the third value (00) both indicate that the spatial information set indicated by the first indication information is applied, the terminal device determines that the paging resource is the second paging resource corresponding to the second spatial information set based on the second indication information. If the second indication information is the second value (1), the fourth value (01), or the fifth value (10), since the second value (1), the fourth value (01), and the fifth value (10) all indicate that the spatial information set indicated by the first indication information is not applied, the terminal device determines that the paging resource is the third paging resource corresponding to the third spatial information set based on the second indication information.

In some embodiments, in a case where the paging configuration information includes second indication information, the first indication information is carried in a specific signaling for a serving cell in which the terminal device is located, and the second indication information is carried in a radio resource control (RRC) release message or the specific signaling for the terminal device; or, the first indication information and the second indication information are carried in the RRC release message or the specific signaling for the terminal device;
In a case where the paging configuration information does not include the second indication information, the first indication information is carried in the RRC release message or the specific signaling for the terminal device.

In the embodiments of the present application, the paging configuration information includes first indication information and second indication information, and the first indication information and the second indication information may be carried in the same signaling or different signalings.

Here, the first indication information and the second indication information are carried in different signaling, which may be understood as that the first indication information may be carried in a specific signaling for the serving cell in which the terminal device is located, and the second indication information may be carried in an RRC release message or a specific signaling for the terminal device.

It should be noted that, since the priority of the second indication information is higher than the priority of the first indication information, the second indication information may be carried in the RRC release message or the specific signaling for the terminal device, and the first indication information may be carried in the specific signaling for the serving cell in which the terminal device is located.

For example, the first indication information is carried in a system message such as a SIB1 message or a PDCCH-configcommon, and the second indication information may be carried in an RRC release message or a specific signaling for the terminal device, so that the accuracy of reception of the paging configuration information by the terminal device can be guaranteed.

Here, the first indication information and the second indication information are carried in the same signaling, which can be understood as that that both the first indication information and the second indication information are carried in the RRC release message or the specific signaling for the terminal device. For example, the first indication information and the second indication information may be carried in the RRC release message or the specific signaling for the terminal device, so that the accuracy of reception of the paging configuration information by the terminal device can be guaranteed.

In some embodiments, the paging configuration information further includes third indication information, the third indication information is used to configure a first timer.

In the embodiments of the present application, the network device configures the first indication information to indicate the first spatial information set or the second spatial information set, and configures the third indication information to be the first timer, to obtain paging configuration information, and transmits the paging configuration information to the terminal device.

In the embodiments of the present application, the first timer is used to determine different time ranges, herein the different time ranges include a range during which the first timer is running or a time range in which the timer is started, a time range during which the first timer is not running or an expired time range.

In the embodiments of the present application, after the network device transmits the paging configuration information including the first indication information and the third indication information to the terminal device, the terminal device determines that the paging resource is the first paging resource, the second paging resource, or the third paging resource based on the first indication information for indicating the first spatial information set or the second spatial information set and the time range corresponding to whether the first timer is running. In such a way, the network device configures the first indication information to indicate the spatial information set, and configures the spatial information sets corresponding to different time ranges of the first timer in the second indication information, so that the terminal device determines a paging resource based on the first indication information and the third indication information, so that the paging message is monitored on the paging resource.

In some embodiments, after the network device transmits the paging configuration information including the first indication information and the second indication information to the terminal device, the operation that the terminal device determines the paging resource based on the first indication information and the first timer may be implemented by the following manners:
In a case that the first indication information indicates the first spatial information set or the second spatial information set, the paging resource is the first paging resource corresponding to the first spatial information set or the second paging resource corresponding to the second spatial information set during the running of the first timer; or, the paging resource is the third paging resource when the first timer is not running or expires.

In the embodiments of the present application, if the first indication information indicates the first spatial information set or the second spatial information set, and the first timer is in the running period or the time range in which the first timer is started, the terminal device determines that the paging resource is the first paging resource corresponding to the first spatial information set or the second paging resource corresponding to the second spatial information set, and monitors the paging message in the first paging resource or the second paging resource. In such a way, in a case where the first indication information indicates a spatial information set, the paging resource is determined through spatial information sets corresponding to different time ranges (i.e., a time range in which the timer is started or a time range in which the timer is not started or expires), so that a paging message is monitored on the paging resource.

In some embodiments, after the network device transmits the paging configuration information including the first indication information and the second indication information to the terminal device, the operation that the terminal device determines the paging resource based on the first indication information and the first timer may be implemented in the following manner:
In a case where the first indication information indicates the first spatial information set, the paging resource is the first paging resource during running of the first timer; or, the paging resource is the third paging resource when the first timer is not running or expires;
In a case where the first indication information indicates the second spatial information set, the paging resource is the second paging resource during the running of the first timer; or, the paging resource is the third paging resource when the first timer is not running or expires.

In the embodiments of the present application, after the network device transmits the paging configuration information including the first indication information and the second indication information to the terminal device, if the first indication information indicates the first spatial information set, and the first timer is in the running period or the time range in which the first timer is started, the terminal device determines that the paging resource is the first paging resource corresponding to the first spatial information set, and monitors the paging message on the first paging resource. If the first indication information indicates the first spatial information set, and the first timer is not running or expires, the terminal device determines that the paging resource is the third paging resource corresponding to the third spatial information set, and monitors the paging message on the third paging resource. Thus, in a case where the first indication information indicates the first spatial information set, the paging resource is determined based on spatial information sets corresponding to different time ranges (i.e., a time range in which the timer is started or a time range in which the timer is not started or expires), so that the paging message is monitored on the paging resource.

In the embodiments of the present application, after the network device transmits the paging configuration information including the first indication information and the second indication information to the terminal device, if the first indication information indicates the second spatial information set, and the first timer is in the running period or the time range in which the first timer is started, the terminal device determines that the paging resource is the second paging resource corresponding to the second spatial information set, and monitors the paging message on the second paging resource. If the first indication information indicates the second spatial information set, and the first timer is not running or expires, the terminal device determines that the paging resource is the third paging resource corresponding to the third spatial information set, and monitors the paging message on the third paging resource. Thus, in a case where the first indication information indicates the second spatial information set, the paging resource is determined based on spatial information sets corresponding to different time ranges (i.e., a time range in which the timer is started or a time range in which a timer is not started or expires), so that the paging message is monitored on the paging resource.

For example, as shown in FIG. 9, FIG. 9 is a schematic diagram of determining a spatial information set corresponding to one paging occasion (PO) based on a timer. Taking the first indication information indicating the second spatial information set as an example, during the running of the first timer, the spatial information set corresponding to the paging occasion PO1 is the second spatial information set. At this time, the terminal device monitors the paging message on the second paging resource corresponding to the second spatial information set. When the first timer does not run or expires, the spatial information set corresponding to the paging occasion PO2 is the third spatial information set. At this time, the terminal device monitors the paging message on the third paging resource corresponding to the third spatial information set, so that the terminal device can receive the paging message at an appropriate occasion based on the timer.

In some embodiments, the configuration of the first timer is associated with information related to mobility of the terminal device. The information related to the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the location of the terminal device represents that whether the terminal device is located in an area where the RIS provides services is considered in paging. If the terminal device is located in the area where the RIS provides services, the terminal device communicates with the network device through the first device. If the terminal device is not in the area where the RIS provides services, the terminal device communicates directly with the network device. That is, the location of the terminal device determines whether the terminal device communicates with the network device through the first device or the terminal device communicates directly with the network device. Therefore, the network device selects a communication mode according to the location of the terminal device, and dynamically allocates different spatial information sets to different time ranges of the first timer according to the selected communication mode, so that the terminal device can monitor the paging message on an appropriate occasion. For example, when the terminal device is in position 1, it can communicate directly with the network device, that is, it is not necessary for the first device to forward a signal, and the paging resource may be a paging resource corresponding to the third spatial information set. When the terminal device moves to the position 2, because there is an obstacle between the terminal device and the network device, the terminal device communicates with the network device through the first device, the paging resource may be the paging resource corresponding to the first spatial information set or the second spatial information set.

In the embodiments of the present application, the speed of the terminal device determines that a movement time of the terminal device in an area of a service provided by the first device and/or the network device is considered in paging. The running time of the first timer may depend on the movement time used by the terminal device. Therefore, the network device dynamically allocates different spatial information sets to different time ranges of the first timer, so that the terminal device can monitor the paging message on an appropriate occasion.

In the embodiments of the present application, the movement rule of the terminal device indicates that the movement trajectory rule of the terminal device in an area of a service provided by the first device or the network device is considered in paging. On the basis of the movement trajectory rule, a time range in which the terminal device can directly communicate with the network device can be determined, and a time range in which the terminal device communicates with the network device through the first device can be determined. Therefore, the terminal device dynamically allocates different spatial information sets to different time ranges of the first timer, so that the terminal device can monitor the paging message on an appropriate occasion.

In the embodiments of the present application, the movement direction of the terminal device indicates that the movement direction of the terminal device in an area of a service provided by the first device or the network device is considered in paging. On the basis of the movement direction, a time range in which the terminal device can directly communicate with the network device can be determined, and a time range in which the terminal device communicates with the network device through the first device can be determined. Therefore, the network device dynamically allocates different spatial information sets to different time ranges of the first timer, so that the terminal device can monitor the paging message on an appropriate occasion.

It should be noted that due to the setting of the first timer and the relatively large mobility of the terminal device, it is necessary to know the movement trajectory of the terminal device. On the basis of the movement trajectory, a time range in which the terminal device can directly communicate with the network device and a time range in which the terminal device can communicate with the network device through the first device are determined, so that the network device dynamically allocates different spatial information sets to different time ranges of the first timer.

It can be understood that due to mobility, the terminal device receives a paging message on a paging resource corresponding to the third spatial information set in a certain area, and receives a paging message on a paging resource corresponding to the first spatial information set or the second spatial information set in another area. For example, when the location of the terminal device is in the first area, the terminal device receives a paging message on a paging resource corresponding to the third SSB set. When the location of the terminal device is in the second area, the terminal device receives a paging message on a paging resource corresponding to the first SSB set or the second SSB set. The time it takes for the terminal device to move from the first area to the second area may be a time range of the first timer.

It can be understood that when the spatial information set is configured according to the first timer, since the terminal device corresponds to different spatial information sets in different time ranges, it is necessary to consider the influence of the mobility of the terminal device on the terminal device monitoring the paging message, so that the terminal device can receive the paging message on an appropriate occasion.

In some embodiments, if the paging configuration information includes the first indication information and the third indication information, the paging configuration information is carried in the RRC release message or the specific signaling for the terminal device.

In the embodiments of the present application, the RRC release message or the specific signaling for the terminal device is a specific message configured by the network device for the terminal device. the network device transmits the RRC release message or the specific signaling for the terminal device to carry the first indication information and the third indication information of the paging configuration information, so that the terminal device monitors the paging PDCCH.

In some embodiments, the paging configuration information further includes fourth indication information, the fourth indication information is used to configure a spatial information set pattern.

Here, the spatial information set pattern is associated with one or more of the following:
a radio frame (PF) of the terminal device;
a PO within the PF of the terminal device; and
time domain subframe configuration of the terminal device.

Here, different PFs in one discontinuous reception DRX cycle in the spatial information set pattern correspond to different spatial information sets.

Different POs in one PF in one DRX cycle within the spatial information set pattern correspond to different spatial information sets.

Different subframes in a system frame included in the spatial information set pattern correspond to different spatial information sets.

In the embodiments of the present application, the terminal device is provided with a plurality of radio frames (PFs) for receiving paging messages in one discontinuous period DRX cycle, and each radio frame (PF) corresponds to a plurality of paging occasions (PO).

In the embodiments of the present application, different PFs in one discontinuous reception DRX cycle in the spatial information set pattern may correspond to the same or different spatial information sets. That is to say, the spatial information sets corresponding to different PFs may be the same, or the spatial information sets corresponding to different PFs may also be different, but the spatial information sets corresponding to different POs in the same PF are the same.

For example, the number of PFs monitored by the terminal device in one DRX cycle is two, at this time, the network device configures that the spatial information set corresponding to the first PF is the second spatial information set, and the spatial information set corresponding to the second PF is the third spatial information set. That is, the spatial information sets corresponding to different PFs are different. The spatial information sets corresponding to different POs in the same PF are the same.

In another example, the number of PFs monitored by the terminal device in one DRX cycle is four, at this time, the network device configures that the spatial information set corresponding to the first PF is the first spatial information set, the spatial information set corresponding to the second PF is the second spatial information set, the spatial information set corresponding to the third PF is the third spatial information set, and the spatial information set corresponding to the fourth PF is the second spatial information set. That is, the spatial information sets corresponding to different PFs may be the same or different, and the spatial information sets corresponding to different POs in the same PF are the same.

In the embodiments of the present application, different POs in one PF in one DRX cycle with the spatial information set pattern may correspond to the same or different spatial information sets. That is, the spatial information sets corresponding to different POs may be the same, or the spatial information sets corresponding to different POs may also be different.

For example, the number of POs for the terminal device in one PF is two. That is, the terminal device monitors paging messages on two POs in one PF. The network device configures that the spatial information set corresponding to the first PO is the second spatial information set, and the spatial information set corresponding to the second PO is the third spatial information set, that is, the spatial information sets corresponding to different POs are different.

In another example, the number of POs for the terminal device in one PF is four, at this time, the terminal device configures that the spatial information set corresponding to the first PO is the first spatial information set, the spatial information set corresponding to the second PO is the second spatial information set, the spatial information set corresponding to the third PO is the third spatial information set, and the spatial information set corresponding to the fourth PO is the second spatial information set. That is, the spatial information sets corresponding to different POs may be the same or different.

In the embodiments of the present application, different subframes in the system frame included in the spatial information set pattern may correspond to the same or different spatial information sets. It should be noted that, one system frame includes a plurality of subframes, for example, 10 subframes. At this time, the network device configures that the spatial information set corresponding to the first part of the subframes in the system frame is the second spatial information set, and the spatial information set corresponding to the second part of the subframes is the third spatial information set. The first part of the subframes includes one subframe or a plurality of subframes in the system frame, and the second part of the subframes includes other subframes in the system frame except the first part of the subframes, or, the spatial information set corresponding to the first part of the subframes in the system frame is the first spatial information set, the spatial information set corresponding to the second part of the subframes is the second spatial information set, and the spatial information set corresponding to the third part of the subframes is the third spatial information set. Herein the first part of the subframes, the second part of the subframes, and the third part of the subframes are different, and the system frame includes the first part of the subframes, the second part of the subframes, and the third part of the subframes. Here, since the set of beams supported by the first device may be associated with a time domain subframe configuration, the set of beams supported by different one or more subframes may be different. By adjusting the spatial information set in a semi-static manner, signaling overhead may be reduced.

In some embodiments, the configuration of the spatial information set pattern is associated with information related to mobility of the terminal device. The information related to the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the location of the terminal device represents that whether the terminal device is located in the area where the RIS provides services is considered in paging. If the terminal device is located in the area where the RIS provides services, the terminal device communicates with the network device through the first device. If the terminal device is not in the area where the RIS provides services, the terminal device communicates directly with the network device. That is, the location of the terminal device determines whether the terminal device communicates with the network device through the first device or the terminal device communicates directly with the network device. Therefore, the network device selects a communication mode according to the location of the terminal device, and dynamically allocates different spatial information sets according to the selected communication mode based on the spatial information set pattern, so that the terminal device can monitor the paging message on an appropriate occasion. For example, when the terminal device is in position 1, it can communicate directly with the network device, that is, it is not necessary for the first device to forward a signal, and the paging resource may be a paging resource corresponding to the third spatial information set. When the terminal device moves to the position 2, because there is an obstacle between the terminal device and the network device, the terminal device communicates with the network device through the first device, the paging resource may be a paging resource corresponding to the first spatial information set or the second spatial information set.

In the embodiments of the present application, the speed of the terminal device determines that a movement time of the terminal device in an area of a service provided by the first device and/or the network device is considered in paging. The configuration of the spatial information set pattern may depend on the movement time of the terminal device. Therefore, the network device dynamically allocates different spatial information sets based on the spatial information set pattern, so that the terminal device can monitor the paging message on an appropriate occasion.

In the embodiments of the present application, the movement rule of the terminal device indicates that the movement trajectory rule of the terminal device in an area of a service provided by the first device or the network device is considered in paging. On the basis of the movement trajectory rule, a time range in which the terminal device can directly communicate with the network device can be determined, and a time range in which the terminal device communicates with the network device through the first device can be determined. Therefore, the network device dynamically allocates different spatial information sets are based on the spatial information pattern, so that the terminal device can monitor the paging message on an appropriate occasion.

In the embodiments of the present application, the movement direction of the terminal device indicates that the movement direction of the terminal device in an area of a service provided by the first device or the network device is considered in paging. On the basis of the movement direction, a time range in which the terminal device can directly communicate with the network device can be determined, and a time range in which the terminal device communicates with the network device through the first device can be determined. Therefore, the network device dynamically allocates different spatial information sets based on the spatial information pattern, so that the terminal device can monitor the paging message on an appropriate occasion.

It should be noted that due to the relatively large mobility of the terminal device, it is necessary to know the movement trajectory of the terminal device. On the basis of the movement trajectory, a time range in which the terminal device can directly communicate with the network device and a time range in which the terminal device can communicate with the network device through the first device are determined. Therefore, the network device dynamically allocates different spatial information sets based on the spatial information pattern, so that the terminal device can monitor the paging message on an appropriate occasion.

It can be understood that when the spatial information set is configured according to the spatial information set pattern, the terminal device corresponds to different spatial information sets at different times due to mobility. Exemplarily, if the location of the UE is in the first area, the SSB set pattern is the third SSB set, if the location of the UE is in the second area, the SSB set pattern is the first SSB set or the second SSB set. The location of the UE is calculated by the UE through the downlink positioning method and reported to the network device, or is calculated by the network device through the uplink positioning method. Therefore, it is necessary to consider the influence of the mobility of the terminal device on the terminal device monitoring the paging message so that the terminal device can receive the paging message on an appropriate occasion.

In some embodiments, if the paging configuration information includes the first indication information and the fourth indication information, the paging configuration information is carried in the RRC release message or the specific signaling for the terminal device.

In the embodiments of the present application, the RRC release message or the specific signaling for the terminal device is a specific message configured by the network device for the terminal device, and the terminal device monitors the paging PDCCH based on the first indication information and the fourth indication information in the paging configuration information carried by the RRC Release message or the specific signaling for the terminal device.

In some embodiments, before the operation 610 that the terminal device receives the paging configuration information transmitted by the network device , the terminal device reports first information to the network device, herein the paging configuration information is determined based on the first information.

Herein the first information includes one or more of the following:
information related to mobility of the terminal device; and
a measurement result of a serving cell in which the terminal device is located are obtained based on the measurement configuration information transmitted by the network device.

In the embodiments of the present application, the information related to the mobility of the terminal device includes one or more of the following:
a location of the terminal device;
a speed of the terminal device;
a movement rule of the terminal device;
a movement direction of the terminal device; and
a timestamp corresponding to the location of the terminal device.

In the embodiments of the present application, the measurement result is a result obtained by the terminal device measuring the service cell in which the terminal device is located based on the measurement configuration information transmitted by the network device. The measurement result may include one or more of the following measurement parameters: a channel measurement result, a reference signal reception power, a reference signal reception quality, a signal-to-noise ratio, a signal to interference plus noise ratio and other parameters, which are not limited in the embodiment of the present application.

In the embodiment of the present application, the information related to the mobility such as the location of the terminal device, the speed of the terminal device, the movement rule of the terminal device, the movement direction of the terminal device, and the timestamp corresponding to the location of the terminal device can provide parameters for the network device to configure the paging configuration information. For example, the network device determines whether the terminal device is located in an area where the RIS provides services according to the location of the terminal device. If the terminal device is located in the area where the RIS provides services, the paging configuration information configured by the network device for the terminal device indicates the second spatial information set, so that the terminal device monitors the paging message on an appropriate occasion according to the paging configuration information.

In some embodiments, the network device receives the capability information reported by the first device, herein the capability information is a spatial information set that can be supported by the first device, and the configuration of the first timer and the configuration of the spatial information set pattern are determined based on the capability information.

In the embodiments of the present application, the second spatial information set may be a spatial parameter set or a spatial information set that can be supported by the first device, herein the spatial parameter set or the spatial information set may be a beam set.

In the embodiments of the present application, the direction of spatial information supported by the first device may be fixed or semi-static.

It can be understood that the direction in which the first device forwards the spatial information is fixed, which may mean that the amplitude and phase on the first device do not change. That is, the first device directly forwards the received spatial information according to the amplitude and phase fixed by its own unit. It should be noted that the capability information reported by the first device includes a spatial information set that the first device can support based on the amplitude and phase fixed by the current own unit,.That is, a second spatial information set corresponding to the first device is reported.

It can be understood that the direction in which the first device transmits the spatial information is semi-static, which may mean that the amplitude and phase on the first device change. That is, the first device can adjust the amplitude and phase of its own unit. The first device adjusts the spatial information that can be forwarded by itself according to the adjusted amplitude and phase. It should be noted that the capability information reported by the first device includes a spatial information set that the first device can support based on the amplitude and phase fixed by the current own unit, and a change law by which the first device adjusts the amplitude and phase of the own unit. That is, a change law of the second spatial information set corresponding to the first device is reported.

In some embodiments, the capability information may include one or more of:
a phase of each RIS unit in the first device;
a set of beams of reflected signals or refracted signals of the first device;
a pattern of beamforming of a reflected signal or a refracted signal of the first device; and
a manner in which a reflected or refracted signal is polarized.

The beam set of the reflected signal or the refracted signal of the first device may include the directions (reflection, refraction, etc.) of different forwarding beams corresponding to different operation modes, and the number of beams.

In addition, the pattern of beamforming of the reflected signal or the refracted signal of the first device can be obtained by adjusting the ON or OFF of the diode associated with the RIS unit. That is, the ON or OFF patterns of different diodes correspond to different patterns of beamforming of the reflected signal or the refracted signal of the RIS, and thus correspond to different operation modes of the RIS.

The polarization manner of the reflected signal or the refracted signal of the first device may include horizontal polarization or vertical polarization. Among them, different working modes correspond to different polarization modes.

In some embodiments, the capability information is transmitted through higher layer signaling, such as RRC signaling or other higher layer signaling for interaction between the first device and the network device.

It can be seen that after the network device receives the capability information reported by the first device, the network device can accurately configure the first timer or the spatial information set pattern according to the capability information reported by the first device, so that the terminal device can determine whether the network device and the terminal device establish a communication link through the intelligent surface device or whether the network device and the terminal device directly establish a communication link based on the paging configuration information. Further, the terminal device can monitor paging on an appropriate occasion by using the determined communication link, so as to ensure the accuracy of paging, reduce the probability of paging false alarm and reduce the energy consumption of the terminal device while improving the communication transmission quality.

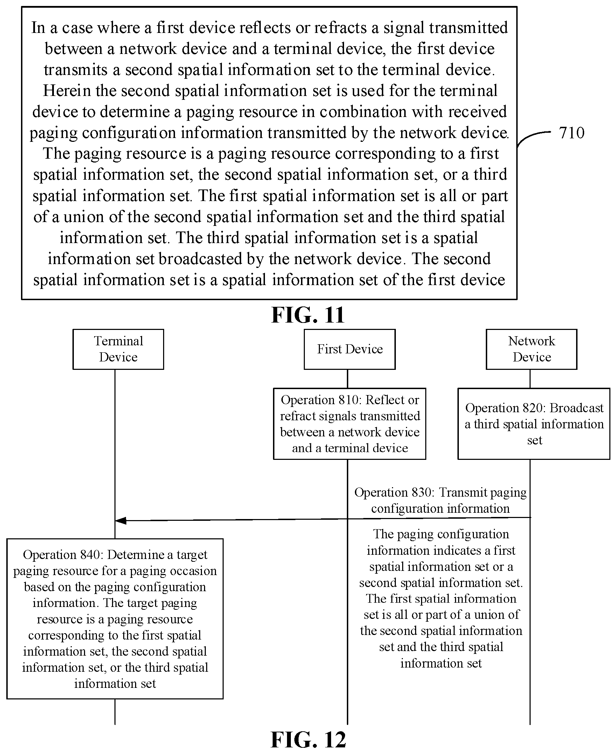

FIG. 11 shows a paging method provided by an embodiment of the present application, which is applied to a first device, and the method may include an operation 710.

In Operation 710, in a case where a first device reflects or refracts a signal transmitted between a network device and a terminal device, the first device transmits a second spatial information set to the terminal device. Herein the second spatial information set is used for the terminal device to determine a paging resource in combination with received paging configuration information transmitted by the network device. The paging resource is a paging resource corresponding to a first spatial information set, the second spatial information set, or a third spatial information set. The first spatial information set is all or part of a union of the second spatial information set and the third spatial information set. The third spatial information set is a spatial information set broadcasted by the network device. The second spatial information set is a spatial information set of the first device.

In some embodiments, the first spatial information set corresponds to a first paging resource.

The second spatial information set corresponds to a second paging resource.

The third spatial information set corresponds to a third paging resource.

In some embodiments, the paging configuration information includes first indication information, the first indication information indicates the first spatial information set or the second spatial information set, and the paging resource is the first paging resource or the second paging resource.

In some embodiments, in a case where the first indication information indicates the first spatial information set, the paging resource is the first paging resource; or,
In a case where the first indication information indicates the second spatial information set, the paging resource is the second paging resource.

In some embodiments, the paging configuration information includes first indication information. The first indication information further indicates the third spatial information set. In a case where the first indication information indicates the third spatial information set, the paging resource is the third paging resource; or,
In a case where the paging configuration information does not include the first indication information, the paging resource is the third paging resource.

In some embodiments, the paging configuration information further includes second indication information, the second indication information indicates whether the spatial information set indicated by the first indication information is applied.

In some embodiments, the paging configuration information further includes second indication information, and in a case where the number of bits corresponding to the second indication information is a first number, if the second indication information is a first value, the paging resource is the first paging resource or the second paging resource; if the second indication information is a second value, the paging resource is the third paging resource; or,

In a case where the number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource.

The first number is different from the second number.

In some embodiments, the first number is 1 and the second number is 2.

In some embodiments, in a case where the second indication information indicates that the spatial information set indicated by the first indication information is applied, the second indication information is the first value or the third value;
When the second indication information indicates that the spatial information set indicated by the first indication information is not applied, the second indication information is the second value, the fourth value, or the fifth value.

In some embodiments, in a case where the first indication information indicates the first spatial information set, if the second indication information is the first value or the third value, the paging resource is the first paging resource; or,
In a case where the first indication information indicates the second spatial information set, if the second indication information is the first value or the fourth value, the paging resource is the second paging resource; if the second indication information is the third value, the paging resource is the first paging resource.

In some embodiments, in a case where the first indication information indicates the first spatial information set or the second spatial information set, if the second indication information is the second value or the fifth value, the paging resource is the third paging resource.

In some embodiments, when the paging configuration information includes the second indication information, the first indication information is carried in specific signaling for a serving cell in which the terminal device is located, and the second indication information is carried in a radio resource control (RRC) release message or specific signaling for the terminal device; or, the first indication information and the second indication information are carried in the RRC release message or the specific signaling for the terminal device;
In a case where the paging configuration information does not include the second indication information, the first indication information is carried in the RRC release message or the specific signaling for the terminal device.

In some embodiments, the paging configuration information further includes third indication information, the third indication information is used to configure a first timer.

In some embodiments, in a case where the first indication information indicates the first spatial information set, the paging resource is the first paging resource when the first timer is running; or, the paging resource is the third paging resource when the first timer is not running or expires.

In some embodiments, in a case where the first indication information indicates the second spatial information set, the paging resource is the second paging resource when the first timer is running; or, the paging resource is the third paging resource when the first timer is not running or expires.

In some embodiments, a configuration of the first timer is associated with information related to mobility of the terminal device.

In some embodiments, the paging configuration information further includes fourth indication information, the fourth indication information is used to configure a spatial information set pattern.

In some embodiments, the spatial information set pattern is associated with one or more of the following:
a radio frame (PF) for the terminal device;
a paging occasion (PO) within the PF for the terminal device; or
a time domain subframe configuration for the terminal device.

In some embodiments, different PFs in one discontinuous reception (DRX) cycle within the spatial information set pattern correspond to different spatial information sets;
different POs in one PF in one DRX cycle within the spatial information set pattern correspond to different spatial information sets;
different subframes in a system frame comprised in the spatial information set pattern correspond to different spatial information sets.

In some embodiments, a configuration of the spatial information set pattern is associated with information related to mobility of the terminal device.

In some embodiments, the paging configuration information is carried in an RRC release message or specific signaling for the terminal device.

In some embodiments, in a case where the first spatial information set is all of the union of the second spatial information set and the third spatial information set, the number of pieces of spatial information in the first spatial information set is greater than the number of pieces of spatial information in the second spatial information set, and/or the number of pieces of spatial information in the first spatial information set is greater than the number of pieces of spatial information in the third spatial information set.

In some embodiments, the number of pieces of spatial information in the first spatial information set is equal to or less than the sum of the number of pieces of spatial information in the second spatial information set and the number of pieces of spatial information in the third spatial information set.

In some embodiments, the method further includes:
the configuration of the first spatial information set is a first number of physical downlink control channel (PDCCH) monitoring occasions configured by the network device for one PO corresponding to the terminal device based on the paging configuration information, the first number is associated with the number of pieces of actually transmitted spatial information included in the first spatial information set;
the configuration of the second spatial information set is a second number of PDCCH monitoring occasions configured by the network device for one PO corresponding to the terminal device based on the paging configuration information, and the second number is associated with the number of pieces of actually transmitted spatial information included in the second spatial information set; or, the configuration of the second spatial information set is a third number of PDCCH monitoring occasions configured by the network device for one PO corresponding to the terminal device based on the paging configuration information, and the third number is associated with the number of pieces of actually transmitted spatial information included in the second spatial information set and the number of pieces of actually transmitted spatial information included in the third spatial information set, respectively.

In some embodiments, the first paging resource, the second paging resource, and the third paging resource satisfy at least one of:
the first paging resource comprises the second paging resource and the third paging resource;
PDCCH monitoring occasions corresponding to the second paging resource do not overlap in the time domain with PDCCH monitoring occasions corresponding to the third paging resource;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain; or
the first paging resource, the second paging resource, and the third paging resource is indicated by being scrambled using different paging radio network temporary identifiers (P-RNTIs)

In some embodiments, the information related to the mobility of the terminal device includes one or more of:
a location of the terminal device;
a speed of the terminal device;
a movement rule of the terminal device;
a movement direction of the terminal device; or
a time stamp corresponding to the location of the terminal device.

In some embodiments, the method further includes an operation that:
capability information reported by the first device to the network device, herein the capability information is a spatial information set that can be supported by the first device, and a configuration of the first timer and a configuration of the spatial information set pattern are determined based on the capability information.

In some embodiments, the method further includes an operation that: when a quality of a link between the terminal device and the network device satisfies a preset quality condition, the terminal device determines a paging resource based on the paging configuration information.

It should be noted that the description of the same operations and the same contents in this embodiment as in other embodiments may be referred to the description in other embodiments, and will not be described again here.

In an embodiment of the present application, referring to FIG. 12, a paging method provided by an embodiment of the present application further includes the following operations.

In Operation 810, a first device reflects or refracts a signal transmitted between a network device and a terminal device.

In Operation 820, the network device broadcasts a third spatial information set.

In Operation 830, the network device transmits paging configuration information to the terminal device.

Herein the paging configuration information indicates the first spatial information set or the second spatial information set.

The second spatial information set is a spatial information set supported by the first device or a spatial information set associated with the first device. The first device is used to forward a beam corresponding to a signal transmitted by the network device to the terminal device, or to forward a beam corresponding to a signal transmitted by the terminal device to the network device. The forwarding includes performing reflection or refraction to change the transmission direction of the beam corresponding to the signal.

In Operation 840, the terminal device determines a paging resource based on the paging configuration information. The paging resource is a paging resource corresponding to the first spatial information set, the second spatial information set, or the third spatial information set.

The first spatial information set is all or part of a union of the second spatial information set and the third spatial information set. The first spatial information set, the second spatial information set and the third spatial information set are not completely the same.

It can be understood that in the embodiments of the present application, when communication between the network device and the terminal device may be performed through the first device, the terminal device receives the paging configuration information used to indicate the first spatial information set or the second spatial information set from the network device, and determines a paging resource based on the paging configuration information. In this way, after determining the paging resource, the terminal device uses the paging resource to monitor a PDCCH scrambled by the P-RNTI on PDCCH monitoring occasions corresponding to the spatial information in the indicated spatial information set. The number of PDCCH monitoring occasions included in the PO is associated with the number of pieces of spatial information in the indicated spatial information set. In this way, after introducing an intelligent surface device, the terminal device can determine that the network device and the terminal device establish a communication link through the intelligent surface device based on the paging configuration information used to indicate the first spatial information set or the second spatial information set transmitted by the network device. Further, the terminal device uses the communication link to enable itself to monitor paging on an appropriate occasion, thereby ensuring the accuracy of paging, reducing the probability of paging false alarm, and reducing the energy consumption of the terminal device while improving the communication transmission quality.

Based on the above embodiment, the operation 840 that the terminal device determines the paging resource according to the indication information included in the paging configuration information, which can be divided into the following four cases:
Case 1: the paging configuration information includes only first indication information, and the terminal device determines the paging resource based on the first indication information included in the paging configuration information;
Case 2: the paging configuration information includes the first indication information and second indication information, and the terminal device determines the paging resource based on the first indication information and the second indication information included in the paging configuration information;
Case 3: the paging configuration information includes the first indication information and third indication information, and the terminal device determines the paging resource based on the first indication information and the third indication information included in the paging configuration information;
Case 4: the paging configuration information includes the first indication information and fourth indication information, and the terminal device determines the paging resource based on the first indication information and the fourth indication information included in the paging configuration information.

### Embodiment 1

The paging configuration information includes only the first indication information, and the terminal device determines the paging resource based on the first indication information included in the paging configuration information.

In the embodiments of the present application, the first indication information may indicate a first SSB set (a first spatial information set), the first indication information may further indicate a second SSB set (a second spatial information set), and the first indication information may further indicate a third SSB set (a third spatial information set). Or, the first indication information may be empty, that is, it does not indicate any spatial information set. Or the paging configuration information may not include the first indication information.

In the embodiments of the present application, the first SSB set corresponds to the first paging resource, the second SSB set corresponds to the second paging resource, the third SSB set corresponds to the third paging resource. The paging resource is the first paging resource, the second paging resource, or the third paging resource.

In a first implementation, when the terminal device (UE) communicates with the network device through the first device (RIS device), the first indication information indicates the first SSB set.

In the embodiments of the present application, the first SSB set includes the SSBs in the third SSB set, that is, the number of SSBs included in the first SSB set is more than the number of SSBs included in the third SSB set. When the SSB set corresponding to one PO of the terminal device is the first SSB set, the number of paging monitoring occasions (PMOs) corresponding to one PO is the same as the number of SSBs included in the first SSB set, or the number of paging monitoring occasions (PMOs) corresponding to one PO is an integer multiple of the number of SSBs included in the first SSB set, and the integer is the number of PDCCH monitoring occasions corresponding to each SSB. Here, the third SSB set is a SSB set broadcasted by the network device. For example, a SSB set configured by a higher layer parameter ssb-PositionsInBurst in SIB1.

In the embodiments of the present application, the first SSB set includes SSBs in the third SSB set and SSBs in the second SSB set.

When both the SSBs in the second SSB set and the SSBs in the third SSB set are different, the number of SSBs in the first SSB set is equal to the sum of the number of SSBs in the third SSB set and the number of SSBs in the second SSB set.

When the second SSB set includes some SSBs as same as that in the third SSB set, the number of SSBs in the first SSB set is smaller than the sum of the number of SSBs in the third SSB set and the number of SSBs in the second SSB set.

In the embodiments of the present application, when the UE communicates with the network device through a RIS device, the first indication information configured by the network device indicates the first SSB set, so that a beam set (second spatial information set) for communication between the UE and the RIS is included in the first SSB set. The UE uses the first paging resource corresponding to the first SSB set to blindly detect the PDCCHs scrambled by the P-RNTI transmitted repeatedly through the SSBs in the first SSB set corresponding to one PO, , to determine a paging message. This solution can enable the UE to monitor the paging message, but increases the number of the blind detections of the UE.

In a second implementation, when the UE communicates with the network device through the RIS device, the first indication information indicates a second SSB set.

In the embodiments of the present application, the second SSB set is a beam set forwarded by the RIS, and the SSBs included in the second SSB set is different from the SSBs included in the third SSB set. When the SSB set corresponding to one PO of the terminal device is the second SSB set, the number of paging monitoring occasions (PMOs) corresponding to one PO is the same as the number of SSBs included in the second SSB set, or the number of paging monitoring occasions (PMOs) corresponding to one PO is an integer multiple of the number of SSBs included in the second SSB set, and the integer is the number of PDCCH monitoring occasions corresponding to each SSB.

In the embodiments of the present application, when the UE communicates with the network device through the RIS device, the first indication information configured by the network device indicates the second SSB set, so that the beam set for communication between the UE and the RIS is included in the second SSB set. The UE uses the second paging resource corresponding to the second SSB set to blindly detect the PDCCHs scrambled by the P-RNTI repeatedly transmitted through the SSBs in the second SSB set corresponding to one PO, to determine the paging message. This solution can enable the UE to monitor the paging message, but at the same time, it is not necessary to increase the number of blind detection times of the UE.

In a third implementation, the first indication information indicates the third SSB set, or the first indication information is empty, or the paging configuration information does not include the first indication information.

In the embodiments of the present application, when the SSB set corresponding to one PO of the terminal device is the third SSB set, the number of paging monitoring occasions (PMOs) corresponding to one PO is the same as the number of SSBs included in the third SSB set, or the number of paging monitoring occasions (PMOs) corresponding to one PO is an integer multiple of the number of SSBs included in the third SSB set, and the integer is the number of PDCCH monitoring occasions corresponding to each SSB.

In the embodiments of the present application, the paging configuration information includes the third SSB set indicated by the first indication information. Alternatively, if information related to the SSB set is not configured in the paging configuration information, the SSB set defaults to the third SSB set. The third SSB set is SSBs included in the parameter ssb-PositionsInBurst in SIB1. At this time, it can be considered that the UE communicates directly with the network device without RIS forwarding. Then, the UE uses the third paging resource corresponding to the third SSB set to monitor the PDCCHs scrambled by the P-RNTI repeatedly transmitted through the SSBs in the third SSB set corresponding to one PO, to determine the paging message.

In the embodiments of the present application, the manner of configuring the first SSB set and the second SSB set through the paging configuration information can be realized in the following manner:
Manner 1: The first SSB set is configured through the paging configuration information. When the UE communicating with the network device through the RIS monitors a paging message, the number of PDCCH monitoring occasions corresponding to one PO is an integer multiple of the number of SSBs in the first SSB set, and the integer is the number of PDCCH monitoring occasions corresponding to each SSB.
Manner 2: The second SSB set is configured through the paging configuration information. The number of PDCCH monitoring occasions corresponding to one PO is an integer multiple of the sum of the number of SSBs in the SSB set broadcasted by the network device and the number of SSBs of the second SSB set, and the integer is the number of PDCCH monitoring occasions corresponding to each SSB.
Manner 3: The second SSB set is configured through the paging configuration information. When the UE communicating with the network device through the RIS monitors the paging message, the number of PDCCH monitoring occasions corresponding to one PO is an integer multiple of the number of SSBs in the second SSB set, and the integer is the number of PDCCH monitoring occasions corresponding to each SSB.

In the embodiments of the present application, the paging configuration information is included in UE-specific higher level signaling, for example, an RRC release message. SSB sets corresponding to different UEs, may be different, so it should be placed in UE-specific signaling.

In the embodiments of the present application, the first paging resource, the second paging resource, and the third paging resource have at least one of the following characteristics:
The first paging resource includes the second paging resource and the third paging resource;
The PDCCH monitoring occasions corresponding to the second paging resource and the third paging resource do not overlap in the time domain;
By being distinguished with the time domain resource, that is, the PDCCH monitoring occasions corresponding to the first paging resource, the second paging resource and the third paging resource do not overlap in the time domain;
By being distinguished with frequency domain resource, that is, the PDCCH monitoring occasions corresponding to the first paging resource, the second paging resource and the third paging resource do not overlap in the frequency domain;
By being distinguished with the P-RNTI, i.e. the first paging resource, the second paging resource, and the third paging resource are indicated by being scrambled using different P-RNTIs.

### Embodiment 2

The paging configuration information includes the first indication information and the second indication information. The terminal device determines the paging resource based on the first indication information and the second indication information included in the paging configuration information.

In the embodiments of the present application, the second indication information may be a state value corresponding to a different number of bits, and the second indication information may also be used to indicate whether or not the SSB set indicated by the first indication information is applied. It should be noted that if the second indication information may also be used to indicate whether the SSB set indicated by the first indication information is applied, the data type of the second indication information may be an enumeration type or a Boolean type.

In the first implementation mode, the second indication information is a state value corresponding to a different number of bits. For example, when the second indication information is 1 bit, state 0 (first value) indicates the first spatial information set or the second spatial information set, and state 1 (second value) indicates the third spatial information set. When the second indication information is 2 bits, the state 00 (first value) indicates the first spatial information set, the state 01 (second value) indicates the second spatial information set, and the state 10 (third value) indicates the third spatial information set.

For the second indication information to be 1 bit, for example, when the first indication information indicates the first SSB set and the second indication information is state 0, the terminal device determines the paging resource as the first paging resource corresponding to the first spatial information set indicated by both the first indication information and the second indication information. When the first indication information indicates the first SSB set and the second indication information is state 1, the terminal device determines the paging resource as the third paging resource corresponding to the third spatial information set indicated by the second indication information.

In yet another example, when the first indication information indicates the second SSB set and the second indication information is state 0, the terminal device determines the paging resource as the second paging resource corresponding to the second spatial information set indicated by both the first indication information and the second indication information. When the first indication information indicates the second SSB set and the second indication information is state 1, the terminal device determines the paging resource as the third paging resource corresponding to the third spatial information set indicated by the second indication information.

For the second indication information to be 2 bits, for example, when the first indication information indicates the second SSB set and the second indication information is the state 00, the terminal device determines the paging resource as the first paging resource corresponding to the first spatial information set indicated by the second indication information. When the first indication information indicates the second SSB set and the second indication information is state 01, the terminal device determines the paging resource as the second paging resource corresponding to the second spatial information set indicated by both the first indication information and the second indication information. When the first indication information indicates the second SSB set and the second indication information is state 10, the terminal device determines the paging resource as the third paging resource corresponding to the third spatial information set indicated by the second indication information.

In a second implementation, the second indication information indicates whether the SSB set indicated by the first indication information is applied.

For example, when the first indication information indicates the first SSB set and the second indication information indicates that the SSB set indicated by the first indication information is applied, the terminal device determines the paging resource as the first paging resource corresponding to the first spatial information set. When the first indication information indicates the first SSB set and the second indication information indicates that the SSB set indicated by the first indication information is not applied, the terminal device determines the paging resource as the third paging resource corresponding to the third spatial information set.

In yet another example, when the first indication information indicates the second SSB set, and the second indication information indicates that the SSB set indicated by the first indication information is applied, the terminal device determines the paging resource as the second paging resource corresponding to the second spatial information set. When the first indication information indicates the second SSB set, and the second indication information indicates that the SSB set indicated by the first indication information is not applied, the terminal device determines the paging resource as the third paging resource corresponding to the third spatial information set.

In the embodiments of the present application, the first indication information and the second indication information may be carried through the same signaling or different signaling, including the following two manners:
Manner 1: The first indication information is carried in the specific signaling for the serving cell where the terminal device is located, and the second indication information is carried in the specific signaling for the UE. For example, the first indication information is carried in SIB1, higher layer parameters ServingCellConfigCommon, PDCCH-configcommon, downlinkConfigCommon, and the second indication information is carried in RRC release signaling, BWP-DownlinkDedicated.

The sample structure is as follows:

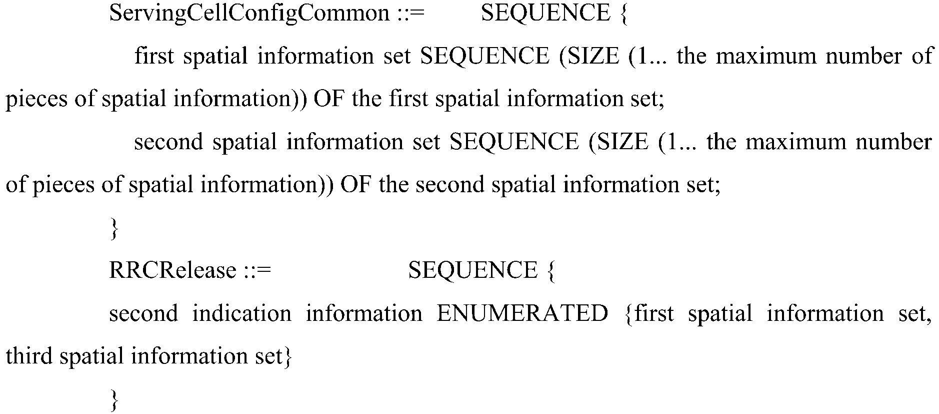

Manner 2: Both the first indication information and the second indication information are carried in UE-specific signaling. Exemplarily, both the first indication information and the second indication information are carried in RRC release signaling.

It can be understood that due to the mobility of the UE, the communication performance of the UE communicating with the network device through the RIS device in the area covered by the RIS device is better, while the communication performance of the UE communicating directly with the network device in other areas is better. Therefore, the way in which the UE monitors the paging message is controlled through the first indication information, so that the UE can monitor the paging message on an appropriate occasion.

### Embodiment 3

The paging configuration information includes the first indication information and the third indication information, and the terminal device determines the paging resource based on the first indication information and the third indication information included in the paging configuration information.

In the embodiments of the present application, the third indication information may be a first timer.

In one implementation mode, if the first timer is in a time range in which the first timer is started (running period), and the first indication information indicates the first SSB set, the terminal device determines that the paging resource is the first paging resource, and the UE monitors the paging message in the first paging resource. If the first timer does not run or expires, the terminal device determines that the paging resource is the third paging resource, and the UE monitors the paging message on the third paging resource corresponding to the third SSB set.

In another implementation, if the first timer is in a time range in which the first timer is started (running period) and the first indication information indicates the second SSB set, the terminal device determines that the paging resource is the second paging resource, and the UE monitors the paging message on the second paging resource. If the first timer does not run or expires, the terminal device determines that the paging resource is the third paging resource, and the UE monitors the paging message on the third paging resource.

It should be noted that, since the mobility of the UE has a certain influence on the UE monitoring the paging message, the configuration of the first timer may be associated with the mobility of the UE. For example, factors such as the location of the UE, the speed of the UE, the movement rule of the UE, the movement direction of the UE, and the timestamp corresponding to the location of the UE.

It can be understood that due to mobility, the terminal device receives a paging message on a paging resource corresponding to the third spatial information set in a certain area, and receives a paging message on a paging resource corresponding to the first spatial information set or the second spatial information set in another area. For example, the location of the terminal device is in the first area, the terminal device receives a paging message on a paging resource corresponding to the third SSB set. The location of the terminal device is in the second area, the terminal device receives a paging message on a paging resource corresponding to the first SSB set or the second SSB set. The time it takes for the terminal device to move from the first area to the second area may be a time range of the first timer.

It will be appreciated that the network device configures the SSB set according to the first timer, which takes into account the influence of UE mobility on UE monitoring the paging message, so that the UE can receive the paging message on an appropriate occasion.

### Embodiment 4

The paging configuration information includes the first indication information and the fourth indication information, and the terminal device determines the paging resource based on the first indication information and the fourth indication information included in the paging configuration information.

In the embodiments of the present application, the fourth indication information may be an SSB set pattern (spatial information set pattern). The SSB set pattern may be associated with a PF for the UE or a PO in the PF. The SSB set pattern may also be associated with a time domain subframe configuration for the UE.

In a first implementation, the SSB set pattern is associated with a PF for the UE or a PO in the PF.

Here, different SSB sets are applied to different PFs for the UE. For example, the number of PFs monitored by the UE in one DRX cycle is two, the SSB set corresponding to the first PF is the second SSB set, and the SSB set corresponding to the second PF is the third SSB set. That is, the respective SSB set in each PF is the same.

Here, different sets of SSBs are applied to different POs within one PF for the UE. For example, the UE monitors the paging message on two POs in one PF, the SSB set corresponding to the first PO is the second SSB set, and the SSB set corresponding to the second PO is the third SSB set.

In a second implementation, the SSB set pattern is associated with the time domain subframe configuration for the UE. For example, one system frame includes 10 subframes, the SSB set corresponding to one or more of the subframes is a second SSB set, and the SSB set corresponding to another part of the subframes is a third SSB set. Alternatively, the SSB set corresponding to a part of the subframes is the first SSB set, the SSB set corresponding to a part of the subframes is the second SSB set, and the SSB set corresponding to the other part of the subframes is the third SSB set. This is because the set of beams supported by the first device may be associated with a time domain subframe configuration, the set of beams supported by different one or more subframes may be different, and by adjusting the SSB set in a semi-static manner, signaling overhead may be reduced.

It should be noted that, since the mobility of the UE has a certain influence on the UE monitoring the paging message, the configuration of the SSB set pattern may be associated with the mobility of the UE, for example, factors such as the location of the UE, the speed of the UE, the movement rule of the UE, the movement direction of the UE, and the timestamp corresponding to the location of the UE. For example, if the UE is at position 1, it can communicate directly with the network device, that is, it is not necessary for the first device to forward a signal, then the paging resource may be a paging resource corresponding to the third spatial information set. If the UE moves to the position 2, because there is an obstacle between the UE and the network device, the UE communicates with the network device through the first device, then the paging resource may be a paging resource corresponding to the first spatial information set or the second spatial information set.

It will be appreciated that the network device takes into account the influence of UE mobility on UE monitoring the paging message, and therefore, the network device configures different SSB sets for SSB set patterns based on UE mobility so that the UE can receive the paging message on an appropriate occasion. Exemplarily, if the location of the UE is in the first area, the SSB set pattern is the third SSB set, if the location of the UE is in the second area, the SSB set pattern is the first SSB set or the second SSB set. The location of the UE is calculated by the UE through the downlink positioning method and reported to the network device, or is calculated by the network device through the uplink positioning method.

In some embodiments, before the network device transmits the paging configuration information to the terminal device, the network device may further receive first information reported by the terminal device and capability information reported by the RIS device. Further, the network device configures the paging configuration information based on the first information and/or the capability information.

In the embodiments of the present application, the capability information that needs to be reported by the RIS device includes: the second SSB set which is a set of beams that can be supported by the RIS device, or a spatial information set or spatial parameter set that can be supported by the RIS device.

Here, the second SSB set may be semi-statically variable or fixed. If the second SSB set is semi-statically variable, the RIS device needs to report a change rule of the second SSB set, for example, the relationship between the SSB set and the subframe configuration in the above-described Embodiment 4.

It should be noted that, the network device may configure the first timer or the SSB set pattern according to the capability information reported by the RIS device.

In the embodiments of the present application, the first information that needs to be reported by the UE includes one or more of the following: a SSB-based measurement result for the serving cell in which the terminal device is located and information related to mobility of the UE.

The measurement result includes a SSB-based channel measurement result for the serving cell obtained by the UE based on the measurement configuration of the network device, a RSRP, and the like. It should be noted that the measurement result can be used as a reference for the network device to configure the paging configuration information.

The information related to the mobility reported by the UE includes one or more of the following factors: a location of the UE, a speed of the UE, a movement rule of the UE, a movement direction of the UE, a timestamp corresponding to the location of the UE, and the like.

It should be noted that, the information related to the mobility may provide a reference for the network device to configure the paging configuration information. For example, according to the location of the UE, the network device may determine whether the UE is located in an area where the RIS provides services, and if the UE is in the area, the network configures a second SSB set for the UE to page the UE.

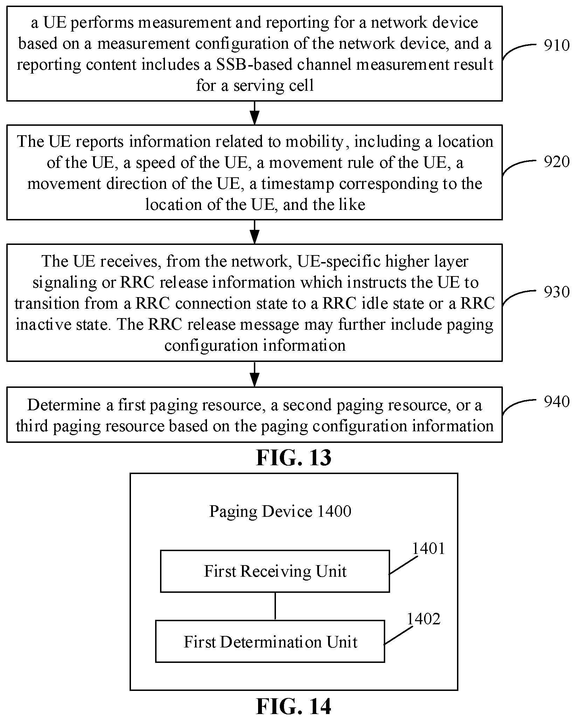

Based on the above embodiment, in a realizable application scenario, an embodiment of the present application provides a paging method, and as shown in FIG. 13, the method includes the following operations:
In Operation 910, a UE performs measurement and reporting for a network device based on a measurement configuration of the network device, and a reporting content includes a SSB-based channel measurement result for a serving cell.

In Operation 920, the UE reports information related to mobility, including a location of the UE, a speed of the UE, a movement rule of the UE, a movement direction of the UE, a timestamp corresponding to the location of the UE, and the like.

In Operation 930, the UE receives, from the network, UE-specific higher layer signaling or RRC release information which instructs the UE to transition from a RRC connection state to a RRC idle state or a RRC inactive state. The RRC release message may further include paging configuration information.

The paging configuration information indicates a first SSB set or a second SSB set.

In Operation 940, a first paging resource, a second paging resource, or a third paging resource is determined according to the paging configuration information.

The first SSB set corresponds to the first paging resource, the second SSB set corresponds to the second paging resource, and the third SSB set corresponds to the third paging resource.

The first SSB set is a union of the second SSB set and the third SSB set, and the first SSB set, the second SSB set, and the third SSB set are not completely same.

The third SSB set is a SSB set broadcasted by the network device, and the second SSB set is a SSB set of the RIS device, which reflects or refracts a signal transmitted between the network device and the UE.

As can be seen from the above, when communication between the network device and the UE may be performed through the RIS device, the UE receives paging configuration information indicating the first spatial information set or the second spatial information set from the network device, and determines a paging resource based on the paging configuration information. In this way, after determining the paging resource, the UE uses the paging resource to monitor the PDCCHs scrambled by the P-RNTI on PDCCH monitoring occasions corresponding to the spatial information in the indicated spatial information set, The number of PDCCH monitoring occasions included in the PO is associated with the number of pieces of spatial information in the indicated spatial information set. In this way, after introducing the intelligent surface device, the UE can determine that the network device and the UE establish a communication link through the intelligent surface device based on the paging configuration information for indicating the first spatial information set or the second spatial information set transmitted by the network device. Further, the UE uses the communication link to enable itself to monitor paging on an appropriate occasion, thereby ensuring the accuracy of paging, reducing the probability of paging false alarm, and reducing the energy consumption of the UE while improving the communication transmission quality.

The preferred embodiments of the present application have been described in detail above with reference to the accompanying drawings. However, the present application is not limited to the specific details in the above embodiments. Within the scope of the technical concept of the present application, a variety of simple modifications can be made to the technical scheme of the present application, and these simple modifications all belong to the protection scope of the present application. For example, each specific technical feature described in the above detailed description can be combined in any suitable manner unless there is no contradiction, and various possible combinations will not be further described in this application in order to avoid unnecessary repetition. As another example, any combination of various embodiments of the present application may be made, and as long as it does not depart from the spirit of the present application, it should also be regarded as the disclosed content of the present application. For another example, on the premise that there is no conflict, each embodiment and/or the technical features in each embodiment described in the present application can be arbitrarily combined with the prior art, and the technical solution obtained after the combination should also fall within the protection scope of the present application.

It should also be understood that in the various method embodiments of the present application, the size of the sequence numbers of the above-described processes does not mean the order of the execution order, and the execution order of each process should be determined by its function and internal logic, and should not constitute any limitation on the implementation process of the embodiments of the present application. Further, in the embodiments of the present application, the terms "downlink", "uplink", and "sidelink" are used to indicate a transmission direction of a signal or data. Herein "downlink" is used to indicate that the transmission direction of the signal or data is a first direction transmitted from a station to a user equipment of a cell, "uplink" is used to indicate that the transmission direction of the signal or data is a second direction transmitted from a user equipment of the cell to a station, and "sidelink" is used to indicate that the transmission direction of the signal or data is a third direction transmitted from a user equipment 1 to a user equipment 2. For example, "downlink signal" means that the transmission direction of the signal is the first direction. In addition, in the embodiments of the present application, the term "and/or" is merely an association relationship describing associated objects, indicating that there may be three kinds of relationships. Specifically, A and/or B may represent three cases in which A is present alone, both A and B are present, or B is present alone. In addition, the character "/" herein generally indicates that the associated objects before and after "/" are in an "or" relationship.

FIG. 14 is a schematic structural diagram of a paging device 1400 provided by an embodiment of the present application, which is applied to a terminal device. As shown in FIG. 14, the paging device 1400 includes a first receiving unit 1401 and a first determination unit 1402.

The first receiving unit 1401 is configured to: in a case where a first device reflects or refracts a signal transmitted between a network device and a terminal device, receive paging configuration information transmitted by the network device, the paging configuration information indicates a first spatial information set or a second spatial information set.

The first determination unit 1402 is configured to determine a paging resource based on the paging configuration information, herein the paging resource is a paging resource corresponding to the first spatial information set, the second spatial information set, or a third spatial information set.

The first spatial information set is all or part of a union of the second spatial information set and a third spatial information set. The third spatial information set is a spatial information set broadcasted by the network device. The second spatial information set is a spatial information set of the first device.

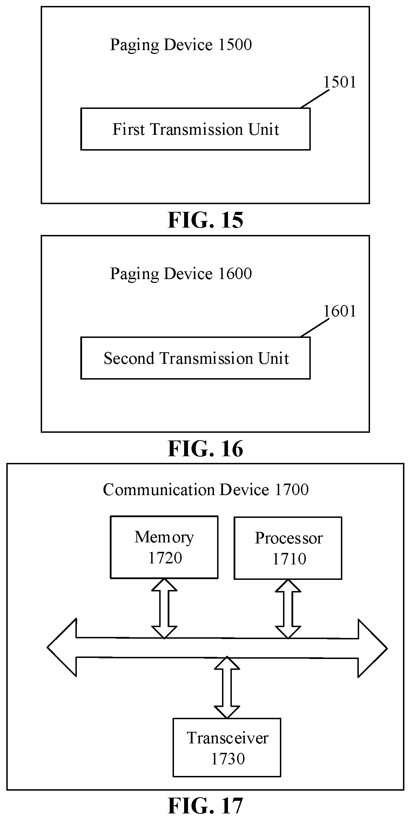

FIG. 15 is a schematic structural diagram of a paging device 1500 provided by an embodiment of the present application, which is applied to a network device. As shown in FIG. 15, the paging device 1500 includes a first transmission unit 1501.

The first transmission unit 1501 is configured to: in a case where a first device reflects or refracts a signal transmitted between a network device and a terminal device, transmit paging configuration information, so that the terminal device determines a paging resource based on the paging configuration information. The paging configuration information indicates a first spatial information set or a second spatial information set, and the paging resource is a paging resource corresponding to the first spatial information set, the second spatial information set, or a third spatial information set.

The first spatial information set is all or part of a union of the second spatial information set and the third spatial information set, the third spatial information set is a spatial information set broadcasted by the network device, and the second spatial information set is a spatial information set of the first device.

FIG. 16 is a schematic structural diagram of a paging device 1600 provided by an embodiment of the present application, which is applied to a first device. As shown in FIG. 16, the paging device 1600 includes a second transmission unit 1601.

The second transmission unit 1601 is configured to: in a case where a first device reflects or refracts a signal transmitted between a network device and a terminal device, transmit a second spatial information set to the terminal device, the second spatial information set is used for the terminal device to determine a paging resource in conjunction with received paging configuration information transmitted by the network device.

The paging configuration information indicates a first spatial information set or a second spatial information set, and the paging resource is a paging resource corresponding to the first spatial information set, the second spatial information set or a third spatial information set;

The first spatial information set is all or part of a union of the second spatial information set and the third spatial information set. The third spatial information set is a spatial information set broadcasted by the network device. The second spatial information set is a spatial information set of the first device.

FIG. 17 is a schematic structural diagram of a communication device 1700 provided by an embodiment of the present application. The communication device may be a terminal device or a network device. The communication device 1700 illustrated in FIG. 17 includes a processor 1710 that can call and execute a computer program from a memory to implement the method in the embodiments of the present application.

Optionally, as shown in FIG. 17, the communication device 1700 may further include a memory 1720. Here, the processor 1710 may call and execute a computer program from the memory 1720 to implement the method in the embodiments of the present application.

The memory 1720 may be a separate device independent of the processor 1710, or may be integrated in the processor 1710.

Optionally, as shown in FIG. 17, the communication device 1700 may further include a transceiver 1730, and the processor 1710 may control the transceiver 1730 to communicate with other devices. Specifically, the processor 1710 may control the transceiver 1730 to transmit information or data to other devices or receive information or data transmitted by other devices.

The transceiver 1730 may include a transmitter and a receiver. The transceiver 1730 may further include antennas, and the number of antennas may be one or more.

Optionally, the communication device 1700 may be a terminal device according to the embodiments of the present application, and the communication device 1700 may realize corresponding processes realized by the terminal device in the methods of the embodiments of the present application, which will not be described again here for simplicity.

Optionally, the communication device 1700 may specifically be a network device according to the embodiments of the present application, and the communication device 1700 may realize corresponding processes realized by the network device in the methods in the embodiments of the present application, which will not be described again here for simplicity.

Optionally, the communication device 1700 may be specifically the first device of the embodiments of the present application, and the communication device 1700 may realize corresponding processes realized by the first device in the methods in the embodiments of the present application, which will not be described again here for simplicity.

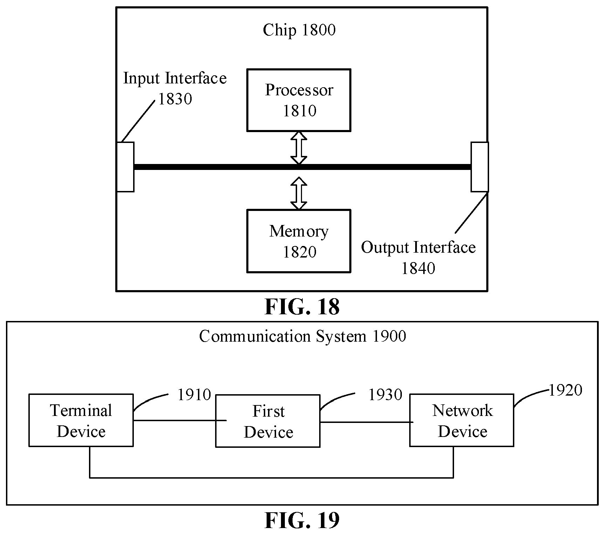

FIG. 18 is a schematic structural diagram of a chip according to an embodiment of the present application. The chip 1800 shown in FIG. 18 includes a processor 1810 that can all and execute a computer program from a memory to implement the methods in the embodiments of the present application.

Optionally, as shown in FIG. 18, the chip 1800 may further include a memory 1820. Here, the processor 1810 may call and execute a computer program from the memory 1820 to implement the methods in the embodiments of the present application.

The memory 1820 may be a separate device independent of the processor 1810, or may be integrated in the processor 1810.

Optionally, the chip 1800 may also include an input interface 1830. Here, the processor 1810 may control the input interface 1830 to communicate with other devices or chips, and specifically, may acquire information or data transmitted by other devices or chips.

Optionally, the chip 1800 may also include an output interface 1840. Here, the processor 1810 may control the output interface 1840 to communicate with other devices or chips, and specifically, may output information or data to other devices or chips.

Optionally, the chip can be applied to the terminal device in the embodiments of the present application, and the chip can realize corresponding processes implemented by the terminal device in the methods of the embodiments of the present application, which will not be described again here for simplicity.

Optionally, the chip can be applied to the network device in the embodiments of the present application, and the chip can realize the corresponding processes implemented by the network device in the methods of the embodiments of the present application, which will not be described again here for simplicity.

Optionally, the chip can be applied to the first device in the embodiments of the present application, and the chip can realize the corresponding processes implemented by the first device in the methods of the embodiments of the present application, which will not be described again here for simplicity.

It should be understood that the chip mentioned in the embodiment of the present application may also be referred to as a system-level chip, a system chip, a chip system, a system-on-chip chip, or the like.

The embodiments of the present application also provide a computer storage medium storing one or more programs, and the one or more programs can be executed by one or more processors to implement the methods in the embodiments of the present application.

FIG. 19 is a schematic block diagram of a communication system 1900 provided by an embodiment of the present application. As shown in FIG. 19, the communication system 1900 includes a terminal device 1910, a network device 1920, and a first device 1930.

The terminal device 1910 may be configured to perform the corresponding functions implemented by the terminal device in the above-described methods, the network device 1920 may be configured to perform the corresponding functions implemented by the network device in the above-described methods, and the first device 1930 may be configured to perform the corresponding functions implemented by the first device in the above-described methods, which will not be described again here for simplicity.

It should be understood that the processor of the embodiments of the present application may be an integrated circuit chip having signal processing capabilities. In the implementation process, the operations of the above-described method embodiments may be completed by integrated logic circuits in hardware or instructions in software in the processor. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present application may be implemented or executed. The general purpose processor may be a microprocessor or the processor may be any conventional processor or the like. The operations of the methods disclosed in connection with the embodiments of the present application may be directly embodied as execution by the hardware decoding processor, or may be executed by combining hardware and software modules in the decoding processor. The software module may be located in a storage medium mature in the art, such as a random access memory, a flash memory, a read-only memory, a programmable read-only memory, or an electrically erasable programmable read-only memory, a register, etc. The storage medium is located in the memory, and the processor reads the information in the memory, and implements the operations of the above method in conjunction with its hardware.

It is understood that the memory in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAMs are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synchlink DRAM (SLDRAM), and a Direct Rambus RAM (DR RAM). It should be noted that the memory of the systems and methods described herein is intended to include, but is not limited to, these and any other suitable type of memories.

It should be understood that the above memory is illustrative but not limiting, for example, the memory in the embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present application is intended to include, but is not limited to, these and any other suitable type of memories.

The embodiments of the present application also provide a computer-readable storage medium for storing a computer program.

Optionally, the computer-readable storage medium can be applied to the network device in the embodiments of the present application, and the computer program causes the computer to execute the corresponding processes implemented by the network device in each method in the embodiments of the present application, and the description thereof will not be repeated here for the sake of brevity.

Optionally, the computer-readable storage medium can be applied to the mobile terminal/terminal device in the embodiments of the present application, and the computer program causes the computer to execute corresponding processes implemented by the mobile terminal/terminal device in each method of the embodiments of the present application, and the description thereof will not be repeated here for the sake of brevity.

Optionally, the computer-readable storage medium can be applied to the first device in the embodiments of the present application, and the computer program causes the computer to execute the corresponding processes implemented by the first device in each method of the embodiments of the present application, and the description thereof will not be repeated here for the sake of brevity.

The embodiments of the present application also provide a computer program product including computer program instructions.

Optionally, the computer program product can be applied to the network device in the embodiments of the present application, and the computer program instructions cause the computer to execute the corresponding processes implemented by the network device in each method of the embodiments of the present application, which will not be described again here for simplicity.

Optionally, the computer program product can be applied to the mobile terminal/terminal device in the embodiments of the present application, and the computer program instructions cause the computer to execute the corresponding processes implemented by the mobile terminal/terminal device in each method of the embodiments of the present application, which will not be described again here for simplicity.

Optionally, the computer program product can be applied to the first device in the embodiments of the present application, and the computer program instructions cause the computer to execute the corresponding processes implemented by the first device in each method of the embodiments of the present application, which will not be described again here for simplicity.

The embodiments of the present application also provide a computer program.

Optionally, the computer program can be applied to the network device in the embodiments of the present application. When the computer program is run on the computer, the computer executes the corresponding processes implemented by the network device in each method of the embodiments of the present application, which will not be described again here for simplicity.

Optionally, the computer program can be applied to the mobile terminal/terminal device in the embodiments of the present application. When the computer program is run on the computer, the computer executes the corresponding processes implemented by the mobile terminal/terminal device in each method of the embodiments of the present application, which will not be described again here for simplicity.

Optionally, the computer program can be applied to the first device in the embodiments of the present application. When the computer program is run on the computer, the computer executes the corresponding processes implemented by the first device in each method of the embodiments of the present application, which will not be described again here for simplicity.

Those of ordinary skill in the art will recognize that the elements and algorithm steps of the various examples described in connection with the embodiments disclosed herein can be implemented in electronic hardware, or a combination of computer software and electronic hardware. Whether these functions are performed in hardware or software depends on the specific application and design constraints of the technical solution. The skilled artisan may implement the described functionality using different methods for each particular application, but such implementation should not be considered beyond the scope of the present application.

Those skilled in the art can clearly understand that for convenience and simplicity of the description, the specific working processes of the above-described systems, devices, and units can be referred to the corresponding processes in the above-described method embodiments, and will not be described again here.

In the several embodiments provided herein, it should be understood that the disclosed systems, apparatuses, and methods may be implemented in other ways. For example, the device embodiments described above are merely illustrative. For example, the division of the units is merely a logical function division, and there may be other division methods in actual implementation. For example, multiple units or components may be combined or integrated into another system, or some features may be ignored or not implemented. Alternatively, the coupling or direct coupling or communication connection with each other shown or discussed may be through some interface, indirect coupling or communicatively connection between devices or units may be in electrical, mechanical or other form.

The units described as separate components may or may not be physically separated, and the components shown as units may or may not be physical units, i.e. may be located in one place, or may be distributed over multiple network units. Some or all of the units may be selected according to actual needs to achieve the purpose of the solution of the present embodiment.

In addition, each functional unit in each embodiment of the present application may be integrated in one processing unit, each unit may physically exist alone, or two or more units may be integrated in one unit.

The functions, if implemented in the form of software functional units and sold or used as stand-alone products, may be stored in a computer readable storage medium. Based on such an understanding, the technical solution of the present application may be embodied in the form of a software product in essence or a part that contributes to the prior art or a part of the technical solution. The software product is stored in a storage medium and includes several instructions for causing a computer device (which may be a personal computer, a server, or a network device, etc.) to perform all or part of the operations of the methods described in various embodiments of the present application. The storage medium includes various media capable of storing program code, such as a USB flash drive, a mobile hard disk, a Read-Only Memory (ROM), a Random Access Memory (RAM), a magnetic disk or an optical disk.

The above are only specific embodiments of the present application, but the protection scope of the present application is not limited thereto. Any changes or substitutions which can be easily thought by a person familiar with the technical field within the technical scope disclosed in the present application should be covered by the protection scope of the present application. Therefore, the protection scope of the present application should be determined by the protection scope of the claims.

## Claims

1. A method of paging, comprising:
in a case where a first device reflects or refracts a signal transmitted between a network device and a terminal device, receiving, by the terminal device, paging configuration information transmitted by the network device, the paging configuration information indicating a first spatial information set or a second spatial information set;
determining, by the terminal device, a paging resource based on the paging configuration information, the paging resource being a paging resource corresponding to the first spatial information set, the second spatial information set, or a third spatial information set;
wherein the first spatial information set is all or part of a union of the second spatial information set and the third spatial information set, the third spatial information set is a spatial information set broadcasted by the network device, and the second spatial information set is a spatial information set for the first device.

2. The method of claim 1, wherein,
the first spatial information set corresponds to a first paging resource;
the second spatial information set corresponds to a second paging resource;
the third spatial information set corresponds to a third paging resource.

3. The method of claim 2, wherein the paging configuration information comprises first indication information, the first indication information indicates the first spatial information set or the second spatial information set, and the paging resource is the first paging resource or the second paging resource.

4. The method of claim 3, wherein in a case where the first indication information indicates the first spatial information set, the paging resource is the first paging resource; or,
in a case where the first indication information indicates the second spatial information set, the paging resource is the second paging resource.

5. The method of claim 2, wherein the paging configuration information comprises first indication information, the first indication information indicates the third spatial information set; in a case where the first indication information indicates the third spatial information set, the paging resource is the third paging resource; or,
in a case where the paging configuration information does not comprise the first indication information, the paging resource is the third paging resource.

6. The method of claim 3, wherein the paging configuration information further comprises second indication information, the second indication information indicates whether the spatial information set indicated by the first indication information is applied.

7. The method of any one of claims 3, 4, and 6, wherein the paging configuration information further comprises second indication information, and in a case where a number of bits corresponding to the second indication information is a first number, if the second indication information is a first value, the paging resource is the first paging resource or the second paging resource; if the second indication information is a second value, the paging resource is the third paging resource; or,
in a case where a number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource; wherein the first number is different from the second number.

8. The method of claim 7, wherein the first number is 1 and the second number is 2.

9. The method of claim 7 or 8, wherein in a case where the second indication information indicates that the spatial information set indicated by the first indication information is applied, the second indication information is the first value or the third value;
in a case where the second indication information indicates that the spatial information set indicated by the first indication information is not applied, the second indication information is the second value, the fourth value, or the fifth value.

10. The method of any one of claims 7 to 9, wherein in a case where the first indication information indicates the first spatial information set, if the second indication information is the first value or the third value, the paging resource is the first paging resource; or,
in a case where the first indication information indicates the second spatial information set, if the second indication information is the first value or the fourth value, the paging resource is the second paging resource; if the second indication information is the third value, the paging resource is the first paging resource.

11. The method of claim 10, wherein in a case where the first indication information indicates the first spatial information set or the second spatial information set, if the second indication information is the second value or the fifth value, the paging resource is the third paging resource.

12. The method of any one of claims 6 to 11, wherein in a case where the paging configuration information comprises the second indication information, the first indication information is carried in specific signaling for a serving cell in which the terminal device is located, and the second indication information is carried in a radio resource control (RRC) release message or specific signaling for the terminal device; or, the first indication information and the second indication information are carried in the RRC release message or the specific signaling for the terminal device;
in a case where the paging configuration information does not comprise the second indication information, the first indication information is carried in the RRC release message or the specific signaling for the terminal device.

13. The method of claim 3, wherein the paging configuration information further comprises third indication information, the third indication information is used to configure a first timer.

14. The method of claim 13, wherein in a case where the first indication information indicates the first spatial information set, the paging resource is the first paging resource when the first timer is running; or, the paging resource is the third paging resource when the first timer is not running or expires.

15. The method of claim 13, wherein in a case where the first indication information indicates the second spatial information set, the paging resource is the second paging resource when the first timer is running; or, the paging resource is the third paging resource when the first timer is not running or expires.

16. The method of any one of claims 13 to 15, wherein a configuration of the first timer is associated with information related to mobility of the terminal device.

17. The method of claim 3, wherein the paging configuration information further comprises fourth indication information, the fourth indication information is used to configure a spatial information set pattern.

18. The method of claim 17, wherein the spatial information set pattern is associated with one or more of:
a radio frame (PF) for the terminal device;
a paging occasion (PO) within the PF for the terminal device; or
a time domain subframe configuration for the terminal device.

19. The method of claim 18, wherein different PFs in one discontinuous reception (DRX) period within the spatial information set pattern correspond to different spatial information sets;
different POs in one PF in one DRX cycle within the spatial information set pattern correspond to different spatial information sets;
different subframes in a system frame comprised in the spatial information set pattern correspond to different spatial information sets.

20. The method of any one of claims 17 to 19, wherein a configuration of the spatial information set pattern is associated with information related to mobility of the terminal device.

21. The method of any one of claims 1 to 11, 13 to 20, wherein the paging configuration information is carried in a radio resource control (RRC) release message or specific signaling for the terminal device.

22. The method of any one of claims 1 to 21, wherein, in a case where the first spatial information set is all of the union of the second spatial information set and the third spatial information set, a number of pieces of spatial information in the first spatial information set is greater than a number of pieces of spatial information in the second spatial information set, and/or,
the number of pieces of spatial information in the first spatial information set is greater than the number of pieces of spatial information in the third spatial information set.

23. The method of any one of claims 1 to 21, wherein a number of pieces of spatial information in the first spatial information set is equal to or less than a sum of a number of pieces of spatial information in the second spatial information set and a number of pieces of spatial information in the third spatial information set.

24. The method of any one of claims 1 to 23, further comprising:
a configuration of the first spatial information set is a first number of physical downlink control channel (PDCCH) monitoring occasions configured by the network device for one paging occasion (PO) corresponding to the terminal device based on the paging configuration information, and the first number is associated with a number of pieces of actually transmitted spatial information comprised in the first spatial information set;
a configuration of the second spatial information set is a second number of PDCCH monitoring occasions configured by the network device for one PO corresponding to the terminal device based on the paging configuration information, and the second number is associated with a number of pieces of actually transmitted spatial information comprised in the second spatial information set; or, the configuration of the second spatial information set is a third number of PDCCH monitoring occasions configured by the network device for one PO corresponding to the terminal device based on the paging configuration information, and the third number is associated with the number of pieces of actually transmitted spatial information comprised in the second spatial information set and the number of pieces of actually transmitted spatial information comprised in the third spatial information set, respectively.

25. The method of any one of claims 2-24, wherein the first paging resource, the second paging resource, and the third paging resource satisfy at least one of:
the first paging resource comprises the second paging resource and the third paging resource;
PDCCH monitoring occasions corresponding to the second paging resource do not overlap in the time domain with PDCCH monitoring occasions corresponding to the third paging resource;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain; or
the first paging resource, the second paging resource, and the third paging resource are indicated by being scrambled using different paging radio network temporary identifiers (P-RNTIs).

26. The method of any one of claims 1 to 25, further comprising:
reporting, by the terminal device, first information to the network device, wherein the first information comprises one or more of the following:
information related to mobility of the terminal device; or
a measurement result of a serving cell in which the terminal device is located obtained based on measurement configuration information transmitted by the network device;
and wherein the paging configuration information is determined based on the first information.

27. The method of any one of claims 16, 20, and 26, wherein the information related to the mobility of the terminal device comprises one or more of:
a location of the terminal device;
a speed of the terminal device;
a movement rule of the terminal device;
a movement direction of the terminal device; or
a time stamp corresponding to the location of the terminal device.

28. The method of any one of claims 1 to 27, further comprising:
when a quality of a link between the terminal device and the network device satisfies a preset quality condition, determining by the terminal device, the paging resource based on the paging configuration information.

29. A method of paging, comprising:
in a case where a first device reflects or refracts a signal transmitted between a network device and a terminal device, transmitting, by the network device, paging configuration information to the terminal device so that the terminal device determines a paging resource based on the paging configuration information, the paging configuration information indicating a first spatial information set or a second spatial information set, and the paging resource being a paging resource corresponding to the first spatial information set, the second spatial information set, or a third spatial information set;
wherein the first spatial information set is all or part of a union of the second spatial information set and the third spatial information set, the third spatial information set is a spatial information set broadcasted by the network device, and the second spatial information set is a spatial information set of the first device .

30. The method of claim 29, wherein,
the first spatial information set corresponds to a first paging resource;
the second spatial information set corresponds to a second paging resource;
the third spatial information set corresponds to a third paging resource.

31. The method of claim 30, wherein the paging configuration information comprises first indication information, the first indication information indicates the first spatial information set or the second spatial information set, and the paging resource is the first paging resource or the second paging resource.

32. The method of claim 31, wherein in a case where the first indication information indicates the first spatial information set, the paging resource is the first paging resource; or,
in a case where the first indication information indicates the second spatial information set, the paging resource is the second paging resource.

33. The method of claim 30, wherein the paging configuration information comprises first indication information, the first indication information indicates the third spatial information set; in a case where the first indication information indicates the third spatial information set, the paging resource is the third paging resource; or,
in a case where the paging configuration information does not comprise the first indication information, the paging resource is the third paging resource.

34. The method of claim 31, wherein the paging configuration information further comprises second indication information, the second indication information indicates whether the spatial information set indicated by the first indication information is applied.

35. The method of any one of claims 31, 32, and 34, wherein the paging configuration information further comprises second indication information, and in a case where a number of bits corresponding to the first indication information is a first number, if the second indication information is a first value, the paging resource is the first paging resource; or,
in a case where a number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource;
wherein the first number is different from the second number.

36. The method of claim 35, wherein the first number is 1 and the second number is 2.

37. The method of claim 35 or 36, wherein in a case where the second indication information indicates that the spatial information set indicated by the first indication information is applied, the second indication information is the first value or the third value;
in a case where the second indication information indicates that the spatial information set indicated by the first indication information is not applied, the second indication information is the second value, the fourth value, or the fifth value

38. The method of any one of claims 35 to 37, wherein in a case where the first indication information indicates the first spatial information set, if the second indication information is the first value or the third value, the paging resource is the first paging resource; or,
in a case where the first indication information indicates the second spatial information set, if the second indication information is the first value or the fourth value, the paging resource is the second paging resource; if the second indication information is the third value, the paging resource is the first paging resource.

39. The method of claim 38, wherein in a case where the first indication information indicates the first spatial information set or the second spatial information set, if the second indication information is the second value or the fifth value, the paging resource is the third paging resource.

40. The method of any one of claims 34 to 39, wherein in a case where the paging configuration information comprises the second indication information, the first indication information is carried in specific signaling for a serving cell in which the terminal device is located, and the second indication information is carried in a radio resource control (RRC) release message or specific signaling for the terminal device; or, the first indication information and the second indication information are carried in the RRC release message or the specific signaling for the terminal device;
in a case where the paging configuration information does not comprise the second indication information, the first indication information is carried in the RRC release message or the specific signaling for the terminal device.

41. The method of claim 31, wherein the paging configuration information further comprises third indication information, the third indication information is used to configure a first timer.

42. The method of claim 41, wherein in a case where the first indication information indicates the first spatial information set, the paging resource is the first paging resource when the first timer is running; or, the paging resource is the third paging resource when the first timer is not running or expires.

43. The method of claim 41, wherein in a case where the first indication information indicates the second spatial information set, the paging resource is the second paging resource when the first timer is running; or, the paging resource is the third paging resource when the first timer is not running or expires.

44. The method of any one of claims 41 to 43, wherein a configuration of the first timer is associated with information related to mobility of the terminal device.

45. The method of claim 31, wherein the paging configuration information further comprises fourth indication information, the fourth indication information is used to configure a spatial information set pattern.

46. The method of claim 45, wherein the spatial information set pattern is associated with one or more of:
a radio frame (PF) for the terminal device;
a paging occasion (PO) within the PF for the terminal device; or
a time domain subframe configuration for the terminal device

47. The method of claim 46, wherein different PFs in one discontinuous reception (DRX) period within the spatial information set pattern correspond to different spatial information sets;
different POs in one PF in one DRX cycle within the spatial information set pattern correspond to different spatial information sets;
different subframes in a system frame comprised in the spatial information set pattern correspond to different spatial information sets.

48. The method of any one of claims 45 to 47, wherein a configuration of the spatial information set pattern is associated with information related to mobility of the terminal device.

49. The method of any one of claims 29 to 39, 41 to 48, wherein the paging configuration information is carried in a radio resource control (RRC) release message or specific signaling for the terminal device.

50. The method of any one of claims 29 to 49, wherein, in a case where the first spatial information set is all of the union of the second spatial information set and the third spatial information set, a number of pieces of spatial information in the first spatial information set is greater than a number of pieces of spatial information in the second spatial information set, and/or,
the number of pieces of spatial information in the first spatial information set is greater than the number of pieces of spatial information in the third spatial information set.

51. The method of any one of claims 29-49, wherein a number of pieces of spatial information in the first spatial information set is equal to or less than a sum of a number of pieces of spatial information in the second spatial information set and a number of pieces of spatial information in the third spatial information set.

52. The method of any one of claims 29 to 51, further comprising:
a configuration of the first spatial information set is a first number of physical downlink control channel (PDCCH) monitoring occasions configured by the network device for one paging occasion (PO) corresponding to the terminal device based on the paging configuration information, and the first number is associated with a number of pieces of actually transmitted spatial information comprised in the first spatial information set;
a configuration of the second spatial information set is a second number of PDCCH monitoring occasions configured by the network device for one PO corresponding to the terminal device based on the paging configuration information, and the second number is associated with a number of pieces of actually transmitted spatial information comprised in the second spatial information set; or, the configuration of the second spatial information set is a third number of PDCCH monitoring occasions configured by the network device for one PO corresponding to the terminal device based on the paging configuration information, and the third number is associated with the number of pieces of actually transmitted spatial information comprised in the second spatial information set and the number of pieces of actually transmitted spatial information comprised in the third spatial information set, respectively.

53. The method of any one of claims 30 to 52, wherein the first paging resource, the second paging resource, and the third paging resource satisfy at least one of:
the first paging resource comprises the second paging resource and the third paging resource;
PDCCH monitoring occasions corresponding to the second paging resource do not overlap in the time domain with PDCCH monitoring occasions corresponding to the third paging resource;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain; or
the first paging resource, the second paging resource, and the third paging resource are indicated by being scrambled using different paging radio network temporary identifiers (P-RNTIs).

54. The method of any one of claims 29 to 53, further comprising:
receiving, by the network device, first information reported by the terminal device, wherein the first information comprises one or more of the following:
information related to mobility of the terminal device; or
a measurement result of a serving cell in which the terminal device is located obtained based on measurement configuration information transmitted by the network device;
and wherein the paging configuration information is determined based on the first information.

55. The method of any one of claims 44, 48, and 54, wherein the information related to the mobility of the terminal device comprises one or more of:
a location of the terminal device;
a speed of the terminal device;
a movement rule of the terminal device;
a movement direction of the terminal device; or
a time stamp corresponding to the location of the terminal device.

56. The method of any one of claims 41 to 44 or 45 to 47, further comprising:
receiving, by the network device, capability information reported by the first device, wherein the capability information is a spatial information set that can be supported by the first device, and a configuration of the first timer and a configuration of the spatial information set pattern are determined based on the capability information.

57. The method of any one of claims 29 to 56, further comprising:
when a quality of a link between the terminal device and the network device satisfies a preset quality condition, the terminal device determines the paging resource based on the paging configuration information.

58. A method of paging, comprising:
in a case where a first device reflects or refracts a signal transmitted between a network device and a terminal device, transmitting, by the first device, a second spatial information set to the terminal device, the second spatial information set being used for the terminal device to determine a paging resource in conjunction with received paging configuration information transmitted by the network device;
wherein the paging configuration information indicates a first spatial information set or the second spatial information set, and the paging resource is a paging resource corresponding to the first spatial information set, the second spatial information set or a third spatial information set;
wherein the first spatial information set is all or part of a union of the second spatial information set and the third spatial information set, the third spatial information set is a spatial information set broadcasted by the network device, and the second spatial information set is a spatial information set of the first device.

59. The method of claim 58, wherein,
the first spatial information set corresponds to a first paging resource;
the second spatial information set corresponds to a second paging resource;
the third spatial information set corresponds to a third paging resource.

60. The method of claim 59, wherein the paging configuration information comprises first indication information, the first indication information indicates the first spatial information set or the second spatial information set, and the paging resource is the first paging resource or the second paging resource.

61. The method of claim 60, wherein in a case where the first indication information indicates the first spatial information set, the paging resource is the first paging resource; or,
in a case where the first indication information indicates the second spatial information set, the paging resource is the second paging resource.

62. The method of claim 59, wherein the paging configuration information comprises first indication information, the first indication information indicates the third spatial information set; in a case where the first indication information indicates the third spatial information set, the paging resource is the third paging resource; or,
in a case where the paging configuration information does not comprise the first indication information, the paging resource is the third paging resource.

63. The method of claim 60, wherein the paging configuration information further comprises second indication information, the second indication information indicates whether the spatial information set indicated by the first indication information is applied.

64. The method of any one of claims 60, 61, and 62, the paging configuration information further comprises second indication information, and in a case where a number of bits corresponding to the second indication information is a first number, if the second indication information is a first value, the paging resource is the first paging resource or the second paging resource; if the second indication information is a second value, the paging resource is the third paging resource; or,
in a case where a number of bits corresponding to the second indication information is a second number, if the second indication information is a third value, the paging resource is the first paging resource; if the second indication information is a fourth value, the paging resource is the second paging resource; if the second indication information is a fifth value, the paging resource is the third paging resource;
wherein the first number is different from the second number.

65. The method of claim 64, wherein the first number is 1 and the second number is 2.

66. The method of claim 64 or 65, wherein in a case where the second indication information indicates that the spatial information set indicated by the first indication information is applied, the second indication information is the first value or the third value;
in a case where the second indication information indicates that the spatial information set indicated by the first indication information is not applied, the second indication information is the second value, the fourth value, or the fifth value.

67. The method of any one of claims 64 to 66, wherein in a case where the first indication information indicates the first spatial information set, if the second indication information is the first value or the third value, the paging resource is the first paging resource; or,
in a case where the first indication information indicates the second spatial information set, if the second indication information is the first value or the fourth value, the paging resource is the second paging resource; if the second indication information is the third value, the paging resource is the first paging resource.

68. The method of claim 67, wherein in a case where the first indication information indicates the first spatial information set or the second spatial information set, if the second indication information is the second value or the fifth value, the paging resource is the third paging resource.

69. The method of any one of claims 63 to 68, wherein in a case where the paging configuration information comprises the second indication information, the first indication information is carried in specific signaling for a serving cell in which the terminal device is located, and the second indication information is carried in a radio resource control (RRC) release message or specific signaling for the terminal device; or, the first indication information and the second indication information are carried in the RRC release message or the specific signaling for the terminal device;
in a case where the paging configuration information does not comprise the second indication information, the first indication information is carried in the RRC release message or the specific signaling for the terminal device.

70. The method of claim 60, wherein the paging configuration information further comprises third indication information, the third indication information is used to configure a first timer.

71. The method of claim 70, wherein in a case where the first indication information indicates the first spatial information set, the paging resource is the first paging resource when the first timer is running; or, the paging resource is the third paging resource when the first timer is not running or expires.

72. The method of claim 70, wherein in a case where the first indication information indicates the second spatial information set, the paging resource is the second paging resource when the first timer is running; or, the paging resource is the third paging resource when the first timer is not running or expires.

73. The method of any one of claims 68 to 70, wherein a configuration of the first timer is associated with information related to mobility of the terminal device.

74. The method of claim 60, wherein the paging configuration information further comprises fourth indication information, the fourth indication information is used to configure a spatial information set pattern.

75. The method of claim 74, wherein the spatial information set pattern is associated with one or more of:
a radio frame (PF) for the terminal device;
a paging occasion (PO) within the PF for the terminal device; or
a time domain subframe configuration for the terminal device.

76. The method of claim 75, wherein different PFs in one discontinuous reception (DRX) period within the spatial information set pattern correspond to different spatial information sets;
different POs in one PF in one DRX cycle within the spatial information set pattern correspond to different spatial information sets;
different subframes in a system frame comprised in the spatial information set pattern correspond to different spatial information sets.

77. The method of any one of claims 74 to 76, wherein a configuration of the spatial information set pattern is associated with information related to mobility of the terminal device.

78. The method of any one of claims 58 to 68, 70 to 77, wherein the paging configuration information is carried in a radio resource control (RRC) release message or specific signaling for the terminal device.

79. The method of any one of claims 58 to 78, wherein, in a case where the first spatial information set is all of the union of the second spatial information set and the third spatial information set, a number of pieces of spatial information in the first spatial information set is greater than a number of pieces of spatial information in the second spatial information set, and/or,
the number of pieces of spatial information in the first spatial information set is greater than the number of pieces of spatial information in the third spatial information set.

80. The method of any one of claims 58-78, wherein a number of pieces of spatial information in the first spatial information set is equal to or less than a sum of a number of pieces of spatial information in the second spatial information set and a number of pieces of spatial information in the third spatial information set.

81. The method of any one of claims 58 to 80, further comprising:
a configuration of the first spatial information set is a first number of physical downlink control channel (PDCCH) monitoring occasions configured by the network device for one paging occasion (PO) corresponding to the terminal device based on the paging configuration information, and the first number is associated with a number of pieces of actually transmitted spatial information comprised in the first spatial information set;
a configuration of the second spatial information set is a second number of PDCCH monitoring occasions configured by the network device for one PO corresponding to the terminal device based on the paging configuration information, and the second number is associated with a number of pieces of actually transmitted spatial information comprised in the second spatial information set; or, the configuration of the second spatial information set is a third number of PDCCH monitoring occasions configured by the network device for one PO corresponding to the terminal device based on the paging configuration information, and the third number is associated with the number of pieces of actually transmitted spatial information comprised in the second spatial information set and the number of pieces of actually transmitted spatial information comprised in the third spatial information set, respectively.

82. The method of any one of claims 59-81, wherein the first paging resource, the second paging resource, and the third paging resource satisfy at least one of:
the first paging resource comprises the second paging resource and the third paging resource;
PDCCH monitoring occasions corresponding to the second paging resource do not overlap in the time domain with PDCCH monitoring occasions corresponding to the third paging resource;
PDCCH monitoring occasions corresponding to the first paging resource, PDCCH monitoring occasions corresponding to the second paging resource and PDCCH monitoring occasions corresponding to the third paging resource do not overlap in the time domain;
PDCCH monitoring occasions corresponding to the first paging resource, PDCCH monitoring occasions corresponding to the second paging resource and PDCCH monitoring occasions corresponding to the third paging resource do not overlap in the frequency domain; or
the first paging resource, the second paging resource, and the third paging resource are indicated by being scrambled using different paging radio network temporary identifiers (P-RNTIs)..

83. The method of claim 73 or 77, wherein the information related to the mobility of the terminal device comprises one or more of:
a location of the terminal device;
a speed of the terminal device;
a movement rule of the terminal device;
a movement direction of the terminal device; or
a time stamp corresponding to the location of the terminal device.

84. The method of any one of claims 70 to 73 or 74 to 76, further comprising:
reporting, by the first device, capability information to the network device, wherein the capability information is a spatial information set that can be supported by the first device, and a configuration of the first timer and a configuration of the spatial information set pattern are determined based on the capability information.

85. The method of any one of claims 58 to 84, further comprising:
when a quality of a link between the terminal device and the network device satisfies a preset quality condition, the terminal device determines the paging resource based on the paging configuration information.

86. An apparatus of paging, applied to a terminal device, the apparatus comprising:
a first receiving unit, configured to receive paging configuration information transmitted by a network device in a case where a first device reflects or refracts a signal transmitted between the network device and a terminal device, the paging configuration information being used to indicate a first spatial information set or a second spatial information set;
a first determination unit, configured to determine a paging resource based on the paging configuration information, the paging resource being a paging resource corresponding to the first spatial information set, the second spatial information set, or a third spatial information set;
wherein the first spatial information set is all or part of a union of the second spatial information set and the third spatial information set, the third spatial information set is a spatial information set broadcasted by the network device, and the second spatial information set is a spatial information set of the first device .

87. An apparatus of paging, applied to a network device, the apparatus comprising:
a first transmission unit, configured to transmit paging configuration information in a case where a first device reflects or refracts a signal transmitted between a network device and a terminal device, so that the terminal device determines a paging resource based on the paging configuration information; the paging configuration information being used to indicate a first spatial information set or a second spatial information set, and the paging resource being a paging resource corresponding to the first spatial information set, the second spatial information set, or a third spatial information set;
wherein the first spatial information set is all or part of a union of the second spatial information set and the third spatial information set, the third spatial information set is a spatial information set broadcasted by the network device, and the second spatial information set is a spatial information set of the first device .

88. An apparatus of paging, applied to a first device, the apparatus comprising:
a second transmission unit configured to transmit a second spatial information set in a case where the first device reflects or refracts a signal transmitted between the network device and the terminal device, the second spatial information set being used for the terminal device to determine a paging resource in conjunction with received paging configuration information transmitted by the network device;
wherein the paging configuration information is used to indicate a first spatial information set or a second spatial information set, and the paging resource is a paging resource corresponding to the first spatial information set, the second spatial information set or a third spatial information set;
wherein the first spatial information set is all or part of a union of the second spatial information set and the third spatial information set, the third spatial information set is a spatial information set broadcasted by the network device, and the second spatial information set is a spatial information set of the first device .

89. A communication device, comprising:
a memory for storing a computer program;
a processor connected to the memory and configured to invoke and execute the computer program from the memory to perform the method of any one of claims 1 to 28, or to perform the method of any one of claims 29 to 57; or to perform the method of any one of claims 58 to 85.

90. A chip comprising: a processor, the processor is configured to invoke and execute a computer program from a memory such that a device on which the chip is mounted performs the method of any one of claims 1 to 28, or performs the method of any one of claims 29 to 57, or performs the method of any one of claims 58 to 85.

91. A computer-readable storage medium for storing a computer program that, when executed by a processor, implements the method of any one of claims 1 to 28, or, when executed by a processor, implements the method of any one of claims 29 to 57, or, when executed by a processor, implements the method of any one of claims 58 to 85.

92. A computer program product comprising computer program instructions that, when executed by a processor, implement the method of any one of claims 1 to 28, or, when executed by a processor, implement the method of any one of claims 29 to 57, or, when executed by a processor, implement the method of any one of claims 58 to 85.
